(19) Europäisches Patentamt
European Patent Office
Office européen des brevets

(11) **EP 4 787 854 A1**

(12) **EUROPEAN PATENT APPLICATION**
published in accordance with Art. 153(4) EPC

(43) Date of publication:
**05.08.2026 Bulletin 2026/32**

(21) Application number: **23953814.3**

(22) Date of filing: **28.09.2023**

(51) International Patent Classification (IPC):
***H04N 19/50*** (2014.01)

(52) Cooperative Patent Classification (CPC):
**H04N 19/50**

(86) International application number:
**PCT/CN2023/122981**

(87) International publication number:
**WO 2025/065670 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **WANG, Fan
Dongguan, Guangdong 523860 (CN)**

(74) Representative: **Mewburn Ellis LLP
Aurora Building
Counterslip
Bristol BS1 6BX (GB)**

(54) **ENCODING METHOD, DECODING METHOD, CODE STREAM, ENCODER, DECODER, AND STORAGE MEDIUM**

(57)   The present application discloses an encoding method, a decoding method, a code stream, an encoder, a decoder, and a storage medium. The method comprises: determining mode parameters of a chroma component of a current block; when the mode parameters satisfy a first condition, determining a first transform kernel of the chroma component of the current block; and determining a transform coefficient of the chroma component of the current block, and performing inverse transform on the transform coefficient of the chroma component of the current block on the basis of the first transform kernel, to determine a residual block of the chroma component of the current block. Therefore, the compression efficiency can be improved.

| A mode parameter of a chroma component of a current block is determined | S3901 |

↓

| In a case where the mode parameter satisfies a first condition, a first transform kernel of the chroma component of the current block is determined | S3902 |

↓

| Transform coefficients of the chroma component of the current block is determined, and inverse transform is performed on the transform coefficients of the chroma component of the current block according to the first transform kernel to determine a residual block of the chroma component of the current block | S3903 |

FIG. 39

EP 4 787 854 A1

**Description**

**TECHNICAL FIELD**

Embodiments of the present application relate to the field of video encoding and decoding technology, and in particular, to an encoding method, a decoding method, a bitstream, an encoder, a decoder, and a storage medium.

**BACKGROUND**

With increasing demands for video display quality, high-resolution videos such as high-definition videos and ultra-high-definition videos have emerged. However, the high-resolution videos typically contain more information, and thus require greater bandwidth. To reduce bandwidth requirements, video encoding standards involving video compression have been introduced.

The video encoding standards involving video compression.

In the video encoding standards, partitioning technologies for a current block include single tree partitioning and dual tree partitioning. In a case where the current block uses the single tree partitioning, a luma block may use a transform mode such as multiple transform selection (MTS), low frequency non-separable transform (LFNST), or non-separable primary transform (NSPT), while a chroma block uses the default discrete cosine transform (DCT), which is not conducive to improving compression efficiency.

**SUMMARY**

The embodiments of the present application provide an encoding method, a decoding method, a bitstream, an encoder, a decoder, and a storage medium, which can improve compression efficiency.

The technical solutions of the embodiments of the present application may be implemented as follows.

In a first aspect, the embodiments of the present application provide a decoding method, which is applied to a decoder and includes:

determining a mode parameter of a chroma component of a current block;

in a case where a mode parameter satisfies a first condition, determining a first transform kernel of the chroma component of the current block; and

determining transform coefficients of the chroma component of the current block, and performing inverse transform on the transform coefficients of the chroma component of the current block according to the first transform kernel to determine a residual block of the chroma component of the current block.

In a second aspect, the embodiments of the present application provide an encoding method, which is applied to an encoder and includes:

determining a mode parameter of a chroma component of a current block;

in a case where a mode parameter satisfies a first condition, determining a first transform kernel of the chroma component of the current block;

determining a residual block of the chroma component of the current block, and performing transform on the residual block of the chroma component of the current block according to the first transform kernel to determine transform coefficients of the chroma component of the current block; and

encoding the transform coefficients of the chroma component of the current block, and signalling the resulting encoded bits into the bitstream.

In a third aspect, the embodiments of the present application provide a bitstream. The bitstream is generated by performing bit encoding on information to be encoded, and the information to be encoded includes at least one of: quantization coefficients of a chroma component of a current block, or a value of first syntax flag information. The first syntax flag information is used to indicate whether the current block is allowed to use a first transform mode and a corresponding used transform kernel index.

In a fourth aspect, the embodiments of the present application provide an encoder, which includes a first determining unit, a transform unit, and an encoding unit; where

the first determining unit is configured to: determine a mode parameter of a chroma component of a current block; and determine a first transform kernel of the chroma component of the current block in a case where the mode parameter satisfies a first condition;

the transform unit is configured to: determine a residual block of the chroma component of the current block, and perform transform on the residual block of the chroma component of the current block according to the first transform kernel to determine the transform coefficients of the chroma component of the current block; and

the encoding unit is configured to: encode the transform coefficients of the chroma component of the current block, and signal obtained encoded bits into a bitstream.

In a fifth aspect, the embodiments of the present application provide an encoder, which includes a first memory and a first processor; where

the first memory is configured to store a computer program executable on the first processor; and

the first processor is configured to, when executing the computer program, perform the method according to the second aspect.

In a sixth aspect, the embodiments of the present application provide a decoder, which includes a second determining unit and an inverse transform unit; where

the second determining unit is configured to: determine a mode parameter of a chroma component of a current block; and determine a first transform kernel of the chroma component of the current block in a case where the mode parameter satisfies a first condition; and

the inverse transform unit is configured to: determine the transform coefficients of the chroma component of the current block, and perform inverse transform on the transform coefficients of the chroma component of the current block according to the first transform kernel to determine a residual block of the chroma component of the current block.

In a seventh aspect, the embodiments of the present application provide a decoder, which includes a second memory and a second processor; where

the second memory is configured to store a computer program executable on the second processor; and

the second processor is configured to, when executing the computer program, perform the method according to the first aspect.

In an eighth aspect, the embodiments of the present application provide a computer-readable storage medium, which has a computer program stored thereon. When the computer program is executed by at least one processor, the method according to the first aspect or the method according to the second aspect is implemented.

The embodiments of the present application provide an encoding method, a decoding method, a bitstream, an encoder, a decoder, and a storage medium. At the encoder side, a mode parameter of a chroma component of a current block is determined; in a case where the mode parameter satisfies a first condition, a first transform kernel of the chroma component of the current block is determined; a residual block of the chroma component of the current block is determined, and a transform is performed on a residual block of the chroma component of the current block according to the first transform kernel to determine transform coefficients of the chroma component of the current block; the transform coefficients of the chroma component of the current block are encoded, and the obtained encoded bits are signalled into the bitstream. At the decoder side, a mode parameter of a chroma component of a current block is determined; in a case where the mode parameter satisfies a first condition, a first transform kernel of the chroma component of the current block is determined; transform coefficients of the chroma component of the current block are determined, and inverse transform is performed on the transform coefficients of the chroma component of the current block according to the first transform kernel to determine a residual block of the chroma component of the current block. In this way, at both the encoder side and the decoder side, the mode parameter of the current block is first determined; when the mode parameter satisfies the first condition, the first transform kernel of the chroma component of the current block is determined; and subsequently, a transform is performed on the residual block of the chroma component of the current block according to the first transform kernel. In other words, the determination of the first transform kernel is related to the mode parameter, which enables the application of the MTS/LFNST/NSPT transform to chroma components in single tree partitioning, thereby not only improving compression efficiency but also enhancing encoding and decoding performance.

## BRIEF DESCRIPTION OF THE DRAWINGS

FIG. 1 is a schematic block diagram illustrating a flowchart of a hybrid coding architecture.

FIG. 2 is a schematic diagram illustrating a structure of a group of pictures (GOP).

FIG. 3 is a schematic diagram illustrating a block partitioning structure.

FIG. 4 is a schematic diagram illustrating a block position relationship in the spatial/temporal domain of a current block.

FIG. 5 is a schematic diagram illustrating motion information of a current block and a collocated block.

FIG. 6 is a schematic diagram illustrating motion shift using a collocated reference picture.

FIG. 7 is a schematic diagram illustrating a distribution based on MVD characteristics.

FIG. 8 is a schematic diagram illustrating affine motion using 2 or 3 control points.

FIG. 9 is a schematic diagram illustrating an affine motion for subblock-based motion vector derivation.

FIG. 10 is a schematic diagram illustrating multiple mode weights in GPM mode.

FIG. 11 is a schematic diagram illustrating bilateral-matching based motion information.

FIG. 12 is a schematic diagram illustrating template matching for a current block.

FIG. 13 is a schematic diagram illustrating reference samples of a current block.

FIG. 14 is a schematic diagram illustrating multiple reference lines for a current block.

FIG. 15 is a first schematic diagram illustrating multiple prediction modes corresponding to intra prediction.

FIG. 16 is a second schematic diagram illustrating multiple prediction modes corresponding to intra prediction.

FIG. 17 is a third schematic diagram illustrating multiple prediction modes corresponding to intra prediction.

FIG. 18 is a fourth schematic diagram illustrating multiple prediction modes corresponding to intra prediction.

FIG. 19 is a schematic diagram illustrating screen content coding.

FIG. 20 is a schematic histogram diagram illustrating gradients and intra prediction modes.

FIG. 21 is a schematic diagram illustrating weighted merge of three intra prediction modes.

FIG. 22 is a schematic diagram illustrating reference samples of a chroma component and a luma component.

FIG. 23 is a schematic diagram illustrating the grouping for multi-model CCLM.

FIG. 24 is a schematic diagram illustrating the multi-model CCLM prediction.

FIG. 25 is a schematic diagram illustrating a reference region of the intra CCCM.

FIG. 26 is a schematic diagram illustrating luma gradient calculation of GLM.

FIG. 27 is a schematic diagram illustrating the inter-CCCM prediction.

FIG. 28 is a schematic diagram illustrating the DCT transform.

FIG. 29 is a schematic diagram illustrating basis pictures of the DCT transform.

FIG. 30 is a schematic flowchart of a procedure without LFNST transform.

FIG. 31 is a schematic flowchart of a procedure with LFNST transform.

FIG. 32 is a schematic flowchart of a detailed procedure with LFNST transform.

FIG. 33 is a schematic diagram illustrating basis pictures of multiple transform kernel sets.

FIG. 34 is a schematic diagram illustrating basis pictures for the NSPT transform.

FIG. 35 is a schematic diagram illustrating a structure of separate partitioning of luma and chroma.

FIG. 36 is a schematic diagram of a network architecture of video encoding and decoding provided in the embodiments of the present application.

FIG. 37 is a schematic block diagram of a system composition of an encoder provided in the embodiments of the present application.

FIG. 38 is a schematic block diagram of a system composition of a decoder provided in the embodiments of the present application.

FIG. 39 is a first schematic flowchart of a decoding method provided in the embodiments of the present application.

FIG. 40 is a second schematic flowchart of a decoding method provided in the embodiments of the present application.

FIG. 41 is a third schematic flowchart of a decoding method provided in the embodiments of the present application.

FIG. 42 is a first schematic flowchart of an encoding method provided in the embodiments of the present application.

FIG. 43 is a second schematic flowchart of an encoding method provided in the embodiments of the present application.

FIG. 44 is a third schematic flowchart of an encoding method provided in the embodiments of the present application.

FIG. 45 is a schematic diagram of a composition structure of an encoder provided in the embodiments of the present application.

FIG. 46 is a schematic diagram of a hardware structure of an encoder provided in the embodiments of the present application.

FIG. 47 is a schematic diagram of a composition structure of a decoder provided in the embodiments of the present application.

FIG. 48 is a schematic diagram of a hardware structure of a decoder provided in the embodiments of the present application.

FIG. 49 is a schematic diagram of a composition structure of an encoding and decoding system provided in the embodiments of the present application.

## DETAILED DESCRIPTION

In order to provide a more detailed understanding of features and technical contents in the embodiments of the present application in more detail, the implementations of the embodiments of the present application will be described in detail below with reference to the accompanying drawings. The accompanying drawings are for illustrative purposes only and are not intended to limit the embodiments of the present application.

Unless otherwise defined, all technical and scientific terms used herein have the same meanings as commonly understood by a person skilled in the art to which the present application belongs. The terms used herein are only for the purpose of describing the embodiments of the present application and are not intended to limit the present application.

The "some embodiments" involved in the following description describe a subset of all possible embodiments. But it should be understood that "some embodiments" may refer to the same subset or different subsets of all possible embodiments, and can be combined with each other where no conflict arises.

It should further be pointed out that the terms "first/second/third" involved in the embodiments of the present application are only used to distinguish similar objects and do not imply a specific order of the objects. It should be understood that "first/second/third" can, where permissible, be interchanged in terms of their specific order or sequence, so that the embodiments of the present application described herein can be implemented in an order other than that illustrated or described here.

In a video picture, a coding block (CB) is generally represented by a first color component, a second color component, and a third color component. Here, these three color components are respectively a luma component, a blue chroma component, and a red chroma component. Specifically, the luma component is generally denoted by a symbol Y, the blue chroma component is generally denoted by a symbol Cb or U, and the red chroma component is generally denoted by the symbol Cr or V. In this way, the video picture may be represented in an YCbCr format or a YUV format.

Before the embodiments of the present application are further described in detail, the nouns and terms involved in the embodiments of the present application are described first. The nouns and terms involved in the embodiments of the present application are applicable to the following explanations:

H.265/high efficiency video coding (HEVC);
H.266/versatile video coding (VVC);
reference software test platform for VVC (VVC test model, VTM);
platform with enhanced compression performance after VVC (enhanced compression model, ECM);
joint video experts team (JVET);
coding unit (CU);
coding tree unit (CTU);
largest coding unit (LCU);
motion vector (MV);
prediction unit (PU);
transform unit (TU);
merge technology (merge);
skip technology (skip);
quantization parameter (QP);
merge with motion vector difference (MMVD);
motion vector prediction (MVP);
temporal motion vector prediction (TMVP);
subblock-based temporal motion vector prediction (SbTMVP);
discrete cosine transform (DCT);
discrete sine transform (DST);
multiple transform selection (MTS);
low frequency non-separable transform (LFNST);
non-separable primary transform (NSPT); and
context-based adaptive binary arithmetic coding (CABAC).

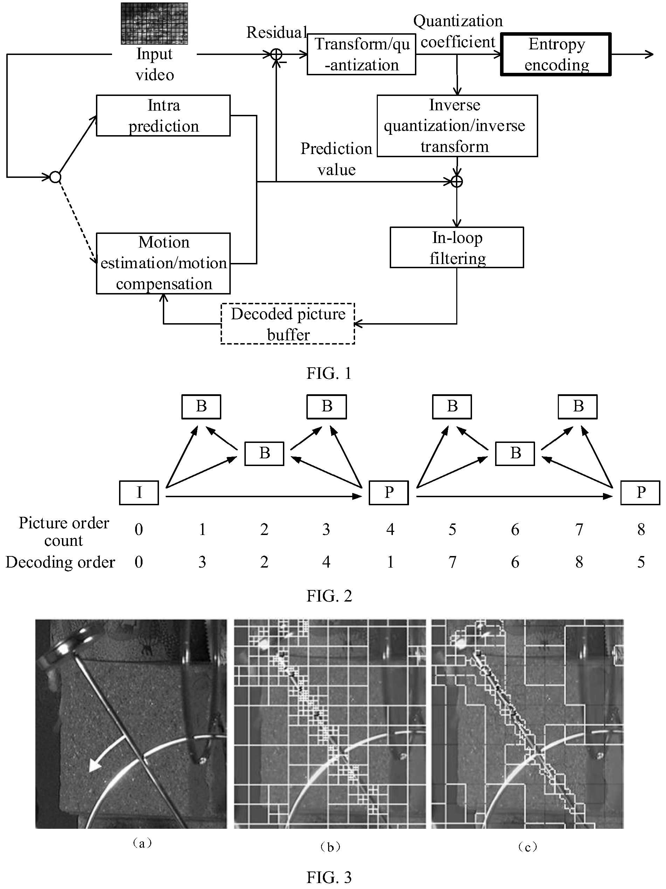

Currently, the general video coding standards adopt a block-based hybrid coding architecture. Each picture or sub-picture or frame in a video is partitioned into square largest coding units or coding tree units having the same size (e.g., $256 \times 256$, $128 \times 128$, $64 \times 64$). Each largest coding unit or coding tree unit can be partitioned into rectangular coding units according to rules. The coding units can be further partitioned into prediction units, transform units, etc.. Specifically, as illustrated in FIG. 1, the hybrid coding architecture includes modules such as a prediction module, a transform/quantization module, an entropy encoding module, an inverse quantization/inverse transform module, and an in-loop (or in loop) filter module. Here, the prediction module may include intra prediction and inter prediction, where the inter prediction may involve motion estimation and motion compensation. Considering the strong correlation between neighboring samples in a picture of a video, the video encoding and decoding technology utilizes an intra prediction method to eliminate spatial redundancy between neighboring samples. Additionally, due to the strong similarity between adjacent pictures of a video, the video encoding and decoding technology utilizes an inter-picture prediction method to eliminate temporal redundancy between adjacent pictures, thereby improving coding efficiency.

The basic workflow of a video encoder/decoder is as follows. At the encoder side: a picture is partitioned into blocks; intra prediction or inter prediction is applied to a current block to generate a prediction block of the current block; a residual block is obtained by subtracting the prediction block from the original block of the current block; transformation and quantization is applied to the residual block to obtain a quantization coefficient matrix; and the quantized coefficient matrix is entropy-encoded and signalled into a bitstream. At the decoder side: intra prediction or inter prediction is applied to a current block to generate a prediction block of the current block; in addition, a bitstream is parsed to obtain a quantization coefficient matrix, and inverse quantization and inverse transformation are applied to the quantization coefficient matrix to obtain a residual block; and the residual block is added to the prediction block to obtain a reconstructed block. Reconstructed blocks form a reconstructed picture, and in-loop filtering is applied to the reconstructed picture on a picture basis or a block basis to obtain a decoded picture. The encoder side also needs to performs operations similar to those at the decoder side to obtain the decoded picture. The decoded picture can be used as a reference picture in the inter prediction for subsequent pictures. At the encoder side, if necessary, the determined block partitioning information, mode information, or parameter information such as prediction, transform, quantization, entropy encoding, and in-loop filtering, need to be signalled into the bitstream. At the decoder side, the same block partitioning information, mode information, or parameter information, e.g., prediction, transform, quantization, entropy encoding, and in-loop filtering, is determined by parsing the bitstream and analyzing the existing information, which ensures that the decoded picture obtained at the encoder side is identical to that obtained at the decoder side. The decoded picture obtained at the encoder side is also commonly referred to as the reconstructed picture. During prediction, the current block may be partitioned into prediction units, and during transform, the current block may be partitioned into transform units. The partition of the prediction units may be different to the partition of the transform units. The above describes the basic workflow of the video encoder/decoder under the block-based hybrid coding architecture. With the development of technology, some modules or steps in this architecture or this workflow may be optimized. The embodiments of the present application can be applied to the basic workflow of the video encoder/decoder under the block-based hybrid coding architecture, but are not limited to this architecture or workflow.

In addition, in the embodiments of the present application, the current block (CB) may refer to a current coding unit, a current prediction unit, or a current transform unit, etc.. Due to the requirement of parallel processing, a picture can be partitioned into slices, and slices within the same picture can be processed in parallel, that is, there is no data dependency between slices. The term "frame" is a common term, and according to the general understanding, one frame refers to one picture. In the embodiments of the present application, the term "frame" may also be replaced with "picture" or "slice", etc..

It is understood that, the intra prediction and inter prediction in the prediction technology will be described in detail below.

(1) Inter prediction

In the inter prediction, the temporal correlation is used to eliminate redundancy. To prevent perceptible stuttering to human eyes, typical video frame rates include 30 frames per second, 50 frames per second, 60 frames per second, or even 120 frames per second. In such videos, adjacent frames within the same scene exhibit high correlation. In the inter prediction technology, according to the correlation, the current content to be encoded is predicted with reference to the content of already encoded/decoded frames. The inter prediction can significantly improve coding performance.

The most basic inter prediction method is translational prediction. The translational prediction assumes that the current content to be predicted has translational motion between the current picture and the reference picture. For example, if the content of the current block (the coding unit or the prediction unit) has translational motion between the current picture and the reference picture, the content can be derived from the reference picture through a motion vector, and the corresponding content is used as the prediction block of the current block. The translational motion accounts for a large proportion of a video, and thus, the stationary backgrounds, overall translational objects and translation of lens may all be handled by using the translational prediction.

Some contents in a natural video are not simple translation, for example, there are some subtle changes during translation, which include changes in shape, color, and the like. In bi-directional prediction, two reference blocks are found from the reference picture, and a weighted average is performed on the two reference blocks to obtain a prediction block that resembles the current block as closely as possible. For example, for some scenes, finding one reference block from a preceding frame of the current frame and another from a following frame of the current frame and averaging them may yield a better match to the current block than using a single reference block. Based on this, bi-directional prediction further improves compression performance over uni-directional prediction.

A picture order count (POC) may be used as an identifier of a picture. In a video sequence, each picture has a unique POC. In the embodiments of the present application, it is considered that the POC order is the same as the display order. A P picture (P frame) is a picture that can only be predicted by using a reference picture whose POC precedes that of the current picture. The current reference picture has only one reference picture list (RPL), denoted as RPLO. The reference picture list RPLO contains only reference pictures whose POC precedes that of the current picture. Originally, a B picture (B frame) is a picture that can be predicted by using either a reference picture whose POC precedes that of the current picture or a reference picture whose POC follows that of the current picture. A B picture has two reference picture lists, denoted as RPLO and RPL1. One configuration method is that RPLO contains only reference pictures whose POC precedes that of the current picture, and RPL1 contains only reference pictures whose POC follows that of the current picture. For a current block, it may use only a reference block from a certain picture in RPLO, and such prediction is referred to as the forward prediction; alternatively, it may use only a reference block from a certain picture in RPL1, and such prediction is referred to as the backward prediction; alternatively, it may use both a reference block from a certain picture in RPLO and a reference block from a certain picture in RPL1, and such prediction is referred to as the bi-directional prediction. A simple method for the case of using two reference blocks is averaging two samples respectively from the two reference blocks at each corresponding position to obtain the prediction block of the current block. Later, the B picture no longer restrict RPLO to containing only reference pictures whose POC precedes that of the current picture and RPL1 to containing only reference pictures whose POC follows that of the current picture. Therefore, RPLO may also include reference pictures whose POC follows that of the current picture, and RPL1 may also include reference pictures whose POC follows that of the current picture. The current block may use both a reference picture whose POC precedes that of the current picture or a reference picture whose POC follows that of the current picture. Such B picture is also referred to as a generalized B picture.

Since the encoding/decoding order for random access (RA) configuration differs from the POC order, the B picture may use both information before the current picture and information after the current picture, thereby significantly improving coding performance. For example, a classic group of pictures (GOP) structure for RA is illustrated in FIG. 2. In FIG. 2, the arrows indicate reference relationships. Since I picture does not require a reference picture, after the I picture with a POC of 0 is decoded, P picture with a POC of 4 will be decoded, and the decoding of P picture with the POC of 4 can use the I picture with the POC of 0 as a reference. After the P picture with the POC of 4 is decoded, B picture with a POC of 2 will be decoded, and the decoding of the B picture with the POC of 2 can use both the I picture with the POC of 0 and the P picture with the POC of 4 as references, and so on. In this way, according to FIG. 2, in the case where pictures have a POC order {0 1 2 3 4 5 6 7 8}, their corresponding decoding order is {0 3 2 4 1 7 6 8 5}.

An encoding/decoding order for low delay (LD) configuration is the same as the POC order. Therefore, the current picture can only use information before the current picture. The low delay configuration further includes Low Delay P and Low Delay B. Low Delay P refers to the conventional low delay configuration, and its typical structure is IPPP..., that is, one I picture is encoded or decoded first, and the subsequent pictures are all P pictures. A typical structure of Low Delay B is IBBB..., and its difference with Low Delay P lies in that each inter picture is a B picture, which means that it uses two reference picture lists (RPLO and RPL1), i.e., the current block may use both a reference block from a certain picture in RPLO and a reference block from a certain picture in RPL1.

Generally, the RA configuration has higher compression efficiency than the LD configuration, and LDB (Low Delay B) configuration has higher compression efficiency than LDP (Low Delay P) configuration. This is because, in one aspect, the bi-directional prediction can use backward information; in another aspect, the bi-directional prediction can reduce prediction error through techniques such as weighted averaging.

One reference picture list of the current picture may contain at most several reference pictures, such as 2, 3, or 4. During the encoding of a certain current picture, the specific reference pictures included in RPLO and RPL1 are determined by a certain configuration or algorithm, which is not the focus of discussion in the embodiments of the present application. However, the same reference picture may be included in both RPLO and RPL1. That is, the encoder/decoder allows the current block to use two blocks from the same reference picture as references. The encoder/decoder typically uses an index value (e.g., index, or idx) within the reference picture list to identify the corresponding reference picture. If one reference picture list has a length of 4, index values are 0, 1, 2, and 3. For example, if the RPLO of the current picture contains four reference pictures with POCs of 5, 4, 3, and 0, then, index 0 in RPLO corresponds to a reference picture with a POC of 5, index 1 in RPLO corresponds to a reference picture with a POC of 4, index 2 in RPLO corresponds to a reference picture with a POC of 3, index 3 in RPLO corresponds to a reference picture with a POC of 0.

It should also be understood that inter prediction uses motion information to represent "motion" Basic motion information includes information of the reference picture and information of the motion vector (MV). For a block intended to use bi-directional prediction, it naturally needs to find two reference blocks, thus requiring two sets of reference picture information and motion vector information. Each set of information can be considered as uni-directional motion information, and the two sets are combined to form bi-directional motion information. In one specific implementation, the uni-directional motion information and the bi-directional motion information can use the same data structure. The difference only lies in that, for the bi-directional motion information, the two sets of reference frame information and motion vector information are all valid, whereas for the uni-directional motion information, one set of the reference frame information and motion vector information is invalid. The term "valid" may also be interpreted as "used", and the term "invalid" may also be interpreted as "unused".

VVC supports two reference picture lists, denoted as RPLO and RPL1. For the above bi-directional motion information, VVC uses a reference picture index refIdxL0 corresponding to RPLO, a motion vector mvL0 corresponding to the RPLO, a reference picture index refIdxL1 corresponding to RPL1, and a motion vector mvL1 corresponding to RPL1. Here, the reference picture index corresponding to RPLO and the reference picture index corresponding to RPL1 can be understood as the aforementioned information of the reference picture. VVC uses two pieces of flag information to respectively indicate whether the motion information corresponding to RPLO is used and whether the motion information corresponding to RPL1 is used, which are denoted as predFlagL0 and predFlagL1, respectively. This can also be understood that predFlagL0 and predFlagL1 indicate whether the above uni-directional motion information is "valid or invalid". Therefore, although VVC does not explicitly define a data structure called "motion information", VVC uses the corresponding reference picture index, motion vector and flag indicating "valid or invalid" of each reference picture list together to represent motion information. The term "motion information" does not exist in the VVC standard text; instead, VVC uses the term "motion vector". It may be considered that the reference picture index and the flag indicating whether the corresponding motion information is used are adjunctive to the motion vector. Herein, the term "motion information" is still used for ease of description, but it should be understood that the term can also be described as the "motion vector". The "motion information" may also be referred to as the term "motion parameter".

For a two-dimensional picture, the motion vector may be represented as (x, y), i.e., a component in the horizontal direction and a component in the vertical direction. Since videos are represented by samples, and there is a distance between samples, the motion of an object between adjacent pictures may not always correspond to an integer pixel distance. For example, in a distant view video, the distance between two samples corresponds to 1 meter on a distant object, while the distance this object moves within the time between two frames is 0.5 meters. Thus, this scene cannot be well represented by the integer-pel motion vector. Therefore, the motion vector may be represented at fractional pixel level, such as 1/2 sample precision, 1/4 sample precision, 1/8 sample precision, or 1/16 sample precision, to represent motion more finely. A sample value at a fractional pixel position in the reference picture is obtained by an interpolation method.

The uni-directional prediction and bi-directional prediction in the above-mentioned translational prediction are both block-based, such as coding units or prediction units. That is, a sample matrix is used as a unit for prediction. The most basic block is a rectangular block, such as a square or a rectangle. Video coding standards like HEVC and VVC allow the encoder to determine the size and partition mode of the coding unit and the prediction unit based on the content of the video. A region with simple texture or motion tends to use a larger block, while a region with complex texture or motion tends to use a smaller block. The deeper block partition level enables more complex blocks that are more similar to the actual texture or motion, but accordingly, the overhead required to represent these partitions also increases. The motion information may also need to be transmitted in the bitstream. Moreover, generally speaking, the finer the block partition, the greater the overhead of the motion information.

The most primitive method of representing the motion information is to directly signal the complete motion information. Later, experts discovered that the motion vector may be represented by motion vector prediction (MVP) plus motion vector difference (MVD), that is, MV = MVP + MVD. Here, the more accurate the MVP is, the smaller the MVD is, which results in lower overhead in the bitstream.

It can be understood that, for the merge mode, each inter-coded block requires one piece of motion information. In order to simplify the issue, it is assumed that the partition of CU is the same as the partition of PU and the partition of TU, that is, a coding unit has a prediction unit and a transform unit that are identical to the coding unit in both the size and position. In fact, as CU partitioning becomes more flexible, VVC tends to weaken PU and TU, compared to HEVC. Differences in any of the stages-prediction, transform, quantization, or entropy encoding may lead to CU partitioning. For example, if motion information of two regions is different, the encoder may partition the two regions into different CUs. As another example, if motion information of two regions is the same or similar, but their residual characteristics are significantly different, the encoder may still partition the two regions into different CUs. The partition scheme is decided based on overall compression efficiency and does not depend entirely on a certain factor. Therefore, it is possible for the same object or regions with the same or similar motion to be partitioned into different CUs.

FIG. 3 illustrates an example block partitioning structure of HEVC. As illustrated in FIG. 3, figure (a) illustrates an original picture, in which an iron rod moves in the direction indicated by the arrow, and background has minimal motion. Figure (b) illustrates the block partitioning based on HEVC, and the boundaries of blocks in figure (b) that share the same motion information have been removed from figure (c). It can be observed that many adjacent blocks use the same motion information. In this case, encoding motion information separately for each block would result in significant waste. As mentioned earlier, the complete motion information in VVC includes the corresponding reference picture index, MV and flag indicting "used or unused" for RPLO, as well as the corresponding reference picture index, MV, and flag indicating "used or unused" for RPL1. A basic principle of a merge mode is that the current block may inherit motion information from adjacent blocks, including the information of the reference picture and the information of the motion vector.

The merge mode may construct a merge candidate list, and if the current block uses the merge mode, an index may be used to indicate which motion information the current block merges with, and thus it is necessary to encode the complete motion information. When the merge candidate list is constructed, motion information related to the current block, such as motion information from adjacent blocks in the spatial domain, motion information in the temporal domain, motion information from non-adjacent blocks in the spatial domain, motion information from non-adjacent blocks in the temporal domain, history-based motion information, and synthesized motion information may be added.

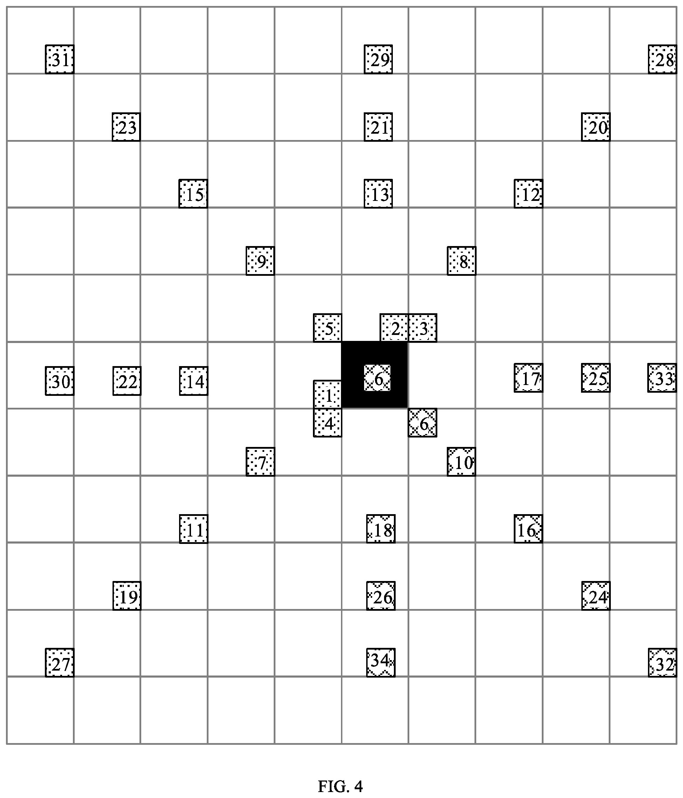

The adjacent blocks in the spatial domain refer to blocks adjacent to the current block in the same picture, while the non-adjacent blocks in the spatial domain refer to blocks not adjacent to the current block in the same picture. The motion information in the temporal domain and the motion information from the non-adjacent blocks in the temporal domain refer to motion information from specified positions in a collocated reference picture. For example, as illustrated in FIG. 4, a black-filled block is the current block, positions 1, 2, 3, 4, and 5 correspond to positions of the adjacent blocks in the spatial domain used in merge, and other positions indicated by dot-filled blocks correspond to positions of the non-adjacent blocks in the spatial domain used in merge. Position 6 is a position used for the motion information in the temporal domain, and if a corresponding position at the bottom-right corner of the current block is unavailable, a position corresponding to the center of the current block is used instead. The other positions marked by grid-filled blocks correspond to positions used for the motion information from the non-adjacent blocks in the temporal domain. Temporal motion information is derived according to the motion information at the corresponding position in the collocated reference picture, and the specific derivation method will be introduced in detail below. It should be noted that the background grid in FIG. 4 is only for illustrating sample coordinates, and does not represent the specific block partitioning.

The history-based motion information is position-independent. The encoder/decoder maintains a first-in-first-out motion information list. When the encoding or decoding of a block is completed, the encoder/decoder updates the list with the motion information of that block, and duplication with motion information already present in the list is not allowed during the update. The history-based motion information is obtained from the list.

Furthermore, it can be understood that for the temporal motion information (vector) derivation, the temporal motion information prediction is used as a supplement to the spatial motion information prediction. Generally, the correlation between adjacent regions in the same picture is stronger than the correlation between regions in different pictures. However, there are cases where the temporal motion information is more effective. Take a simple example, when the current block and its surrounding adjacent blocks in the current picture belong to different objects, they have completely different motions; while the motion of a block belonging to the same object as the current block in a certain reference picture may provide better motion information prediction for the current block.

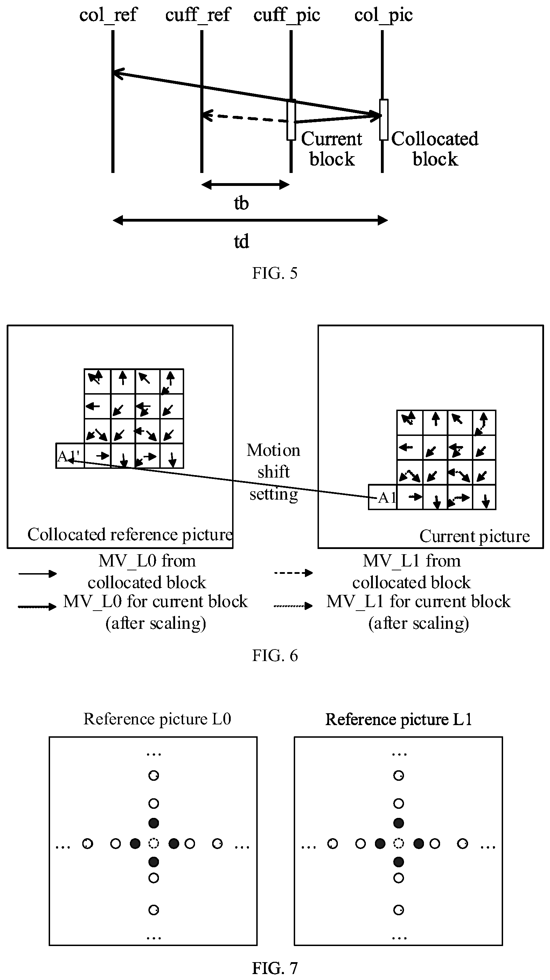

A motion vector of a collocated block (here, a block used for acquiring temporal motion information is called the collocated block) in a collocated reference picture is a vector from the collocated reference picture col_pic to a reference picture of the collocated block col_ref. Specifically, as illustrated in FIG. 5, for the current block, the required motion vector is a vector from a current picture curr_pic to a reference picture curr_ref of the current block. Set a POC distance between col_pic and col_ref to be td, and a POC distance between curr_pic and curr_ref to be be tb. It is assumed that the motion from the collocated block to the current block remains unchanged, the scaling ratio may be determined based on td and tb. If the motion vector of the collocated block is (col_mv_x, col_mv_y), then the temporal motion vector prediction (tmvp_x, tmvp_y) may be derived as follows: tmvp_x = col_mv_x * tb / td, tmvp_y = col_mv_y * tb / td.

In VVC, the minimum unit for storing motion information on the collocated reference picture is $4\times4$. That is, each $4\times4$ subblock stores a set of motion information. It can be understood that, disregarding the cost of hardware implementation, a set of motion information is stored for each sample in the collocated reference picture.

In addition, it can be understood that, VVC has introduced the subblock-based temporal motion vector prediction, namely SbTMVP. In general, MVP and TMVP are both considered for the entire block, that is, the entire block shares the same MVP. However, the SbTMVP is subblock-based, in such case, the SbTMVP can obtain an MVP for each subblock. This is the essential difference between the SbTMVP and the TMVP.

In addition, the TMVP uses a position at the bottom-right corner or the center of the current block to locate the collocated block, whereas the SbTMVP determines a position according to a motion shift identified based on the motion of neighboring blocks. In VVC, if the block at position A1 refers to the collocated reference picture, the motion shift is set to a motion vector of the collocated reference picture used at A1. Otherwise, the motion shift is set to (0, 0). As illustrated in FIG. 6, a position is identified based on the motion shift, and then the MV corresponding to each subblock position in the "collocated block" is scaled to obtain MVP for each subblock.

Furthermore, it can be understood that, regarding the merge with motion vector difference, i.e., the MMVD, the motion information directly selected from the merge candidate list for the merge mode is determined as the motion information of the current block. In the actual video, sometimes, there may be some differences between an actual motion vector of the current block and the selected motion vector in the merge candidate list. MMVD is a special merge mode in VVC, which encodes the MVD in such case using an efficient method. The regular merge mode does not need to encode or decode the MVD. The regular inter mode needs to directly encode and decode the MVD. However, the MMVD leverages the characteristic that MVDs are more frequently distributed along either the horizontal or vertical direction alone, and the characteristic that MVDs with smaller values are more common, with the number decreasing as the MVD value increases, as illustrated in FIG. 7. In FIG. 7, circles of different shapes indicate MVDs of different values.

MMVD can only represent MVDs with specific values in certain directions, but it cannot represent arbitrary MVDs. MMVD uses mmvd_direction_idx to indicate the direction of the MVD, and of course, it can also be understood as whether x and y components of the MVD are non-zero, and their positive or negative signs. The mmvd_distance_idx indicates the absolute value MmvdDistance of the non-zero component between x and y.

Here, Table 1 illustrates an example relationship between mmvd_distance idx[x0][y0] and MmvdDistance[x0][y0].

Table 1

| mmvd_distance_id x[x0][y0] | MmvdDistance[x0][y0] | |
|---|---|---|
| | ph_mmvd_fullpel_only_flag==0 | ph _mmvd_fullpel_only_flag==1 |
| 0 | 1 | 4 |
| 1 | 2 | 8 |
| 2 | 4 | 16 |
| 3 | 8 | 32 |
| 4 | 16 | 64 |
| 5 | 32 | 128 |
| 6 | 64 | 256 |
| 7 | 128 | 512 |

Herein, ph_mmvd_fullpel_only_flag is a picture header flag, and 2 different combinations of MMVD may be set.

Herein, Table 2 illustrates a schematic relationship between mmvd_direction_idx[x0][y0] and MmvdSign[x0][y0].

Table 2

| mmvd_direction_idx[x0][y0] | MmvdSign[x0][y0][0] | MmvdSign[x0][y0][1] |
|---|---|---|
| 0 | +1 | 0 |
| 1 | -1 | 0 |
| 2 | 0 | +1 |
| 3 | 0 | -1 |

MVD for MMVD is calculated according to the following method:

$$MmvdOffset[x0][y0][0] = (MmvdDistance[x0][y0] << 2) * MmvdSign[x0][y0][0];$$

$$MmvdOffset[x0][y0][1] = (MmvdDistance[x0][y0] << 2) * MmvdSign[x0][y0][1].$$

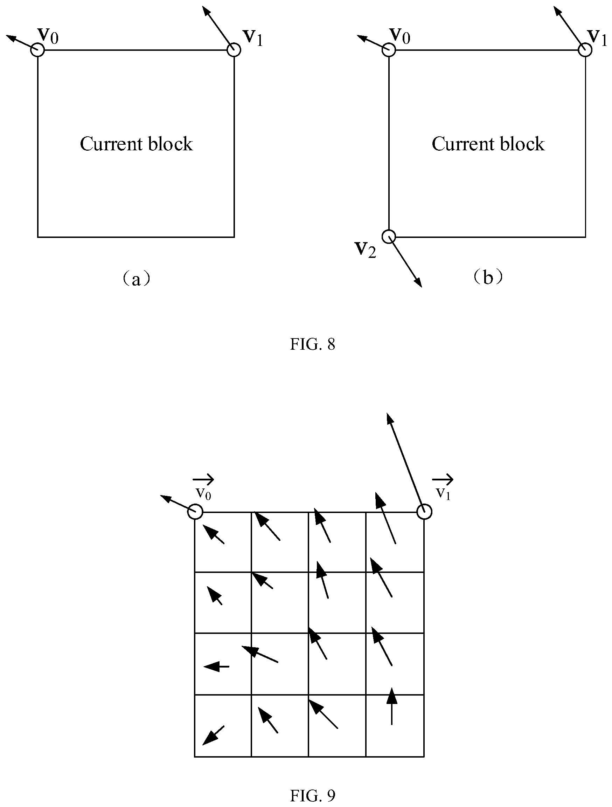

It can also be understood that, for the affine, the simplest and most commonly used translational motion has been introduced above. In the real world, motion is not limited to translation; it includes many forms such as zooming in, zooming out, rotation, perspective of motion (perspective: an object closer to a camera appears larger, while an object farther away the camera appears smaller), as well as many irregular motion forms. Affine may be used to represent motions more complex than translation. As illustrated in FIG. 8, affine uses a linear model to calculate the motion vector of each subblock or each sample in the current block, based on motion vectors of either 2 control points (4 parameters, a motion vector includes two parameters x and y ) or 3 control points (6 parameters). Figure (a) illustrates the case with 2 control points, e.g., $v_0$ and $v_1$, and figure (b) illustrates the case with 3 control points, e.g., $v_0$, $v_1$ and $v_2$.

For the 4-parameter affine model, the motion vector at position (x, y) in the current block is derived as follows:

$$\begin{cases} mv_x = \dfrac{mv_{1x}-mv_{0x}}{W}x + \dfrac{mv_{1y}-mv_{0y}}{W}y + mv_{0x} \\ mv_y = \dfrac{mv_{1y}-mv_{0y}}{W}x + \dfrac{mv_{1y}-mv_{0x}}{W}y + mv_{0y} \end{cases} \quad (1)$$

For the 6-parameter affine model, the motion vector at position (x, y) in the current block is derived as follows:

$$\begin{cases} mv_x = \dfrac{mv_{1x}-mv_{0x}}{W}x + \dfrac{mv_{2x}-mv_{0x}}{H}y + mv_{0x} \\ mv_y = \dfrac{mv_{1y}-mv_{0y}}{W}x + \dfrac{mv_{2y}-mv_{0y}}{H}y + mv_{0y} \end{cases} \quad (2)$$

Where $(mv_{0x}, mv_{0y})$ is the motion vector of the control point at the top-left corner of the current block, $(mv_{1x}, mv_{1y})$ is the motion vector of the control point at the top-right corner, and $(mv_{2x}, mv_{2y})$ is the motion vector of the control point at the bottom-left corner.

To simplify hardware implementation complexity, affine used in VVC partitions the current block into 4×4 subblocks, calculates an MV for each subblock, and performs motion compensation for each subblock. FIG. 9 is a schematic diagram illustrating subblock-based motion vector derivation in affine. It can be understood that with the enhancement of hardware processing capabilities, affine may also achieve sample-based processing. That is, a motion vector is derived for each sample, and motion compensation is applied to the sample based on the motion vector. Affine only needs a few control points to derive a respective motion vector for each subblock or each sample. Compared to motion compensation based on the entire block, affine achieves finer prediction. Moreover, compared to partitioning into much smaller CUs, affine has a significantly lower overhead.

It can also be understood that for the geometric partitioning mode (GPM), HEVC supports a maximum CTU size of 64×64, which allows recursive quadtree partitioning. VVC supports a more flexible block partitioning method than HEVC, which supports a maximum CTU size of 128×128, including quadtree partition, ternary tree partition, and binary tree partition. Despite the increasing flexibility of these partitioning methods, whether for CU, PU, or TU, they can ultimately only be partitioned into rectangular blocks. It should be noted that, in VVC, the partition of PU and TU has been weakened. Boundaries of textures or motion in the natural video are diverse. For example, for an diagonal object boundary, simply using rectangular blocks to approximate the boundaries would need to partition into many small blocks, which may significantly increase overhead. The geometric partitioning mode, GPM, may better handle textures and boundaries in the natural video.

GPM uses two prediction blocks of the same size as the current block. In a GPM prediction block, certain sample positions use 100% of the sample value from the corresponding position in the first prediction block, while other sample positions use 100% of the sample value from the corresponding position in the second prediction block. In the boundary region or transition region, the sample values from the corresponding positions in the two prediction blocks are used in a certain proportion. The weights for the boundary region also transition gradually. Certainly, for scenarios such as screen content coding, the transition region may not be used. The specific allocation of these weights is determined by the "partition" mode of GPM. The weight of each sample position is determined based on the "partition" mode of GPM. Certainly, in some cases, such as in a case where the block size is very small, some GPM modes may not guarantee that some sample positions use 100% of the sample value from the corresponding position in the first prediction block and others use 100% of the sample value from the corresponding position in the second prediction block. It can also be considered that GPM uses two prediction blocks not identical in size to the current block-taking only the needed portion from the two blocks and removing the portions with a weight of 0.

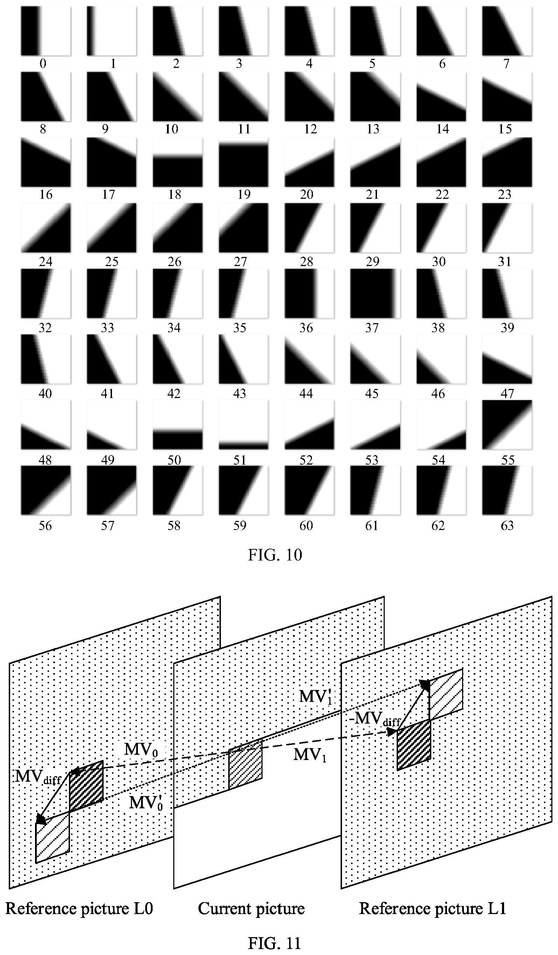

FIG. 10 is a schematic diagram illustrating weights of 64 modes in GPM mode in VVC on square blocks. As illustrated in FIG. 10, black represents that a weight value of a corresponding position in the first prediction block is 0%, white represents that a weight value of a corresponding position in the first prediction block is 100%, and a gray region represents that a weight value of a corresponding position in the first prediction block is a certain value greater than 0% and less than 100%, depending on the shade of gray. A weight value of a corresponding position in the second reference block is 100% minus the weight value of the corresponding position in the first reference block.

The GPM may be considered as a prediction mode or a prediction method, because it ultimately generates a prediction block. It may also be considered that the GPM is a "partitioning" mode, which simulates the partitioning of prediction block and sort of implements PU partition, without actual physical partitioning. The first prediction block and the second prediction block used in the above GPM may be prediction blocks generated by intra prediction, inter unidirectional prediction, or inter bi-directional prediction.

It can also be understood that a bit rate for the general consumer-type video is limited, so video compression typically seeks a trade-off between bitstream overhead and distortion. Taking block partition as an example, for the same content, within a certain range, finer partition entails greater overhead but less distortion, while coarser partition involves smaller overhead but greater distortion. Taking the encoding of the motion information as an example, for the same content, within a certain range, more accurate motion information entails greater overhead but smaller distortion, while coarser motion information involves smaller overhead but greater distortion. Some decoder-side methods utilize information available at the decoder to perform processing and calculations without incurring additional overhead, to improve motion information, enhance prediction effect and reduce distortion. Not incurring overhead means there is no instruction from the encoder based on an original picture, it is an automatic process based on obtainable information. Two typical decoder-side methods in VVC are decoder-side motion vector refinement (DMVR) and bi-directional optical flow (BDOF), which will be described in detail below.

In one possible implementation, for DMVR, one condition for triggering the DMVR in VVC is that two reference pictures of the current block are one preceding and one following the current picture respectively, and distances between the two reference pictures and the current picture are equal. Another triggering condition is that a current CU uses an entire-block merge mode (including skip), where the entire-block excludes the subblock-based merge, such as the SbTMVP or the affine merge. This is because a motion vector in the merge mode tends to be insufficiently precise. There are other conditions that will not be repeated herein. The DMVR in VVC employs bilateral matching (BM), which calculates the matching cost for the reference blocks on both sides, e.g., the sum of absolute difference (SAD). The DMVR searches for matching costs of MVs around an original MV, when moving, MVs of two reference pictures move in a mirrored manner, that is, based on their respective original MVs, one MV moves $MV_{diff}$ while the other moves $-MV_{diff}$, which is illustrated in FIG. 11. In FIG. 11, the two reference pictures include reference picture L0 (refPic in ListL0) and reference picture L1 (refPic in ListL1). Fractional-pel search is also supported, so the DMVR may find an MV with higher precision than the original MV. The search follows certain rules, generally first seraching for integer-pel MVs within a certain range to find the one with the minimum matching cost, and then performing the fractional-pel MV based on that integer-pel MV. If an MV with a smaller matching cost than the original MV is found, the MV with the smaller matching cost is used for motion compensation prediction. Theoretically, the refined MV from DMVR may be stored for use by the neighboring blocks. For example, when constructing a merge candidate list for the current block, if DMVR refines MVs for the neighboring blocks, using the refined MVs for merge candidate list construction could achieve better compression effect. However, due to hardware implementation considerations, VVC does not adopt this approach.

DMVR may operates at the subblock level. In fact, in VVC, if a block has more than 16 samples in the horizontal direction or vertical direction, the block will be partitioned into subblock with a size of 16 samples. On one hand, this is based on the consideration of hardware implementation complexity, because the DMVR needs to search at the decoder side, and limiting the subblock size may reduce the cost of the buffer. On the other hand, partitioning into subblocks for processing provides greater flexibility, allowing each subblock to refine the MV individually, which achieves the effect of improving partition precision to a certain extent and also improves the compression efficiency.

In another possible implementation, regarding BDOF, the BDOF is also a typical decoder-side method. As its name suggests, the BDOF improves MVs and predictions based on an optical flow principle. Optical flow is instantaneous velocity of sample motion of a spatially moving object on an observation imaging plane. There are some basic assumptions for the optical flow, such as constant brightness, that is, when the same object moves between different pictures, its brightness remains unchanged. Another assumption is temporal continuity or small motion, that is, the change in time does not cause a drastic change in the target's position.

One condition for triggering the BDOF in VVC is that two reference pictures of the current block are one preceding and one following the current picture respectively, and distances between the two reference pictures and the current picture are equal. In VVC, for each $4\times4$ subblock, the BDOF derives a motion vector offset $(v_x, v_y)$, which is calculated by minimizing a difference between prediction values in two directions. The motion vector offset is also used for adjusting a prediction value in a corresponding subblock. The derivation process is as follows:

First, gradients $\frac{\partial I^{(k)}}{\partial x}(i,j)$ and $\frac{\partial I^{(k)}}{\partial y}(i,j)$ (where k=0, 1) of two prediction blocks in the horizontal direction and the vertical direction are calculated as follows:

$$\frac{\partial I^{(k)}}{\partial x}(i,j) = \left( (I^{(k)}(i+1,j) \gg shift1) - (I^{(k)}(i-1,j) \gg shift1) \right) \tag{3}$$

$$\frac{\partial I^{(k)}}{\partial y}(i,j) = \left( (I^{(k)}(i,j+1) \gg shift1) - (I^{(k)}(i,j-1) \gg shift1) \right) \tag{4}$$

Where $I^{(k)}(i,j)$ is a prediction value at a coordinate (i,j) of a reference picture list $k$, where $k = 0, 1, shift1$ is calculated based on the bit depth bitDepth of luma, where $shift1 = \max(6, bitDepth-6)$.

Next, the specific calculation of $S_1$, $S_2$, $S_3$, $S_5$; and $S_6$ are as follows:

$$S_1 = \sum_{(i,j)\in\Omega} Abs(\psi_x(i,j)) \tag{5}$$

$$S_2 = \sum_{(i,j)\in\Omega} \psi_x(i,j) \cdot Sign(\psi_y(i,j)) \tag{6}$$

$$S_3 = \sum_{(i,j)\in\Omega} \theta(i,j) \cdot Sign(\psi_x(i,j)) \tag{7}$$

$$S_5 = \sum_{(i,j)\in\Omega} Abs(\psi_y(i,j)) \tag{8}$$

$$S_6 = \sum_{(i,j)\in\Omega} \theta(i,j) \cdot Sign(\psi_y(i,j)) \tag{9}$$

Where

$$\psi_x(i,j) = \left(\frac{\partial I^{(1)}}{\partial x}(i,j) + \frac{\partial I^{(0)}}{\partial x}(i,j)\right) \gg n_a \tag{10}$$

$$\psi_y(i,j) = \left(\frac{\partial I^{(1)}}{\partial y}(i,j) + \frac{\partial I^{(0)}}{\partial y}(i,j)\right) \gg n_a \tag{11}$$

$$\theta(i,j) = \left(I^{(1)}(i,j) \gg n_b\right) - \left(I^{(0)}(i,j) \gg n_b\right) \tag{12}$$

$\Omega$ is a 6×6 window around a 4×4 current subblock, $n_a$ is equal to min(1, bitDepth - 11), and $n_b$ is equal to min(4, bitDepth - 8).

Then, the motion vector offset ($v_x$, $v_y$) is calculated as follows:

$$v_x = S_1 > 0?\, clip3\left(-th'_{BIO}, th'_{BIO}, -\left((S_3 \cdot 2^{n_b-n_a}) \gg \lfloor \log_2 S_1 \rfloor\right)\right):0 \tag{13}$$

$$v_y = S_5 > 0?\, clip3\left(-th'_{BIO}, th'_{BIO}, -\left(\left(S_6 \cdot 2^{n_b-n_a} - \left((v_x S_{2,m}) \ll n_{S_2} + v_x S_{2,s}\right)/2\right) \gg \lfloor \log_2 S_5 \rfloor\right)\right):0 \tag{14}$$

Where $S_{2,m} = S_2 \gg n_{S2}$, $S_{2,s} = S_2 \& (2^{n_{S_2}} - 1)$, $th'_{BIO} = 2^{\max(5,BD-7)}$, $\lfloor \cdot \rfloor$ represents the floor operation, $n_{S2} = 12$, and BD is the bit depth (bitDepth).

Then, according to the motion vector offset and gradient, each prediction value for the 4×4 subblock is adjusted as follows:

$$b(x,y) = rnd\left(\left(v_x\left(\frac{\partial I^{(1)}(x,y)}{\partial x} - \frac{\partial I^{(0)}(x,y)}{\partial x}\right) + v_y\left(\frac{\partial I^{(1)}(x,y)}{\partial y} - \frac{\partial I^{(0)}(x,y)}{\partial y}\right) + 1\right)/2\right) \tag{15}$$

Finally, a prediction value derived by BDOF is calculated as follows:

$$pred_{BDOF}(x,y) = \left(I^{(0)}(x,y) + I^{(1)}(x,y) + b(x,y) + o_{offset}\right) \gg shift \tag{16}$$

Where $o_{offset}$ and $shift$ are calculated based on the bit depth of luma, $n_a$, $n_b$, and $shift$ are all processing to reduce the bit width during the calculation.

In this way, the motion vector offset in BDOF may achieved with high accuracy, to enable the prediction to be more accurate, and the subblock-based processing also improves flexibility, these two aspects are similar to DMVR.

It can also be understood that both DMVR and BDOF have the effect of refining the motion vector. DMVR is based on block matching, and BDOF is based on the optical flow principle. They may be used in combination. For example, it may be referred to as multi-pass decoder-side motion vector refinement (MDMVR).

The first step is motion vector refinement based on bi-directional matching on the entire block. The second step is motion vector refinement based on bi-directional matching on subblocks, and the size of a subblock for this step may be 16×16. The third step is motion vector refinement based on bi-directional optical flow on subblocks, and the size of a subblock for this step may be 8×8. At present, on this basis, more steps may be included, such as a fourth step of bi-directional optical flow-based motion vector refinement on 4×4 subblocks. Alternatively, there may be another step of bi-directional optical flow-based motion vector refinement on the per-sample basis.

It can also be understood that the template matching (TM) method was initially used in inter prediction, which uses some surrounding regions of the current block as templates based on the correlation between neighboring samples. When the current block is encoded or decoded, according to the encoding order, its left and top regions have already been encoded or decoded. Certainly, when implementing with the existing hardware decoder, it cannot be always guaranteed that the left and top regions of the current block are completely decoded when starting to decode the current block. Of course, the block mentioned here refers to an inter block. For example, in HEVC, in the generation of a prediction block for an inter-coded block, neighboring reconstructed samples are not required; thus, the prediction process for inter blocks can be performed in parallel. However, the intra-coded block definitely needs the reconstructed samples at its left and top sides as reference samples. Theoretically, the left and top regions are obtainable, that is, this may be achieved with corresponding adjustments in hardware design. In contrast, at present, the right and bottom regions are unobtainable according to the encoding order in the existing standard such as VVC.

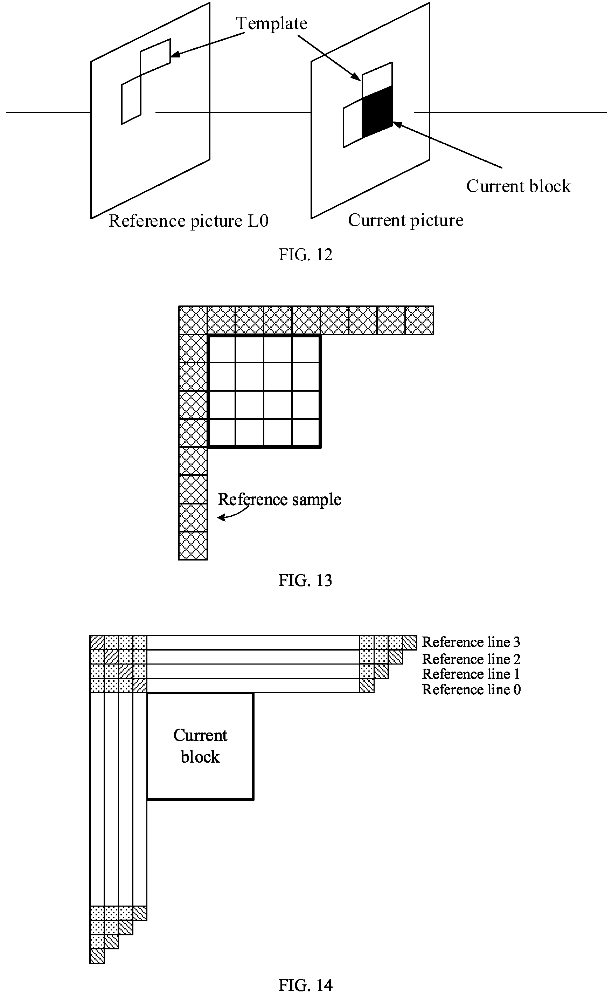

As illustrated in FIG. 12, rectangular regions on the left and top sides of the current block are set as templates. The height of the template portion on the left is generally the same as the height of the current block, and the width of the template portion on the top side is generally the same as the width of the current block, although they may also differ. The optimal matching position for the template is searched in reference picture L0 to determine the motion information or motion vector for the current block. This process can be roughly described as searching in a certain reference picture from an initial position and within a certain search range around it. Search rules, such as the search range and search step, can be predefined. Each time when the searching moves to a position, the matching degree between a template corresponding to the position and a template around the current block is calculated. The matching degree may be measured by a distortion cost, such as the sum of absolute difference (SAD), sum of absolute transformed difference (SATD), or mean-square error (MSE). Generally, the Hadamard transform is used for the SATD, and the smaller the value of the SAD, SATD, or MSE, the higher the matching degree. A prediction block of the template at the position and a reconstructed block of the template around the current block are used to calculate the cost. In addition to the integer-pel position search, the fractional-pel position search may also be performed, and the motion information of the current block is determined according to a position with the highest matching degree found during the search. According to the correlation between neighboring samples, motion information appropriate for the template may also be motion information appropriate for the current block. Certainly, the template matching method may not be applicable to all blocks. Therefore, some methods may be used to determine whether the current block use the template matching method, such as using a control flag to indicate whether the template matching method is applied to the current block. One name for the template matching method is decoder-side motion vector derivation (DMVD). Both the encoder and the decoder can use the template to perform search, thereby deriving motion information or finding better motion information based on the original motion information. It does not involve transmitting the specific motion vector or motion vector difference. Instead, both the encoder and decoder perform the search following the same rules to ensure consistency between encoding and decoding. The template matching method may improve compression performance, but it requires the decoder to also perform the "search", which introduces a certain level of complexity at the decoder side.

(2) Intra prediction

There is strong spatial correlation between adjacent portions or neighboring samples within a picture. The intra prediction is a prediction method that uses spatial correlation between the already encoded or decoded samples around the current block and the samples in the current block. For example, as illustrated in FIG. 13, 4×4 white-filled samples represent the current block. Grid-filled samples in the left column and top row adjacent to the current block serve as reference samples of the current block, which are used in the intra prediction for the prediction of the current block. All these reference samples may be available, meaning they all have been encoded or decoded. Alternatively, some may be unavailable. For example, if the current block is at the leftmost edge of the entire picture, reference samples on the left side of the current block are unavailable. Alternatively, when the current block is encoded or decoded, the bottom-left portion of the current block has not been encoded or decoded, making reference samples on the bottom-left side unavailable as well. In a case where the reference samples are unavailable, available reference samples, certain values, or specific methods may be used for padding, or no padding is applied.

It should also be noted that the multiple reference line (MRL) intra prediction method can use more reference samples to improve coding efficiency. As illustrated in FIG. 14, it is a schematic diagram illustrating the use of 4 reference lines/columns.

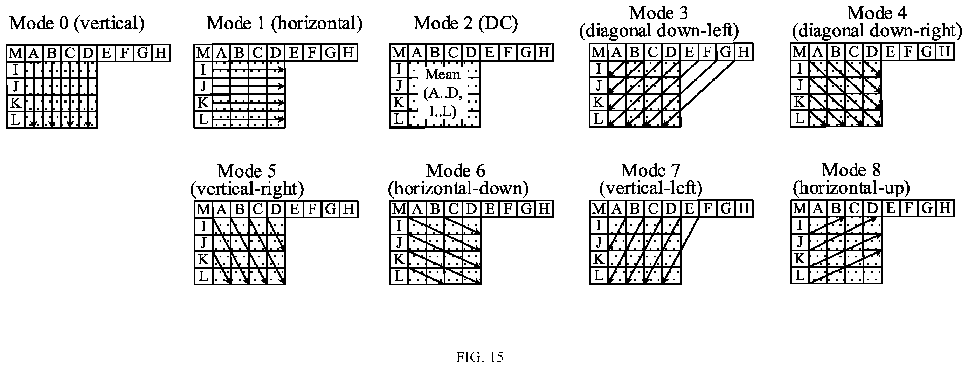

There are multiple prediction modes for the intra prediction. As illustrated in FIG. 15, these are 9 modes for intra prediction of 4×4 block in H.264. In Mode 0 (a vertical mode), samples located above the current block are copied vertically downward into the current block to act as prediction values. In Mode 1 (a horizontal mode), samples located at the left of the current block are copied horizontally into the current block to act as prediction values. In Mode 2 (a DC mode), the average of 8 points A~D and I~L is determined as the prediction value for all points. In Modes 3~8, reference samples are copied to corresponding positions in the current block along a certain angle. Since some positions in the current block may not directly correspond to reference samples, it may be necessary to use a weighted average value of the reference samples, or in other words, interpolated fractional-pel of the reference samples.

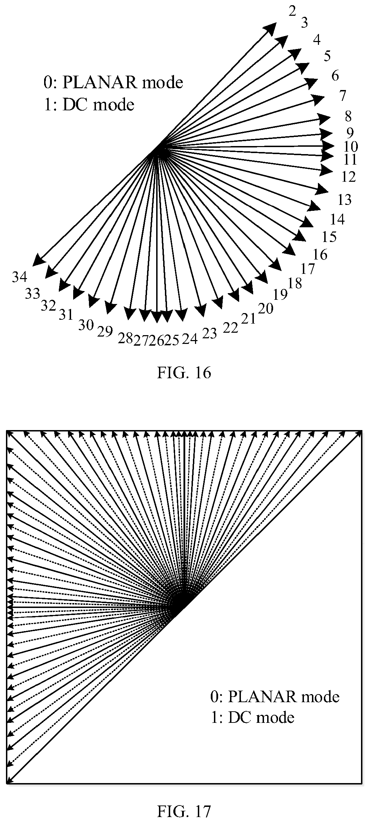

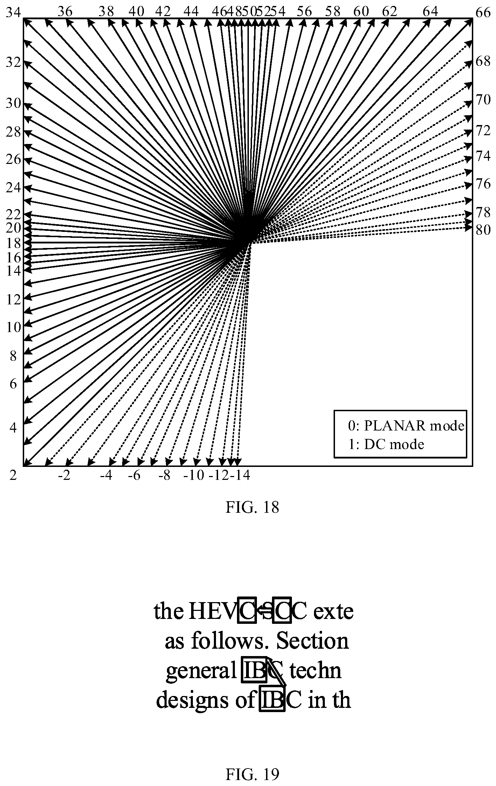

In addition, there are modes such as PLANE and PLANAR. With development of technology and larger block sizes, there are more and more angle prediction modes. For example, HEVC uses 35 intra prediction modes including PLANAR, DC, and 33 angular modes, as illustrated in FIG. 16 for details. VVC uses 67 intra prediction modes including PLANAR, DC, and 65 anglular modes as illustrated in FIG. 17 for details. Certainly, besides the above 67 modes, VVC also provides wide-angle intra prediction modes for rectangular blocks with significantly different heights and widths. As indicated by dotted lines in FIG. 18, the two ranges -14 to -1 and 67 to 80 replace some conventional modes, as illustrated in FIG. 18 for details.

It can also be understood that for intra block copy (IBC), the IBC can significantly improve the compression efficiency of screen content coding (SCC), and thus the IBC is used for screen content coding from the HEVC to the VVC. Different from camera-captured content, the screen content is generated by a computer, contains no noise, includes text, computer graphics, etc., and has sharp boundaries. There is a large amount of repetitive content in the screen content, as illustrated in FIG. 19.

In the embodiments of the present application, it can be considered that IBC applies the method of inter prediction to the intra prediction. In the inter prediction, the reference block from the reference picture is used to generate the prediction block of the current block, where the reference picture is not the current picture. In contrast, IBC searches a reference block from the already encoded/decoded or reconstructed portions of the current picture to generate the prediction block of the current block. The IBC may also be referred to as intra picture block compensation or current picture referencing (CPR).

In the IBC, a block vector (BV) may be used to represent a positional difference between the current block and the reference block, which is similar to the MV in inter prediction. The encoder determines the best matching block of the current block by using block matching method within a search range and encodes the BV. There are various methods for encoding the BV, such as the merge mode, which has similarities with the inter prediction, and will not be repeated here.

The IBC may be considered as an intra prediction method or as another type of prediction method independent of both intra prediction and inter prediction. The IBC has high efficiency in screen content coding, and can also improve compression efficiency for a natural sequence captured by a camera.

Intra template matching prediction (Intra TMP) in ECM10 may be considered a special IBC. The Intra TMP also searches a reference block from the encoded or decoded portion of the current picture to generate a prediction block of the current block. The Intra TMP uses reconstructed samples within a certain range on the left side and top side of the current block as the template of the current block. Every time a BV is searched, reconstructed samples within a certain range on the left side and top side of a reference block of the same size as the current block corresponding to the BV are used as the template of the reference block. The matching cost between the template of the current block and the template of the reference block is calculated, and the reference block is determined based on the matching cost for the generation of the prediction block.

It can also be understood that, for decoder-side intra mode derivation (DIMD), DIMD uses reconstructed samples on left side and top side of the current block to derive a prediction mode. However, instead of performing prediction on a template, DIMID analyzes gradients of reconstructed samples.

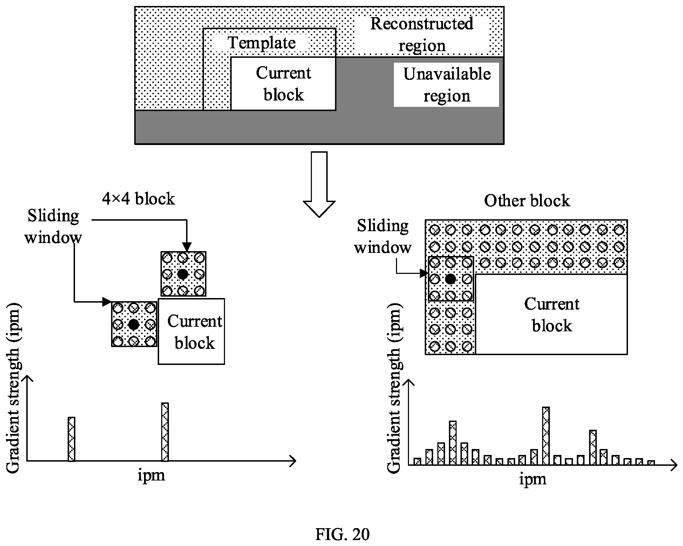

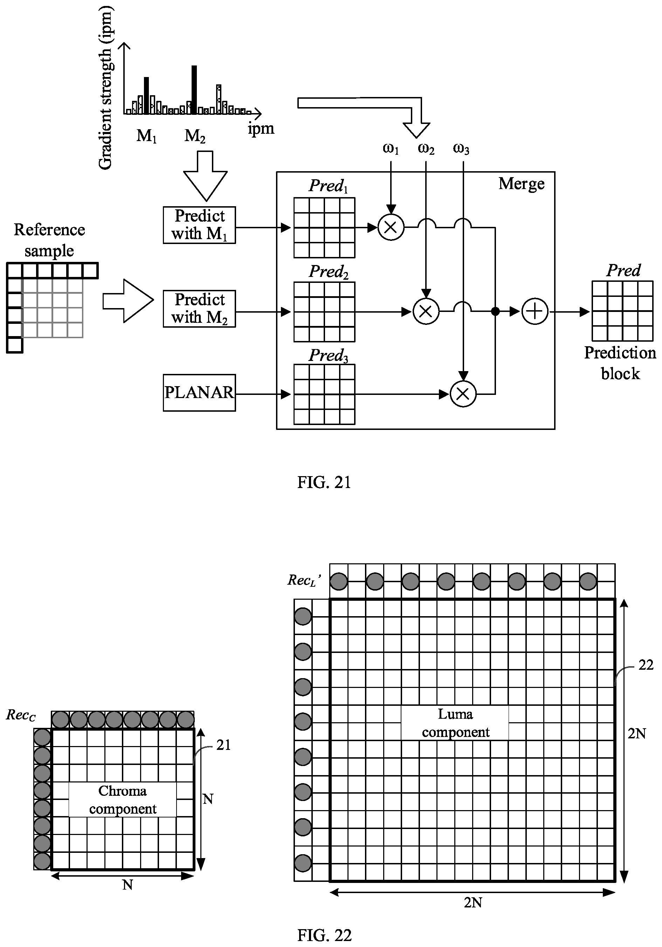

As illustrated in FIG. 20, DIMD analyzes the gradient of the black point, such as the horizontal gradient and vertical gradient, and adapts an intra prediction mode based on its gradient. Analyzing all points that need to be checked can yield a result similar to the histogram below, which is a statistic of the number of points matched by each intra prediction mode. Certainly, the histogram is only used to aid understanding, and there are various simple forms in practical implementation. The current DIMD selects two intra prediction modes with the highest counts in the histogram, plus the PLANAR mode, resulting in three intra prediction modes. The prediction values of these three intra prediction modes are weighted, with the weights related to the analysis results. For example, as illustrated in FIG. 21, the three intra prediction modes include Mode M1, Mode M2, and the PLANAR mode. The prediction values for these three intra prediction modes are set to $Pred_1$, $Pred_2$, and $Pred_3$, respectively, and weight values for these three intra prediction modes are set to $w_1$, $w_2$, and $w_3$, respectively. The specific calculation formulas are as follows:

$$w_1 = \frac{43}{64} \times \frac{ampl(M_1)}{ampl(M_1) + ampl(M_2)} \qquad (17)$$

$$w_2 = \frac{43}{64} \times \frac{ampl(M_2)}{ampl(M_1)+ampl(M_2)} \qquad (18)$$

$$w_3 = \frac{21}{64} \qquad (19)$$

The final prediction block can be expressed as follows:

$$Pred = \sum_{i=1}^{3} w_i \times Pred_i \qquad (20)$$

In summary, DIMD uses gradient analysis of reconstructed samples to select the intra prediction mode, and weights the two intra prediction modes and also PLANAR according to the analysis result. The advantage of DIMD is that if the current block selects the DIMD mode, it is unnecessary to indicate which specific intra prediction mode is used,. Instead, the decoder derives the intra prediction mode according to the above process, which saves overhead to a certain extent.

It can also be understood that for cross-component prediction (CCP), due to the strong correlation between different components in the same spatial location, video coding technology can use this correlation to improve compression efficiency. In some cases, the first component in the same spatial location is encoded/decoded first, followed by the second component and the third component, which allows the second component and the third component to use some information of the first component. For example, in the YUV format, samples of U and V can be predicted with reconstructed samples of Y at a corresponding position. If it is in YUV 4: 2: 0 format, sample positions of U and V do not have a one-to-one correspondence with that of Y, and corresponding reconstructed samples of Y may be determined, through a method like downsampling and then are used for prediction.

A typical example of CCP in VVC is the cross-component linear model (CCLM). Other cross-component prediction technologies in ECM include multi-model CCLM (MM-CCLM), convolutional cross-component model (CCCM), multi-model CCCM (MM-CCCM), gradient linear model (GLM), and inter-CCCM. There are other derived technologies not listed exhaustively here. These are all technologies in which the second component or the third color component uses some information of the first color component, such as reconstructed values, for prediction. The cross-component prediction technologies can be applied to both intra-coded blocks and inter-coded blocks. For example, the inter-CCCM is used for inter-coded blocks.

(1) Cross-component linear model (CCLM)

CCLM, as its name implies, is a technology that uses a linear model of the first color component and a linear model of the second color component or the third color component for prediction. Specifically, this is expressed as follows:

$$\mathrm{pred}_C(i, j) = \alpha \cdot \mathrm{rec_L}'(i, j) + \beta \qquad (21)$$

Where $\mathrm{pred}_C(i,j)$ denotes a prediction value of a chroma sample at position (i, j), and $\mathrm{rec_L}'(i,j)$ denotes a reconstructed value of a down-sampled luma sample at the position. Model parameters (a and $\beta$) of CCLM are derived from the neighboring down-sampled luma samples and chroma samples of the current block. As an example, as illustrated in FIG. 22, a sampling diagram of the neighboring reference values of the luma component and the chroma component of the current block is shown. In figure (a), a bolded larger box is used to highlight the chroma block 21, while gray solid circles are used to indicate the neighboring reference values of the chroma block 21. In figure (b), a bolded larger box is used to highlight the luma block 22, while gray solid circles are used to indicate the neighboring reference values of the luma block 22. The chroma block 21 has a size of N×N, and the luma block 22 has a size of 2N×2N. Here, the neighboring reference values of the chroma block 21 and the luma block 22 are both used to derive the model parameters $\alpha$ and $\beta$.

The basic principle is to derive a linear model by using the neighboring luma and chroma samples of the current block, then apply the linear model to the current block to determine the chroma prediction value according to the reconstructed luma value and the linear model.

(2) Multi-model CCLM

MM-CCLM is an extension of CCLM. While CCLM uses only a single linear model for the current block, MM-CCLM, as the name suggests, uses multiple linear models, specifically, two linear models in ECM-10. To derive the two linear models, the neighboring luma samples on the left side and top side of the current block used for deriving the linear models are classified into two groups, and the grouping threshold value is the median value of these luma sample values.

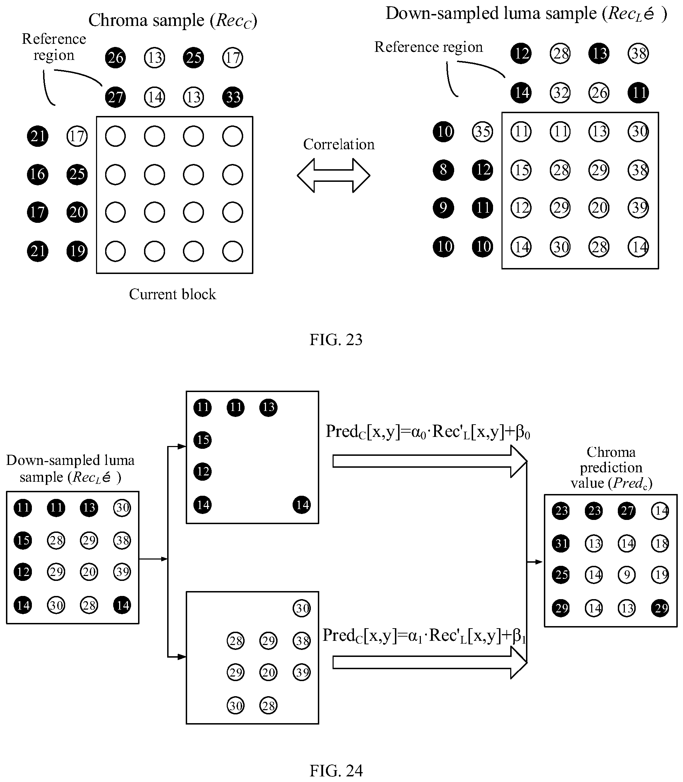

During the prediction of the current block, the luma samples of the current block are classified into two groups according to the threshold value, and the respective model is applied to each group for prediction. FIG. 23 is a schematic diagram illustrating the grouping for MM-CCLM, and FIG. 24 a schematic diagram illustrating the MM-CCLM prediction.

(3) Convolutional cross-component model (CCCM)

Similar to CCLM, CCCM also derives a cross-component model based on the already reconstructed portions on the left and above of the current block. However, CCCM uses a larger reconstructed region and can derive a non-linear model. Another difference is that CCLM uses a down-sampled luma value to predict a chroma value, whereas CCCM use reconstructed luma values at the position corresponding to the chroma sample as well as the reconstructed luma values at its surrounding top, bottom, left and right positions.

Specifically, CCCM uses a 7-tap convolutional filter, which includes 5 spatially neighboring samples: C (center) is a luma sample corresponding to a current chroma sample, N (north) is a luma sample above C, S (south) is a luma sample below C, W (west) is a luma sample to the left of C, and E (east) is a luma sample to the right of C. There is also a non-linear term P, where $P = ( C \times C + \text{midVal} ) >> \text{bitDepth}$, where midVal denotes the median value, and bitDepth is the bit width. For the 10-bit case, $P = ( C \times C + 512 ) >> 10$. Additionally, there is an offset term B, which is set to the median value-512 for the 10-bit case. A prediction value of the chroma sample is represented as: $\text{predChromaVal} = C_0 C + C_1 N + C_2 S + C_3 E + C_4 W + C_5 P + C_6 B$.

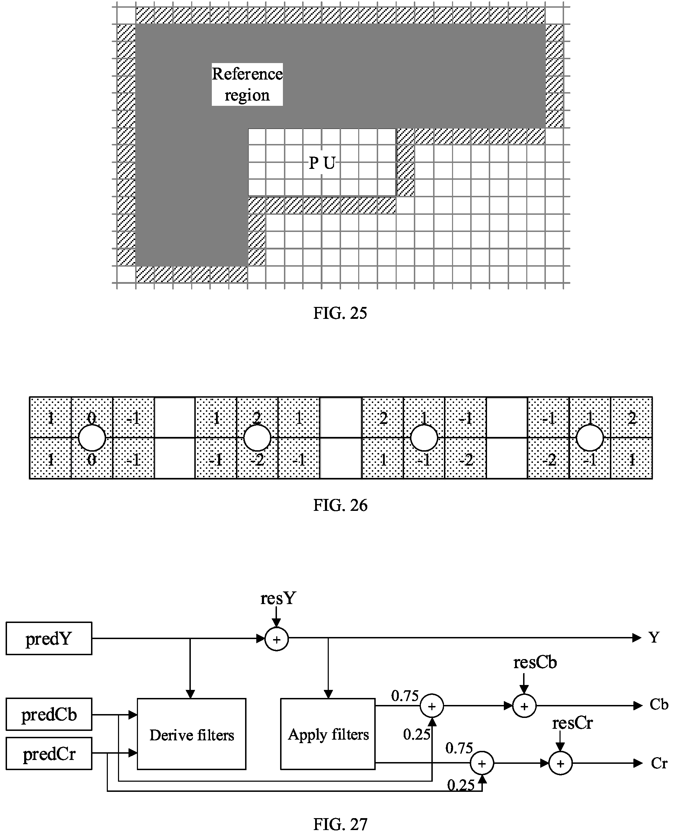

To determine $C_o$, $C_1$, $C_2$, $C_3$, $C_4$, $C_s$, and $C_6$, CCCM applies the same model to predict chroma in the reference region illustrated in FIG. 25 and compares it with reconstructed chroma values to solve for $C_0$, $C_1$, $C_2$, $C_3$, $C_4$, $C_5$ and $C_6$ that minimize the mean squared error.

(4) Multi-model convolution cross-component model (MM-CCCM)

Similar to MM-CCLM, multiple models are applied to the current block, where two models in ECM-10 are used. The derivation method also uses a threshold value to classify the reconstructed luma samples and the luma samples of the current block into two groups, from which CCCM models are separately derived and predictions are made separately, and prediction values form a prediction block.

(5) Gradient linear model (GLM)

GLM is a method for predicting chroma based on a luma gradient. There are two GLM modes: one is a 2-parameter GLM, and the other is a 3-parameter GLM; where

the formula for the 2-parameter GLM is: $\text{pred}_C(i, j) = \alpha \cdot \text{grad}_L (i, j) + \beta$; and

the formula for the 3-parameter GLM is: $\text{pred}_C(i, j) = \alpha \cdot \text{grad}_L(i, j) + \alpha_1 \cdot \text{rec}_L'(i, j) + \beta$.

Here, the 2-parameter GLM essentially replaces the down-sampled reconstructed luma sample values in CCLM with the luma gradient. In the 3-parameter GLM, the luma gradient is added on the basis of CCLM. There are four calculation methods for the luma gradient as illustrated in FIG. 26, in which filter squares correspond to luma samples, and circles correspond to chroma samples. This is a set of filters designed for the YUV 4:2:0 format.

(6) Inter-CCCM

Intra prediction and inter prediction are different. The intra prediction uses reconstructed samples around the current block to predict the interior of the current block, while the inter prediction uses pictures of the same object at different moments for prediction. For the inter prediction, the most basic is translational motion, that is, using a motion vector to find a reference block and using the reference block as a prediction block. Since the same object is found at different moments, reference picture includes the same number of components as the current picture. For a sequence in the YUV format, prediction values for all three components Y, U, and V can be obtained from the reference block. The aforementioned cross-component models, such as the CCLM and the CCCM, generally follow an intra-like approach, that is, using neighboring reconstructed samples to derive the model, while inter-CCCM uses the prediction block of original inter prediction to derive the cross-component model (filter coefficients), as illustrated in FIG. 27. Here, resY, resCb, and resCr represent a luma residual value, a blue chroma residual value, and a red chroma residual value, respectively. Then, by performing an addition operation in combination with the corresponding prediction values, the reconstructed luma value Y, reconstructed blue chroma value Cb, and reconstructed red chroma value Cr can be obtained. In other words, after the luma is reconstructed, the derived model (filter coefficients) is applied to the reconstructed luma value to obtain a second chroma prediction value, and the original prediction value and the second prediction value obtained by the inter-CCCM are then weighted to form a new prediction value. Inter-CCCM transforms the reconstructed values containing the luma residual into chroma prediction through the model, thereby improving compression efficiency.

Furthermore, relevant introductions regarding the transform technology will be provided below.

During encoding, according to the current general hybrid coding architecture, the prediction is first performed. The prediction uses spatial or temporal correlation to obtain a picture that is the same as or similar to the current block. For a block, it is possible that the prediction block and the current block are exactly the same, but it is difficult to guarantee this for all blocks in a video, especially for a natural video, or in other words, a video captured by a camera. It is difficult to perfectly predict irregular motion, deformation, occlusion, and changes in illumination in the video. Therefore, in the hybrid coding architecture, a predicted picture is subtracted from an original picture of the current block to obtain a residual picture, or the prediction block is subtracted from the current block to obtain a residual block. The residual block is typically much simpler than the original picture, so prediction can significantly improve the compression efficiency. The residual block is not directly encoded, but a transform is typically applied on it first. Transform converts the residual picture from the spatial domain to the frequency domain so as to remove the correlation in the residual picture. After the residual picture is transformed into the frequency domain, since the most of the energy is concentrated in the low frequency region, and the most of the transformed non-zero coefficients are concentrated in the top-left corner. Next, quantization is applied for further compression. Moreover, since the human eye is less sensitive to high frequencies, larger quantization step sizes can be used in high frequency regions.

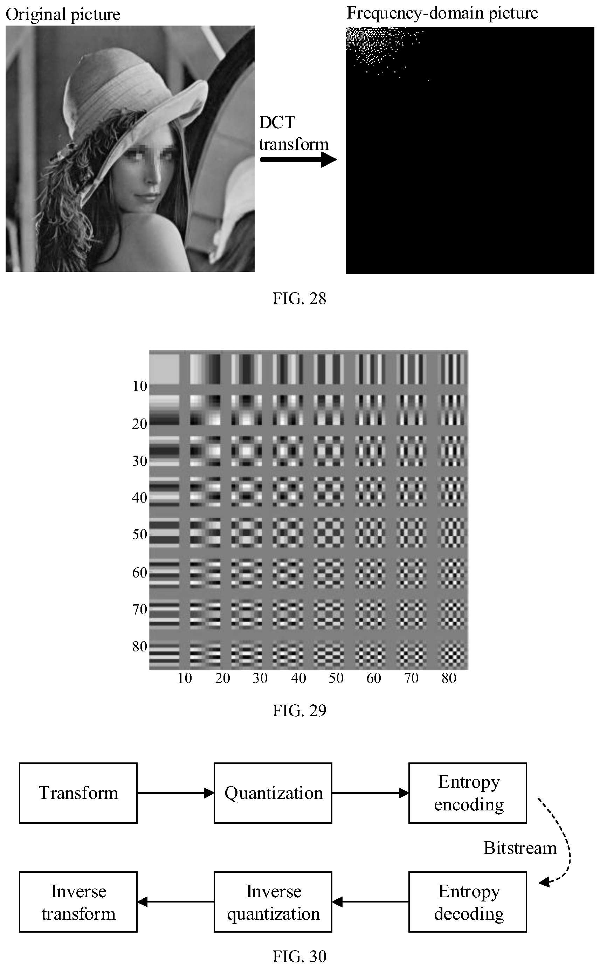

FIG. 28 is a schematic diagram illustrating DCT transform. As illustrated in FIG. 28, after the DCT transform, non-zero coefficients exist only in the top-left region of the original picture. Certainly, the DCT transform is performed on the entire picture in this example, whereas in video encoding/decoding, a picture is partitioned into blocks for processing, so the transform is also performed on a block basis.

Transform is very useful in compression of general video, but not all blocks must undergo a transform. In some cases, transform is not as effective as compression without transform. Therefore, in some standards such as VVC, the encoder can choose whether to apply a transform to the current block. Here, DCT2 (DCT-II) is the most commonly used transform in video compression standards, and its basis picture for transform is illustrated in FIG. 29.

In addition, DCT8 (DCT-VIII) and DST7 (DST-VII) may also be used in VVC. The basic formulas for these transforms are listed in Table 3, which shows the basic transform formulas for the N-point input DCT2, DCT8, and DST7.

Table 3

| Transform Type | Basis function $T_i(j)$, $i, j = 0, 1,..., N\text{-}1$ |
|---|---|
| DCT-II | $$T_i(j) = \omega_0 \cdot \sqrt{\frac{2}{N}} \cdot \cos\left(\frac{\pi \cdot i \cdot (2j+1)}{2N}\right)$$ $$\text{where, } \omega_0 = \begin{cases} \sqrt{\frac{2}{N}} & i = 0 \\ 1 & i \neq 0 \end{cases}$$ |
| DCT-VIII | $$T_i(j) = \sqrt{\frac{4}{2N+1}} \cdot \cos\left(\frac{\pi \cdot (2i+1) \cdot (2j+1)}{4N+2}\right)$$ |
| DST-VII | $$T_i(j) = \sqrt{\frac{4}{2N+1}} \cdot \sin\left(\frac{\pi \cdot (2i+1) \cdot (j+1)}{2N+1}\right)$$ |

Since pictures are all two-dimensional, directly performing two-dimensional transforms will cause unacceptable computating amount and memory cost for the hardware capabilities at that time. Therefore, the above DCT-II, DCT-VIII and DST-VII transforms adopted in the standard are all implemented in two steps by splitting them into one-dimensional transform in the horizontal direction and one-dimensional transform in the vertical direction. For example, the transform in the horizontal direction is performed first and then the transform in the vertical direction is performed, or the transform in the vertical direction is performed first and then the transform in the horizontal direction is performed.

(1) Multiple transform selection (MTS)

VVC supports transform kernels such as DCT2, DCT8, and DST7. For a block, the encoder can select an appropriate transform kernel and signal an index in a bitstream, and the decoder determines a transform kernel for the inverse transform according to the index. Different transform kernels may be selected for the horizontal direction and the vertical direction, such as DCT8 for the horizontal direction and DST7 for the vertical direction. This technology is generally referred to as MTS.

(2) Low frequency non-separable transform (LFNST)

The transform methods described above are effective for textures oriented along horizontal and vertical directions, but they perform less effective for diagonal textures. Indeed, horizontal textures and vertical textures are the most common, so the above transform methods are very useful for improving compression efficiency. As the demand for higher compression efficiency continues to grow, if diagonal textures can be handled more effectively, compression efficiency can be further improved.

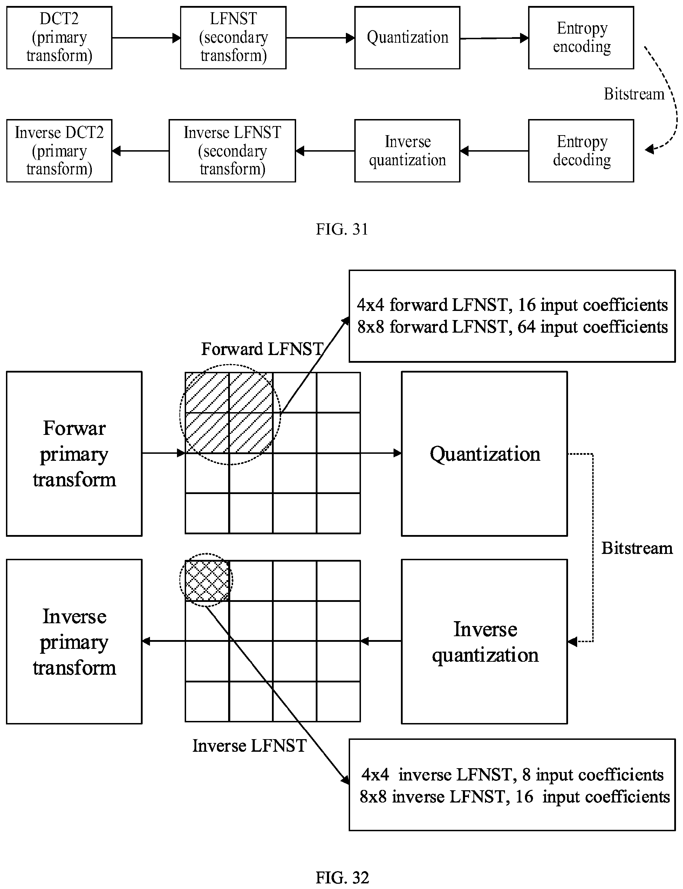

To more effectively handle residuals of diagonal textures, VVC employs the LFNST. The aforementioned transforms such as the DCT2, DCT8, and DST7 are referred to as primary transforms. At the encoder side in VVC, LFNST is applied after the DCT2 transform and before quantization. At the decoder side in VVC, the LFNST is applied after inverse quantization and before the inverse DCT2 transform. Because it is applied on the basis of the DCT2 (the primary transform), the LFNST is a secondary transform. FIG. 30 is a schematic flowchart of encoding/decoding without LFNST (the secondary transform), and FIG. 31 is a schematic flowchart of encoding/decoding with LFNST (the secondary transform). Certainly, at the encoder side, inverse quantization can be performed directly on the stored quantized coefficients without entropy decoding, because entropy encoding is lossless.

FIG. 32 is a schematic flowchart illustrating a detailed encoding/decoding with LFNST (the secondary transform). As illustrated in FIG. 32, at the encoder side, the process begins with a forward primary transform, followed by the LFNST performing a secondary transform on low-frequency coefficients in the top-left corner after the primary transform. For example, for a $4\times4$ LFNST, there are 16 input coefficients, and for an $8\times8$ LFNST, there are 64 input coefficients. The LFNST-transformed coefficients are then quantized, and the quantized coefficients are signalled into the bitstream. At the decoder side, the transform coefficients are obtained by decoding the bitstream and performing inverse quantization. Then, in the inverse LFNST transform, there are 8 input coefficients for a $4\times4$ inverse LFNST and 16 input coefficients for $8\times8$ inverse LFNST. Finally, the inverse primary transform is applied to obtain the residual block.

In other words, at the encoder side, the LFNST performs a secondary transform on the low-frequency coefficients in the top-left corner after the primary transform. The primary transform decorrelates the picture so as to concentrating the energy in the top-left corner. The secondary transform further decorrelates the low-frequency coefficients originating from the primary transform, and the result is visually illustrated in FIG. 32. At the encoder side, 16 coefficients are input to the $4\times4$ LFNST, and 8 coefficients are output; 64 coefficients are input to the $8\times8$ LFNST, and 16 coefficients are output. At the decoder side, 8 coefficients are input to the $4\times4$ inverse LFNST, and 16 coefficients are output; 16 coefficients are input to the $8\times8$ inverse LFNST, and 64 coefficients are output.

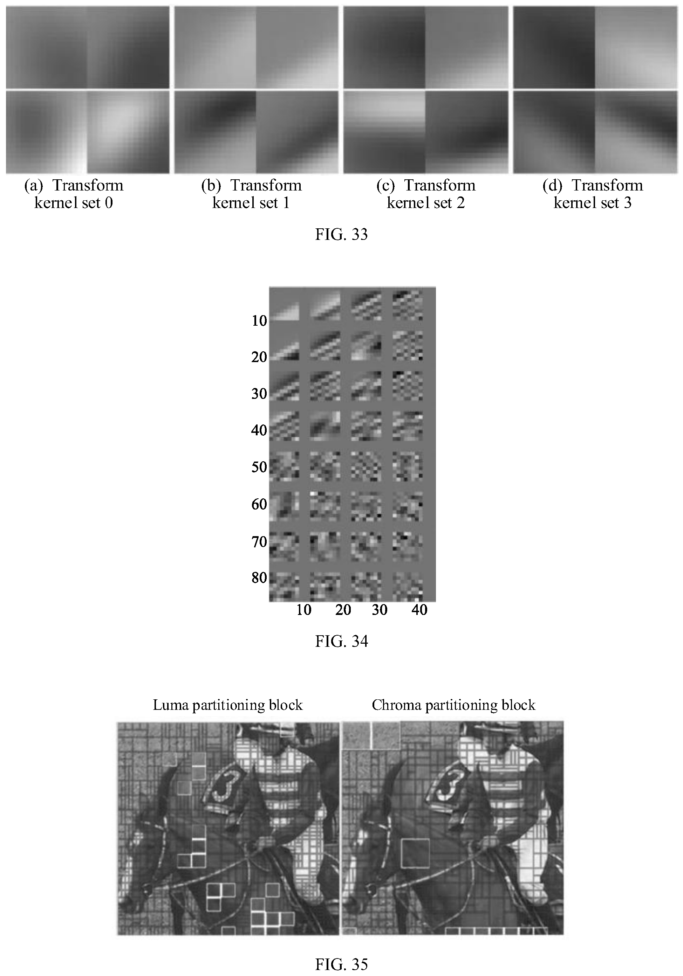

FIG. 33 is a schematic diagram illustrating basis pictures of the LFNST in VVC. As can be seen from FIG. 33, there are some obvious diagonal textures. Besides transform kernels optimized for some diagonal textures, the LFNST also includes transform kernels optimized for smooth gradient textures, such as the transform kernel set 0 of LFNST in VVC.

LFNST is only applied to intra-coded blocks. The angular prediction generates prediction values by extending reference samples into the current block based on a specified angle, which means that the prediction block exhibits obvious directional textures, and the residual of the current block after angular prediction also exhibits obvious angular characteristics in a statistical sence. Therefore, the transform kernel selected for the LFNST may be bound to the intra prediction mode. That is, once the intra prediction mode is determined, the LFNST can only use a set of transform kernels corresponding to the intra prediction mode.

Specifically, the LFNST in VVC has a total of four sets of transform kernels, with two selectable transform kernels per set. Table 4 lists the correspondences between intra prediction modes and transform kernel sets. It is noted that cross-component prediction modes used for chroma intra prediction are modes 81 to 83, but these modes are not available to the luma intra prediction. The transform kernels of LFNST can be transposed to allow one transform kernel set to handle more angles. For example, modes 13 to 23 and 45 to 55 both correspond to transform kernel set 2, however, modes 13 to 23 are modes clearly near horizontal, while modes 45 to 55 are modes clearly near vertical.

Table 4

| IntraPredMode | Tr. set index |
|---|---|
| IntraPredMode < 0 | 1 |

(continued)

| IntraPredMode | Tr. set index |
|---|---|
| 0 <= IntraPredMode <= 1 | 0 |
| 2 <= IntraPredMode <= 12 | 1 |
| 13 <= IntraPredMode <= 23 | 2 |
| 24 <= IntraPredMode <= 44 | 3 |
| 45 <= IntraPredMode <= 55 | 2 |
| 56 <= IntraPredMode<= 80 | 1 |
| 81 <= IntraPredMode<= 83 | 0 |

The LFNST in VVC has a total of four sets of transform kernels, and which set is to be used by LFNST is specified according to the intra prediction mode. This approach leverages the correlation between intra prediction mode and the transform kernels of LFNST, thereby reducing the overhead for signaling the selection of LFNST transform kernels in the bitstream. However, whether the current block uses the LFNST, and if LFNST is applied, whether the first kernel or the second kernel in a set is used, need to be determined according to the bitstream and some conditions.

In the subsequent technological evolution of ECM, LFNST is further extended. LFNST has more transform kernel sets, with 35 sets in ECM. The correspondence between the transform kernel set indexes (LFNST set index) and intra prediction modes (Intra pred. mode) is shown in Table 5. Each transform kernel set is more efficient for textures at the corresponding angle. Here, three transform kernels may be selected for each transform kernel set.

Table 5

| Intra pred. mode | -14 | -13 | -12 | -11 | -10 | -9 | -8 | -7 | -6 | -5 | -4 | -3 | -2 | -1 | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|---|---|---|---|---|---|---|---|---|---|---|---|---|
| LFNST set index | 2 | 2 | 2 | 2 | 2 | 2 | 2 | 2 | 2 | 2 | 2 | 2 | 2 | 2 | 0 | 1 | 2 | 3 | 4 | 5 | 6 | 7 | 8 | 9 | 10 | 11 | 12 | 13 | 14 | 15 | 16 | 17 |
| Intra pred. mode | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| LFNST set index | 18 | 19 | 20 | 21 | 22 | 23 | 24 | 25 | 26 | 27 | 28 | 29 | 30 | 31 | 32 | 33 | 34 | 33 | 32 | 31 | 30 | 29 | 28 | 27 | 26 | 25 | 24 | 23 | 22 | 21 | 20 | 19 |
| Intra pred. mode | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 | 78 | 79 | 80 | |
| LFNST set index | 18 | 17 | 16 | 15 | 14 | 13 | 12 | 11 | 10 | 9 | 8 | 7 | 6 | 5 | 4 | 3 | 2 | 2 | 2 | 2 | 2 | 2 | 2 | 2 | 2 | 2 | 2 | 2 | 2 | 2 | 2 | |

(3) Non-separable primary transform (NSPT)

LFNST is a transform that is non-separable in the horizontal direction and the vertical direction, and the DCT2 may be referred to as a primary transform because there is a secondary transform. In this way, the scheme of applying DCT2 first, followed by LFNST, can be considered a compromise solution between performance and complexity, because directly applying a non-separable primary transform is more efficient, but incurs higher complexity, such as greater computing amount and increased storage requirements for the transform kernels.

In ECM10, NSPT can be applied to some small blocks, while larger blocks still use DCT2+LFNST. Examples of small block sizes include 4×4, 4×8, 8×4, 8×8, 4×16, 16×4, 8×16, 16×8, 8×32, and 32×8. In ECM10, NSPT also matches transform kernel sets based on the intra prediction mode, and for the matching method, reference may be made to the method in LFNST. Each transform kernel set has three selectable transform kernels. For example, FIG. 34 illustrates an 8×8 basis picture of NSPT in ECM10. FIG. 34 corresponds to inter angular prediction mode 7, and it can be seen that it is more efficient for processing textures at corresponding angle. It should be noted that NSPT is only applied to intra-coded blocks.

Furthermore, regarding partitioning techniques, they can be categorized into single tree partitioning and dual tree partitioning. In the single tree, luma and chroma are partitioned together, and one CU includes luma blocks and collocated chroma blocks. In the dual tree, luma and chroma are partitioned separately, and one CU includes only luma blocks or only chroma blocks. HEVC only supports the single tree. The dual tree is introduced in VVC, but P slices and B slices in VVC can only use the single tree, while I slices in VVC can use the dual tree. As illustrated in FIG. 35, luma and chroma are partitioned separately, and it can be seen that luma has a finer partition than chroma. This is because luma has more details than chroma and generally requires higher quality than chroma.

In summary, LFNST and NSPT can be applied to intra-coded blocks or inter-coded blocks. Regarding the related art, in VVC and ECM, MTS/LFNST/NSPT are not applied to the transform of chroma blocks in the single tree partitioning. If the current block is a luma coding unit or a chroma coding unit in intra dual tree partitioning, MTS/LFNST/NSPT can be used. If the current block is in the single tree partitioning, that is, a coding unit has both a luma block and a chroma block, MTS/LFNST/NSPT are only applied to transform of luma blocks and cannot be applied to transform of chroma blocks. In a case where luma blocks use the MTS/LFNST/NSPT, chroma blocks use the default DCT2 transform, which is not conducive to improving the compression efficiency of the chroma component.

Based on this, the embodiments of the present application provide an encoding method. The method includes: determining a mode parameter of a chroma component of a current block; in a case where the mode parameter satisfies a first condition, determining a first transform kernel of the chroma component of the current block; determining a residual block of the chroma component of the current block, and performing transform on the residual block of the chroma component of the current block according to the first transform kernel to determine transform coefficients of the chroma component of the current block; and encoding the transform coefficients of the chroma component of the current block, and signalling the obtained encoded bits into a bitstream. The embodiments of the present application also provide a decoding method. The method includes: determining a mode parameter of a chroma component of a current block; in a case where the mode parameter satisfies a first condition, determining a first transform kernel of the chroma component of the current block; determining transform coefficients of the chroma component of the current block, and performing inverse transform on the transform coefficients of the chroma component of the current block according to the first transform kernel to determine a residual block of the chroma component of the current block.

In this way, at both the encoder side and the decoder side, the mode parameter of the current block is first determined; when the mode parameter satisfies the first condition, the first transform kernel of the chroma component of the current block is determined; and subsequently, a transform is performed on the residual block of the chroma component of the current block according to the first transform kernel. In other words, the determination of the first transform kernel is related to the mode parameter, which enables the application of the MTS/LFNST/NSPT transform to chroma components in single tree partitioning, thereby not only improving compression efficiency, i.e., video encoding and decoding efficiency, but also enhancing encoding and decoding performance.

Various embodiments of the present application will be described in detail with reference to the accompanying drawings.

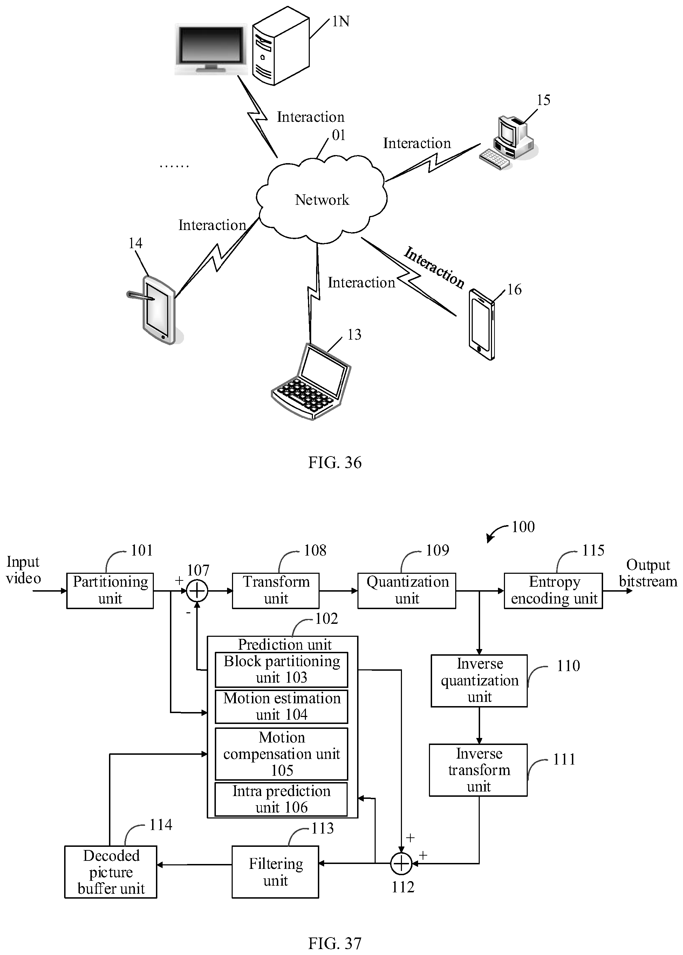

FIG. 36 is a schematic diagram of a network architecture of video encoding and decoding provided in the embodiments of the present application. As illustrated in FIG. 36, the network architecture includes one or more electronic devices 13 to 1N and a communication network 01. The electronic devices 13 to 1N can perform video interaction via the communication network 01. During implementation, the electronic device may be various types of devices with video encoding and decoding capabilities. For example, the electronic device may include a mobile phone, a pad, a personal computer, a personal digital assistant, a navigator, a digital phone, a video phone, a television, a sensor device, a server, which are not limited in the embodiments of the present application.

In the embodiments of the present application, a network architecture of a video encoding and decoding system that includes a decoding method and an encoding method is provided. The decoder or encoder in the embodiments of the present application may be the aforementioned electronic device. In other words, the electronic device in the embodiments of the present application has video encoding and decoding capabilities, and generally includes a video encoder (i.e., an encoder) and a video decoder (i.e., a decoder).

FIG. 37 is a schematic block diagram of a system composition of an encoder provided in the embodiments of the present application. As illustrated in FIG. 37, the encoder 100 may include: a partitioning unit 101, a prediction unit 102, a first adder 107, a transform unit 108, a quantization unit 109, an inverse quantization unit 110, an inverse transform unit 111, a second adder 112, a filtering unit 113, a decoded picture buffer (DPB) unit 114, and an entropy encoding unit 115. Here, the input to the encoder 100 may be a video composed of a series of pictures or a static picture, and the output of the encoder 100 may be a bitstream (also referred to as a "coded bitstream") used to represent a compressed version of the input video.

The partitioning unit 101 partitions a picture in the input video into one or more coding tree units (CTUs). The partitioning unit 101 partitions the picture into multiple tiles (or called tiles), and may further partition one tile into one or more bricks. Here, one tile or one brick may include one or more complete and/or partial CTUs. In addition, the partitioning unit 101 may form one or more slices, where one slice may include one or more tiles arranged in raster order within the picture, or one or more tiles covering a rectangular region of the picture. The partitioning unit 101 may also form one or more sub-pictures, where one sub-picture may include one or more slices, tiles, or bricks.

During the encoding process of the encoder 100, the partitioning unit 101 passes the CTU to the prediction unit 102. Generally, the prediction unit 102 may be composed of a block partitioning unit 103, a motion estimation (ME) unit 104, a motion compensation (MC) unit 105, and an intra prediction unit 106. Specifically, the block partitioning unit 103 further partitions the input CTU into smaller coding units (CUs) by iteratively using quadtree partitioning, binary tree partitioning, and ternary tree partitioning. The prediction unit 102 may use the ME unit 104 and the MC unit 105 to obtain an inter prediction block of the CU. The intra prediction unit 106 may obtain an intra prediction block of the CU by using various intra prediction modes including MIP mode. In an example, a rate-distortion optimized motion estimation method may be invoked by the ME unit 104 and the MC unit 105 to obtain the inter prediction block, and a rate-distortion optimized mode determining method may be invoked by the intra prediction unit 106 to obtain the intra prediction block.

The prediction unit 102 outputs the prediction block of a CU. The first adder 107 calculates a difference between the CU from the output of the partitioning unit 101 and the prediction block of the CU, i.e., the residual CU. The transform unit 108 retrieves the residual CU and performs one or more transforms on the residual CU to obtain coefficients. The quantization unit 109 quantizes the coefficients and outputs the quantized coefficients (i.e., levels). The inverse quantization unit 110 performs a scaling operation on the quantized coefficients to output reconstructed coefficients. The inverse transform unit 111 performs one or more inverse transforms corresponding to the transform(s) in the transform unit 108 and outputs the reconstructed residual. The second adder 112 calculates the reconstructed CU by adding the reconstructed residual and the prediction block of the CU from the prediction unit 102. The second adder 112 also passes its output to the prediction unit 102 to be uses as a reference for intra prediction. After all CUs in the picture or sub-picture are reconstructed, the filtering unit 113 performs in-loop filtering on the reconstructed picture or sub-picture. Here, the filtering unit 113 includes one or more filters, such as a deblocking filter, a sample adaptive offset (SAO) filter, an adaptive loop filter (ALF), a luma mapping with chroma scaling (LMCS) filter, and a neural network-based filter. Alternatively, in a case where the filtering unit 113 determines that a CU is not used as a reference for encoding other CUs, the filtering unit 113 performs in-loop filtering on one or more target samples within the CU.

The output of the filtering unit 113 is a decoded picture or sub-picture, and the decoded picture or sub-picture is buffered in the DPB unit 114. The DPB unit 114 outputs the decoded picture or sub-picture based on timing and control information. Here, the picture stored in the DPB unit 114 are also used as references for the prediction unit 102 to perform inter prediction or intra prediction. Finally, the entropy encoding unit 115 converts parameters necessary for decoding the picture from the encoder 100 (e.g., control parameters and supplementary information) into binary form and signals the binary form into a bitstream according to a syntax structure of each data unit, that is, the encoder 100 ultimately outputs a bitstream.

Furthermore, the encoder 100 may have a first processor and a first memory storing a computer program. When the first processor reads and executes the computer program, the encoder 100 reads an input video and generates a corresponding bitstream. In addition, the encoder 100 may also be a computing device having one or more chips. These units, implemented as integrated circuits on the chip, have connection and data exchange functions similar to corresponding units in FIG. 37.

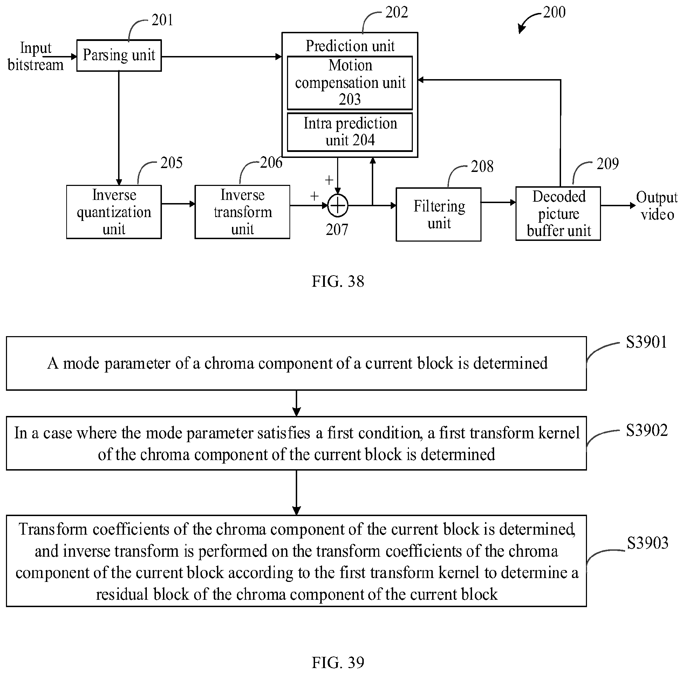

FIG. 38 is a schematic block diagram of a system composition of a decoder provided in the embodiments of the present application. As illustrated in FIG. 38, the decoder 200 may include: a parsing unit 201, a prediction unit 202, an inverse quantization unit 205, an inverse transform unit 206, an adder 207, a filtering unit 208, and a decoded picture buffer unit 209. Here, the input to the decoder 200 is a bitstream representing a compressed version of a video or a static picture, and the output of the decoder 200 may be a decoded video composed of a series of pictures or a decoded static picture.

The input bitstream to the decoder 200 may be a bitstream generated by the encoder 100. The parsing unit 201 parses the input bitstream and obtains values of syntax elements from the input bitstream. The parsing unit 201 converts binary representation of the syntax elements into numerical values and passes the numerical values to units in the decoder 200 to obtain one or more decoded pictures. The parsing unit 201 may further parse one or more syntax elements from the input bitstream for displaying the decoded picture(s).

During the decoding process of the decoder 200, the parsing unit 201 passes the values of the syntax elements and one or more variables which are set or determined according to the values of the syntax elements for obtaining one or more decoded pictures, to the units in the decoder 200.

The prediction unit 202 determines a prediction block of the current decoding block (e.g., a CU). Here, the prediction unit 202 may include a motion compensation unit 203 and an intra prediction unit 204. Specifically, when an inter decoding mode is used for decoding the current decoding block, the prediction unit 202 passes related parameters from the parsing unit 201 to the motion compensation unit 203 to obtain an inter prediction block; when an intra prediction mode (including an MIP mode indicated based on an MIP mode index value) is used for decoding the current decoding block, the prediction unit 202 passes related parameters from the parsing unit 201 to the intra prediction unit 204 to obtain an intra prediction block.

The inverse quantization unit 205 has the same function as the inverse quantization unit 110 in the encoder 100. The inverse quantization unit 205 performs a scaling operation on quantized coefficients (i.e., levels) from the parsing unit 201 to obtain reconstructed coefficients. The inverse transform unit 206 has the same function as the inverse transform unit 111 in the encoder 100. The inverse transform unit 206 performs one or more transforms (i.e., an inverse operation of one or more transforms performed by the inverse transform unit 111 in the encoder 100) to obtain a reconstructed residual. The adder 207 performs an addition operation on its inputs (the prediction block from the prediction unit 202 and the reconstructed residual from the inverse transform unit 206) to obtain a reconstructed block of the current decoded block. The reconstructed block is further passed to the prediction unit 202 to serve as a reference for other blocks encoded in the intra prediction mode.

After all CUs in the picture or sub-picture are reconstructed, the filtering unit 208 performs in-loop filtering on the reconstructed picture or sub-picture. The filtering unit 208 includes one or more filters, such as a deblocking filter, a sample adaptive offset filter, an adaptive loop filter, a luma mapping with chroma scaling filter, and a neural network-based filter, etc.. Alternatively, in a case where the filtering unit 208 determines that the reconstructed block is not used as a reference for decoding other blocks, the filtering unit 208 performs in-loop filtering on one or more target samples in the reconstructed block. Here, the output of the filtering unit 208 is the decoded picture or sub-picture, which is buffered in the DPB unit 209. The DPB unit 209 outputs the decoded picture or sub-picture according to timing and control information. The picture stored in the DPB unit 209 may also be used as a reference for inter prediction or intra prediction performed by the prediction unit 202.

Furthermore, the decoder 200 may have a second processor and a second memory storing a computer program. When the first processor reads and executes the computer program, the decoder 200 reads an input bitstream and generates a corresponding decoded video. In addition, the decoder 200 may also be a computing device having one or more chips. These units, implemented as integrated circuits on the chip, have connection and data exchange functions similar to corresponding units in FIG. 38.

It should also be clarified that in a case where the embodiments of the present application are applied to the encoder 100, the "current block" specifically refers to a block currently to be encoded in a video picture (which may also be referred to as a "coding block"); in a case where the embodiments of the present application are applied to the decoder 200, the "current block" specifically refers to a block currently to be decoded in a video picture (which may also be referred to as a "decoding block").

In one embodiment of the present application, referring to FIG. 39, a schematic flowchart of a decoding method provided in the embodiments of the present application is illustrated. As illustrated in FIG. 39, the method may include the following steps.

In S3901, a mode parameter of a chroma component of a current block is determined.

It should be noted that in the embodiments of the present application, the method is applied to a decoder. Specifically, based on the composition structure of decoder 200 illustrated in FIG. 38, the decoding method in the embodiments of the present application may be applied to an intra prediction mode and/or an inter prediction mode. The method herein is an optimization solution of MTS/LFNST/NSPT transform mainly proposed for the chroma component in single tree partitioning, aiming to improve compression efficiency.

It should also be noted that in the embodiments of the present application, the prediction mode of the current block may include: the inter prediction mode and/or the intra prediction mode. Here, in the intra prediction mode, the current block is mainly predicted based on a reconstructed surrounding region, while in the inter prediction mode, the current block is mainly predicted based on a reference picture of the current block.

It should also be noted that in the embodiments of the present application, partition types of the current block may include single tree partitioning and dual tree partitioning. Here, in the single tree, a luma component and chroma components are partitioned together, and in this case, one CU includes a luma block and collocated chroma blocks; in the dual tree, luma and chroma are partitioned separately, and in this case, one CU includes only a luma block or includes only chroma blocks. It is noted that a block of a luma component of the current block may be referred to as a "luma block", and a block of a chroma component of the current block may be referred to as a "chroma block".

It should also be noted that although the LFNST may originally be applied to the chroma component in the single tree during the standardization phase, to reduce hardware complexity, it is more effective not to use the LFNST on the chroma component. For example, compared to allowing the LFNST to be used on the chroma component, not using the LFNST on the chroma component results in a shorter pipeline. Based on this, in the embodiments of the present application, the following restriction condition is added for the use of the chroma component in the single tree.

In S3902, in a case where the mode parameter satisfies a first condition, a first transform kernel of the chroma component of the current block is determined.

It should be noted that, in the embodiments of the present application, the restriction condition is that the mode parameter satisfies the first condition, which may include that: a partition type of the current block is single tree partitioning and a prediction mode of the chroma component of the current block is a cross-component prediction mode. The cross-component prediction mode may include a CCLM, a CCCM, an inter-CCCM, etc..

In the embodiments of the present application, if the chroma component of the current block under the single tree partitioning uses the cross-component prediction mode, one possible implementation is that the MTS/LFNST/NSPT is not applied to the chroma component of the current block. In this case, a preset transform kernel may be determined as the first transform kernel of the chroma component of the current block. Here, the preset transform kernel is a default transform kernel.

For example, if the chroma component in the single tree uses the cross-component prediction mode, the MTS/LFNST/NSPT is not applied to the chroma component of the current block. Instead, the default transform kernel is used, for example, separable DCT2 is used in both the horizontal direction and the vertical direction.

In the embodiments of the present application, if the chroma component of the current block under the single tree partitioning uses the cross-component prediction mode, another possible implementation is that the MTS/LFNST/NSPT uses a different transform kernel set for the chroma component than for the luma component. In this case, a first transform kernel set of the chroma component of the current block may be determined based on a first transform mode, where the first transform kernel set is different from a transform kernel set of a luma component of the current block; and the first transform kernel is determined based on the first transform kernel set.

It should be noted that, in the embodiments of the present application, the first transform mode includes at least one of: a multiple transform selection (MTS) mode, a low frequency non-separable transform (LFNST) mode, or a non-separable primary transform (NSPT) mode.

For example, if the chroma component in the single tree uses the cross-component prediction mode, the MTS/LFNST/NSPT may be applied to the chroma component of the current block, but the first transform kernel set applied to the chroma component is different from the transform kernel set applied to the luma component.

In the embodiments of the present application, if the chroma component of the current block under the single tree partitioning uses the cross-component prediction mode, yet another possible implementation is that the MTS/LFNST/NSPT uses a different transform kernel for the chroma component than for the luma component. In this case, a first transform kernel set of the chroma component of the current block may be determined based on a first transform mode, where the first transform kernel set is the same as a transform kernel set of the luma component of the current block; and the first transform kernel is determined based on the first transform kernel set, where the first transform kernel is different from a transform kernel of the luma component of the current block.

It should be noted that, in the embodiments of the present application, MTS/LFNST/NSPT uses a different transform kernel for the chroma component than for the luma component. Here, the transform kernel sets of the two components may be the same, but the transform kernels applied to the two components may be different; alternatively, the transform kernel sets of the two components may be different, and the transform kernels applied to the two components may also be different.

It should also be noted that, in the embodiments of the present application, the first transform mode includes at least one of: a multiple transform selection (MTS) mode, a low frequency non-separable transform (LFNST) mode, or a non-separable primary transform (NSPT) mode.

For example, if the chroma component in the single tree uses the cross-component prediction mode, the MTS/LFNST/NSPT may be applied to the chroma component of the current block, but the first transform kernel applied to the chroma component is different from the transform kernel applied to the luma component.

It should also be noted that in a case where the first transform kernel set of the chroma component of the current block is determined based on the first transform mode, different transform modes may correspond to different transform kernel sets. For example, the multiple transform selection mode may be used for determining an MTS transform kernel set, the low frequency non-separable transform mode may be used for determining an LFNST transform kernel set, and the non-separable primary transform mode may be used for determining an NSPT transform kernel set. Each transform kernel set can include at least one candidate transform kernel, and after the first transform kernel set of the chroma component is determined, the first transform kernel applied to the chroma component of the current block can be selected from the first transform kernel set.

That is, in the embodiments of the present application, MTS/LFNST/NSPT uses a different transform kernel or a different transform kernel set for the chroma component compared to the luma component. In some technologies, LFNST/NSPT determines a transform kernel set based on the intra prediction mode, and the intra prediction mode essentially represents a texture feature, such as, texture at a certain angle. LFNST/NSPT may select a corresponding transform kernel set based on the texture feature, and multiple selectable transform kernels may be present in each transform kernel set, such as, three transform kernels are selectable. Similarly, intra MTS also selects transform kernels based on the intra prediction mode. For the inter prediction, it inherently lacks an intra prediction mode, but a virtual intra prediction mode is derived from an inter prediction block according to the foregoing description. The virtual prediction mode, also referred to as a texture feature index, is used to select a LFNST/NSPT transform kernel set, thereby determining the first transform kernel of the current block based on the transform kernel set.

It can be understood that for a single-tree CU whose chroma component and luma component are predicted through the same prediction method, their residuals may also conform to the same texture feature, such as texture at a certain angle. However, for a single-tree CU whose chroma component and luma component are predicted through different prediction methods, their residuals may conform to different texture features. Here, a specific example is cross-component prediction. Cross-component prediction uses the reconstructed block of the luma component to predict the chroma component. The reconstructed block of the luma component already includes a residual of the luma component, so a prediction block of the chroma component includes information transformed from the residual of the luma component. If the luma component and chroma component conform to different texture features, different transform kernels or transform kernel sets can be applied to them. Another specific example is for LFNST/NSPT: the luma component uses its intra prediction mode or a virtual intra prediction mode to match a transform kernel set. If the cross-component prediction is applied to the chroma component, then a transform kernel set corresponding to DC or PLANAR or a transform kernel set specifically optimized for the cross-component prediction may be used for the chroma, which is not specifically limited here.

It should also be noted that the above descriptions are all based on texture features. For the commonly used YUV4:2:0 format, the number of samples in the luma component is four times that of one chroma component within the same CU, that is, sizes of the luma block and chroma block are different. For example, if the size of the luma block is 16×16, the size of the corresponding chroma block is 8×8. Consequently, the transform kernel or transform kernel set must also be of the corresponding size.

In some embodiments, determining the first transform kernel based on the first transform kernel set may include: decoding a bitstream to determine a value of first syntax flag information; in a case where the first syntax flag information indicates that the current block uses the first transform mode, determining a transform kernel index of the current block; and determining the first transform kernel based on the first transform kernel set and the transform kernel index.

It should be noted that, in the embodiments of the present application, the first syntax flag information is used to indicate whether the current block uses the first transform mode, such as whether the current block uses MTS/LFNST/NSPT. If the value of the first syntax flag information equals to the first value, it can be determined that the current block does not use MTS/LFNST/NSPT; if the value of the first syntax flag information equals to the second value, it can be determined that the current block uses MTS/LFNST/NSPT. Here, the first value may be set to 0, and the second value may be set to a non-zero value, such as 1, 2 or 3. That is, in a case where the current block uses the first transform mode, the first syntax flag information is also used to indicate which corresponding transform kernel is used.

It should also be noted that in the embodiments of the present application, for the first syntax flag information, two other pieces of syntax flag information can also be used as alternatives. One piece of syntax flag information is used to indicate whether the current block uses MTS/LFNST/NSPT, and the other piece of syntax flag information is used to indicate the corresponding transform kernel index in a case where the current block uses MTS/LFNST/NSPT. That is, when determining the transform kernel index of the current block, the transform kernel index of the current block may be determined by decoding the bitstream. In this way, two syntax elements need to be transmitted in the bitstream, resulting in high bitstream overhead. In this case, for a case where the transform kernel index needs to be transmitted in the bitstream, if the determined first transform kernel set includes only one transform kernel, then it is unnecessary to transmit the transform kernel index. Specifically, in a case where the current block uses MTS/LFNST/NSPT, the only transform kernel in the first transform kernel set may be directly determined as the first transform kernel applied to the current block.

It should also be noted that, in the embodiments of the present application, for the first syntax flag information, three other pieces of syntax flag information can also be used as alternatives here. One piece of syntax flag information is used to indicate whether the current block uses NSPT and which corresponding NSPT transform kernel is used, another piece of syntax flag information is used to indicate whether the current block uses LFNST and which corresponding LFNST transform kernel is used, and yet another piece of syntax flag information is used to indicate whether the current block uses MTS and which corresponding MTS transform kernel is used. The solutions here are substantially the same, and are not specifically limited herein.

In S3903, transform coefficients of the chroma component of the current block are determined, and inverse transform is performed on the transform coefficients of the chroma component of the current block according to the first transform kernel to determine a residual block of the chroma component of the current block.

It should be noted that, in the embodiments of the present application, quantization coefficients of the chroma component of the current block may be determined by decoding a bitstream, and inverse quantization is performed on the quantization coefficients of the chroma component of the current block to determine the transform coefficients of the chroma component of the current block.

It should also be noted that, in the embodiments of the present application, the method further includes: in a case where the mode parameter fails to satisfy the first condition, determining a second transform kernel of the chroma component of the current block; and determining the transform coefficients of the chroma component of the current block, and performing inverse transform on the transform coefficients of the chroma component of the current block according to the second transform kernel to determine a residual block of the chroma component of the current block.

That is, in the embodiments of the present application, if the mode parameter satisfies the first condition, the first transform kernel of the chroma component of the current block may be determined, and inverse transform is performed on the transform coefficients of the chroma component of the current block according to the first transform kernel to determine the residual block of the chroma component of the current block. If the mode parameter fails to satisfy the first condition, the second transform kernel of the chroma component of the current block may be determined, and inverse transform is performed on the transform coefficients of the chroma component of the current block according to the second transform kernel to determine the residual block of the chroma component of the current block.

In the embodiments of the present application, the mode parameter not satisfying the first condition may include that: a partition type of the current block is dual tree partitioning or a prediction mode of the chroma component of the current block is a non-cross-component prediction mode. In this case, if the current block is dual tree partitioning or the cross-component prediction mode is not applied to the chroma component of the current block, MTS/LFNST/NSPT may be directly applied.

In some embodiments, determining the second transform kernel of the chroma component of the current block may include: determining a second transform kernel set of the chroma component of the current block based on a first transform mode; and determining the second transform kernel based on the second transform kernel set; where the first transform mode includes at least one of: a multiple transform selection mode, a low frequency non-separable transform mode, or a non-separable primary transform mode.

It should be noted that in the embodiments of the present application, determining the second transform kernel based on the second transform kernel set may specifically include: decoding a bitstream to determine a value of first syntax flag information; and if the first syntax flag information indicates that the current block uses the first transform mode, determining the second transform kernel based on the second transform kernel set and the value of the first syntax flag information.

It should be noted that in the embodiments of the present application, if the current block uses the multiple transform selection mode, an MTS transform kernel set of the current block may be determined according to the intra prediction mode, virtual intra prediction mode, or texture feature index of the current block, and then the second transform kernel to be used may be determined from the MTS transform kernel set. If the current block uses the low frequency non-separable transform mode, an LFNST transform kernel set of the current block may be determined based on the intra prediction mode, virtual intra prediction mode, or texture feature index of the current block, and then the second transform kernel to be used may be determined from the LFNST transform kernel set. If the current block uses the non-separable primary transform mode, an NSPT transform kernel set of the current block may be determined based on the intra prediction mode, virtual intra prediction mode, or texture feature index of the current block, and then the second transform kernel to be used may be determined from the NSPT transform kernel set.

It should also be noted that, in the embodiments of the present application, for the first syntax flag information, if two pieces of syntax flag information are used as its alternatives, one piece of syntax flag information is used to indicate whether the current block uses MTS/LFNST/NSPT, and the other piece of syntax flag information is used to indicate the corresponding transform kernel index when the current block uses MTS/LFNST/NSPT. Then, when determining the second transform kernel of the current block, the second transform kernel index of the current block may also be determined by decoding the bitstream, and the second transform kernel may be determined according to the second transform kernel set and the second transform kernel index. In this way, two syntax elements need to be transmitted in the bitstream, resulting in high bitstream overhead. In this case, for a case where a transform kernel index needs to be transmitted in the bitstream, if the determined second transform kernel set includes only one transform kernel, it is unnecessary to transmit the transform kernel index. Specifically, in a case where the current block uses MTS/LFNST/NSPT, the only transform kernel in the second transform kernel set may be directly used as the second transform kernel.

In one possible implementation, in a case where the mode parameter satisfies the first condition, performing inverse transform on the transform coefficients of the chroma component of the current block according to the first transform kernel to determine the residual block of the chroma component of the current block may include: in a case where the first syntax flag information indicates that the chroma component of the current block uses NSPT, performing inverse non-separable primary transform on the transform coefficients of the chroma component of the current block according to the first transform kernel to determine the residual block of the chroma component of the current block; or in a case where the first syntax flag information indicates that the chroma component of the current block uses LFNST, performing inverse low frequency non-separable transform on the transform coefficients of the chroma component of the current block according to the first transform kernel to determine the transform block of the chroma component of the current block; and performing inverse discrete cosine transform on the transform block of the chroma component to determine the residual block of the chroma component of the current block; or in a case where the first syntax flag information indicates that the chroma component of the current block uses MTS, performing inverse multiple transform selection on the transform coefficients of the chroma component of the current block according to the first transform kernel to determine the residual block of the chroma component of the current block.

In another possible implementation, in a case where the mode parameter fails to satisfy the first condition, performing inverse transform on the transform coefficients of the chroma component of the current block according to the second transform kernel to determine the residual block of the chroma component of the current block may include: in a case where the first syntax flag information indicates that the chroma component of the current block uses NSPT, performing inverse non-separable primary transform on the transform coefficients of the chroma component of the current block according to the second transform kernel to determine the residual block of the chroma component of the current block; or in a case where the first syntax flag information indicates that the chroma component of the current block uses LFNST, performing inverse low frequency non-separable transform on the transform coefficients of the chroma component of the current block according to the second transform kernel to determine the transform block of the chroma component of the current block; and performing inverse discrete cosine transform on the transform block of the chroma component to determine the residual block of the chroma component of the current block; or in a case where the first syntax flag information indicates that the chroma component of the current block uses MTS, performing inverse multiple transform selection on the transform coefficients of the chroma component of the current block according to the second transform kernel to determine the residual block of the chroma component of the current block.

That is, in the embodiments of the present application, if the chroma component in a single-tree partitioned CU uses the cross-component prediction mode, then MTS/LFNST/NSPT is not applied to the chroma component of the CU. If the chroma component in a single-tree partitioned CU uses the cross-component prediction mode, then MTS/LFNST/NSPT uses a different transform kernel or a different transform kernel set for the chroma component compared to the luma component.

It should also be noted that in the embodiments of the present application, the "inverse transform" performed on transform coefficients at the decoder side may also be referred to as "transform" in the standard text. The terms "transform" and "inverse transform" herein correspond to two opposite processes. For example, "transform" converts a value in the spatial domain to a coefficient in the frequency domain, while "inverse transform" converts a coefficient in the frequency domain back to a value in the spatial domain. The term "inverse" is relative to the term "forward", which essentially both are transforms. It should be noted that if the standard only specifies decoding, the "transform" in the standard text refers to the decoding part, specifically, it refers to the "inverse transform" herein.

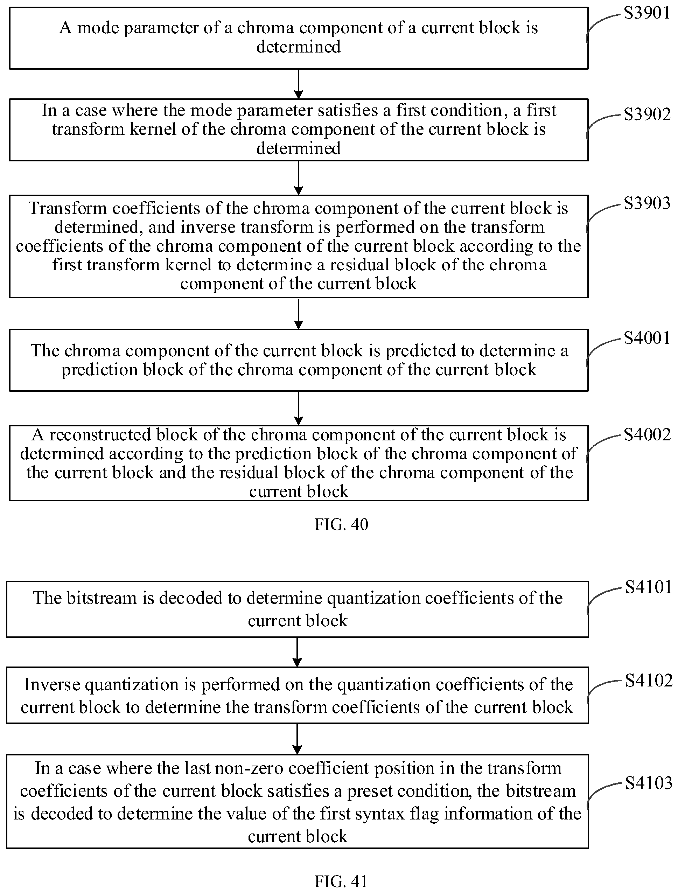

In some embodiments, referring to FIG. 40, after the step S3903, the method may further include the following steps.

In S4001, the chroma component of the current block is predicted to determine a prediction block of the chroma component of the current block.

In S4002, a reconstructed block of the chroma component of the current block is determined according to the prediction block of the chroma component of the current block and the residual block of the chroma component of the current block.

It should be noted that, in the embodiments of the present application, the step S4001 may be performed in parallel with steps S3901 and S3902, or may be executed before steps S3901 and S3902. The order of the steps will not be limited here in detail.

It should also be noted that, in the embodiments of the present application, intra prediction may be performed on the chroma component of the current block to determine the prediction block of the chroma component of the current block; alternatively, inter prediction may be performed on the chroma component of the current block to determine the prediction block of the chroma component of the current block. That is, MTS/LFNST/NSPT is applied to the chroma component in single tree partitioning. Optionally, it can be applied to intra and/or inter single tree partitioning.

It should also be noted that, in the embodiments of the present application, after determining the prediction block of the chroma component of the current block, an addition operation may be performed on the prediction block of the chroma component of the current block and the residual block of the chroma component of the current block, to determine the reconstructed block of the chroma component of the current block.

In the embodiments of the present application, determining the transform coefficients of the chroma component of the current block may include: decoding a bitstream to determine quantization coefficients of the chroma component of the current block; and performing inverse quantization on the quantization coefficients of the chroma component of the current block to determine the transform coefficients of the chroma component of the current block.

In the embodiments of the present application, determining the transform coefficients of the luma component of the current block may include: decoding a bitstream to determine quantization coefficients of the luma component of the current block; and performing inverse quantization on the quantization coefficients of the luma component of the current block to determine the transform coefficients of the luma component of the current block.

It should also be noted that, in the embodiments of the present application, transform coefficients of the current block may include transform coefficients of the chroma component of the current block and transform coefficients of the luma component of the current block. For the first syntax flag information, parsing may be performed only when the last non-zero coefficient position of the current block satisfies a certain condition. Referring to FIG. 41, the method may include the following steps.

In S4101, the bitstream is decoded to determine quantization coefficients of the current block.

In S4101, inverse quantization is performed on the quantization coefficients of the current block to determine the transform coefficients of the current block.

In S4103, in a case where the last non-zero coefficient position in the transform coefficients of the current block satisfies a preset condition, the bitstream is decoded to determine the value of the first syntax flag information of the current block.

It should be noted that, in the embodiments of the present application, the step S4103, i.e., decoding the bitstream to determine the value of the first syntax flag information of the current block, may include: decoding the bitstream according to at least one context model to determine a binary symbol string of the first syntax flag information; and performing inverse binarization on the binary symbol string of the first syntax flag information to determine the value of the first syntax flag information.

It should also be noted that, in the embodiments of the present application, in a case where the first syntax flag information indicates that the current block uses the first transform mode, the transform kernel of the first transform mode applied to the current block is determined, and inverse transform is performed on the transform coefficients of the current block according to the transform kernel of the first transform mode to determine the residual block of the current block. In a case where the first syntax flag information indicates that the current block does not use the first transform mode, the transform kernel of the second transform mode applied to the current block is determined, and inverse transform is performed on the transform coefficients of the current block according to the transform kernel of the second transform mode to determine the residual block of the current block. For example, the first transform mode may be MTS/LFNST/NSPT, and the second transform mode may be other transform modes (or a default transform kernel is directly used), which is not specifically limited here.

It should also be noted that, in the embodiments of the present application, the first syntax flag information may be denoted as lfnst_nspt_idx. In the related art, lfnst_nspt_idx is parsed only when certain conditions are satisfied. One of these conditions is that the last non-zero coefficient position is greater than or equal to 1. The scanning of the quantization coefficients is performed in a hierarchical diagonal scan manner. One coefficient block may be partitioned into $4\times4$ subblocks, the scanning of $4\times4$ subblocks is performed in a diagonal scan manner, and the scanning inside each $4\times4$ subblock is also performed in a diagonal scan manner. A position (0, 0) at the top-left corner of the current block corresponds to scan order 0, and the last non-zero coefficient position is greater than or equal to 1, which means that the current block has coefficients at positions other than (0, 0). For DCT2 transform, (0, 0) corresponds to a DC coefficient. That is, if the coefficients of the current block have a non-zero coefficient only at the position (0, 0) or have no non-zero coefficient, then the syntax element lfnst_nspt_idx does not need to be parsed and defaults to 0. This is because the possibility of using LFNST/NSPT in such case is very low, and this restriction can significantly reduce unnecessary overhead caused by lfnst_nspt_idx. Moreover, the related art requires that the last non-zero coefficient positions of all color components must be greater than or equal to 1, for example, for a single-tree partitioned block in the YUV format, the last non-zero coefficient positions of the Y, U, and V color components all need to be greater than or equal to 1.

In this way, for the inter prediction block, its residual is inherently smaller than that of the intra prediction block. Furthermore, considering that the quality requirement for the chroma component is generally much lower than that for the luma component, it often happens that for the inter prediction block, its luma component has certain coefficients while its chroma component has no coefficients. Although the condition for LFNST/NSPT was originally designed for intra prediction, LFNST/NSPT is now also applied to inter prediction. However, their coefficients and residual patterns are different. Therefore, the present application can modify the restriction condition.

In one possible implementation, the last non-zero coefficient position in the transform coefficients of the current block satisfying the preset condition may include that: in a case where a prediction mode of the current block is an intra prediction mode, the last non-zero coefficient positions of all color components in the transform coefficients of the current block are greater than or equal to a first threshold; or in a case where a prediction mode of the current block is an inter prediction mode, the last non-zero coefficient position of the luma component in the transform coefficients of the current block is greater than or equal to a first threshold.

In another possible implementation, the last non-zero coefficient position in the transform coefficients of the current block satisfying the preset condition may include that: in a case where a partition type of the current block is dual tree partitioning, the last non-zero coefficient positions of all color components in the transform coefficients of the current block are greater than or equal to a first threshold; or in a case where a partition type of the current block is single tree partitioning, the last non-zero coefficient position of a luma component in the transform coefficients of the current block is greater than or equal to the first threshold.

It should be noted that in the embodiments of the present application, the first threshold may also be referred to as the minimum threshold. Here, the first threshold may be set to 1, or it may be a larger value, such as 2, 3, which is not specifically limited here.

It should also be noted that the embodiments of the present application impose no limitation on the case where the last non-zero coefficient position is equal to the first threshold. In other words, the last non-zero coefficient position in the transform coefficients of the current block satisfying the preset condition may include that: in a case where the prediction mode of the current block is an intra prediction mode or in the case of dual tree partitioning, the last non-zero coefficient positions of all color components in the transform coefficients of the current block are greater than the first threshold; or in a case where the prediction mode of the current block is an inter prediction mode or in the case of single tree partitioning, the last non-zero coefficient position of the luma component in the transform coefficients of the current block is greater than the first threshold.

For example, if it is assumed that the minimum threshold is equal to 1, then for intra prediction blocks, the related art is still applicable. That is, lfnst_nspt_idx is parsed only when the last non-zero coefficient positions of all color components are greater than or equal to 1; for the inter prediction block, lfnst_nspt_idx is parsed only when the last non-zero coefficient position of the Y component is greater than or equal to 1, without requiring U and V components. Alternatively, for the dual-tree partitioned block, lfnst_nspt_idx is parsed only when the last non-zero coefficient positions of all its color components are greater than or equal to 1; for the single-tree partitioned block, lfnst_nspt_idx is parsed only when the last non-zero coefficient position of the Y component is greater than or equal to 1, without requiring U and V components.

It can also be understood that, in the related art, lfnst_nspt_idx is parsed only when certain conditions are satisfied. One of these conditions is that the last non-zero coefficient position cannot be greater than a threshold, and the threshold is the maximum possible number of coefficients of LFNST or NSPT minus one. The threshold may be referred to as the maximum threshold here, and the maximum threshold may be determined according to the size parameter of the current block, i.e., its length and width. For example, in a case where LFNST at the encoder side performs a secondary transform on a 4×4 block, the input of LFNST is DCT2-transformed coefficients in 4×4, and the output is 8 coefficients. This is, for the 4×4 block, LFNST can output at most only 8 coefficients. Therefore, for the decoder, if the last non-zero coefficient position of a 4×4 block exceeds 7, that is, (8-1), then it is certainly not output by LFNST. In this way, the decoder can determine that the current block did not use LFNST, and therefore, it is unnecessary to parse its syntax element. This restriction can significantly reduce unnecessary overhead caused by lfnst_nspt_idx. Moreover, the related art requires that the last non-zero coefficient positions of all color components cannot be greater than their respective maximum thresholds. For example, for a single-tree partitioned block in the YUV format, the last non-zero coefficient positions of three color components Y, U, and V cannot be greater than their respective maximum thresholds.

Thus, considering that the condition for LFNST/NSPT was originally designed for intra prediction, but LFNST/NSPT is now also applied to inter prediction, while their coefficients and residual patterns are different, therefore, the restriction condition may be modified.

In another possible implementation, the last non-zero coefficient position in the transform coefficients of the current block satisfying the preset condition may include that: in a case where a prediction mode of the current block is an intra prediction mode, the last non-zero coefficients positions of all color components in the transform coefficients of the current block are less than or equal to a second threshold; or in a case where the prediction mode of the current block is an inter prediction mode, the last non-zero coefficient position of a luma component in the transform coefficients of the current block is less than or equal to a second threshold.

In yet another possible implementation, the last non-zero coefficient position in the transform coefficients of the current block satisfying the preset condition may include that: in a case where a partition type of the current block is dual tree partitioning, the last non-zero coefficients positions of all color components in the transform coefficients of the current block are less than or equal to a second threshold; or in a case where a partition type of the current block is single tree partitioning, the last non-zero coefficient position of a luma component in the transform coefficients of the current block is less than or equal to the second threshold.

It should be noted that in the embodiments of the present application, the second threshold may also be referred to as the maximum threshold. In one specific embodiment, the second threshold may be determined based on the size parameter of the current block. For example, the second threshold may be determined based on the length and width of the current block. In another specific embodiment, the second threshold may be set to a difference between the maximum number of coefficients in the transform coefficients of the current block and one. For example, if LFNST on the current block outputs at most only 8 coefficients, the second threshold may be set to 7.

It should also be noted that the embodiments of the present application impose no limitation on the case where the last non-zero coefficient position equals to the second threshold. That is, the last non-zero coefficient position in the transform coefficients of the current block satisfying the preset condition may include that: in a case where the prediction mode of the current block is an intra prediction mode or in the case of dual tree partitioning, the last non-zero coefficient positions of all color components in the transform coefficients of the current block are less than the second threshold; or in a case where the prediction mode of the current block is an inter prediction mode or in the case of single tree partitioning, the last non-zero coefficient position of the luma component in the transform coefficients of the current block is less than the second threshold.

For example, for intra prediction blocks, the related art is still applicable. That is, lfnst_nspt_idx is parsed only when the last non-zero coefficient positions of all color components are not greater than their respective maximum thresholds; for the inter prediction block, lfnst_nspt_idx is parsed only when the last non-zero coefficient position of the Y component is not greater than its maximum threshold, without requiring U and V components. Alternatively, for the dual-tree partitioned block, lfnst_nspt_idx is parsed only when the last non-zero coefficient positions of all its components are not greater than the maximum threshold; for the single-tree partitioned block, lfnst_nspt_idx is parsed only when the last non-zero coefficient position of the Y component is not greater than its maximum threshold, without requiring U and V components.

That is, in the embodiments of the present application, depending on the situation, lfnst_nspt_idx may be parsed only when the last non-zero coefficient position of the Y component is greater than or equal to the minimum threshold, without requiring U and V components. Alternatively, depending on the situation, lfnst_nspt_idx may be parsed only when the last non-zero coefficient position of the Y component is not greater than the maximum threshold, without requiring U and V components.

The embodiments provide a decoding method. The method includes: determining a mode parameter of a chroma component of a current block; in a case where the mode parameter satisfies a first condition, determining a first transform kernel of the chroma component of the current block; determining transform coefficients of the chroma component of the current block, and performing inverse transform on the transform coefficients of the chroma component of the current block according to the first transform kernel to determine a residual block of the chroma component of the current block. In this way, the mode parameter of the current block is first determined; when the mode parameter satisfies the first condition, the first transform kernel of the chroma component of the current block is determined; and subsequently, a transform is performed on the residual block of the chroma component of the current block according to the first transform kernel. In other words, the determination of the first transform kernel is related to the mode parameter, which enables the application of the MTS/LFNST/NSPT transform to chroma components in single tree partitioning, thereby not only improving compression efficiency but also enhancing encoding and decoding performance.

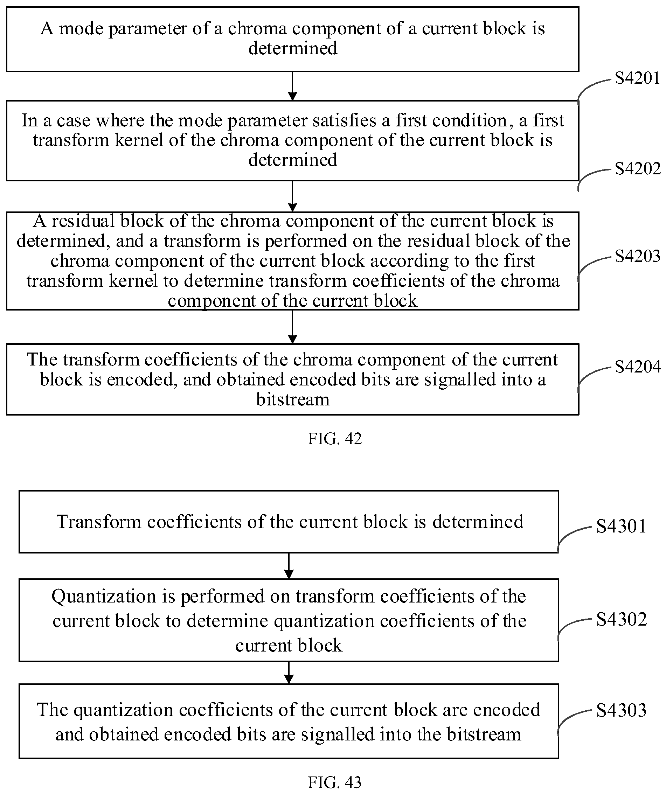

In another embodiment of the present application, referring to FIG. 42, a schematic flowchart of an encoding method provided by the embodiments of the present application is illustrated. As illustrated in FIG. 42, the method may include the following steps.

In S4201, a mode parameter of a chroma component of a current block is determined.

It should be noted that in the embodiments of the present application, the method is applied to an encoder. Specifically, based on the composition structure of encoder 100 illustrated in FIG. 37, the encoding method in the embodiments of the present application may be applied to an intra prediction mode and/or an inter prediction mode. The method herein is an optimization solution of MTS/LFNST/NSPT transform mainly proposed for the chroma component in single tree partitioning, aiming to improve compression efficiency.

It should also be noted that in the embodiments of the present application, the prediction mode of the current block may include: the inter prediction mode and/or the intra prediction mode. Here, in the intra prediction mode, the current block is mainly predicted based on a reconstructed surrounding region, while in the inter prediction mode, the current block is mainly predicted based on a reference picture of the current block.

It should also be noted that in the embodiments of the present application, partition types of the current block may include single tree partitioning and dual tree partitioning. Here, in the single tree, a luma component and chroma components are partitioned together, and in this case, one CU includes a luma block and collocated chroma blocks; in the dual tree, luma and chroma are partitioned separately, and in this case, one CU includes only a luma block or includes only chroma blocks. It is noted that a block of a luma component of the current block may be referred to as a "luma block", and a block of a chroma component of the current block may be referred to as a "chroma block".

It should also be noted that although the LFNST may originally be applied to the chroma component in the single tree during the standardization phase, to reduce hardware complexity, it is more effective not to use the LFNST on the chroma component. For example, compared to allowing the LFNST to be used on the chroma component, not using the LFNST on the chroma component results in a shorter pipeline. Based on this, in the embodiments of the present application, the following restriction condition is added for the use of the chroma component in the single tree.

In S4202, in a case where the mode parameter satisfies a first condition, a first transform kernel of the chroma component of the current block is determined.

It should be noted that, in the embodiments of the present application, the restriction condition is that the mode parameter satisfies the first condition, which may include that: a partition type of the current block is single tree partitioning and a prediction mode of the chroma component of the current block is a cross-component prediction mode. The cross-component prediction mode may include a CCLM, a CCCM, an inter-CCCM, etc..

In the embodiments of the present application, if the chroma component of the current block under single tree partitioning use the cross-component prediction mode, one possible implementation is that the MTS/LFNST/NSPT is not applied to the chroma component of the current block. In this case, a preset transform kernel may be determined as the first transform kernel of the chroma component of the current block. Here, the preset transform kernel is a default transform kernel.

For example, if the chroma component in the single tree uses the cross-component prediction mode, the MTS/LFNST/NSPT is not applied to the chroma component of the current block. Instead, a default transform kernel is used, for example, separable DCT2 is used in both the horizontal direction and the vertical direction.

In the embodiments of the present application, if the chroma component of the current block under the single tree partitioning uses the cross-component prediction mode, another possible implementation is that the MTS/LFNST/NSPT uses a different transform kernel set for the chroma component than for the luma component. In this case, a first transform kernel set of the chroma component of the current block may be determined based on a first transform mode, where the first transform kernel set is different from a transform kernel set of a luma component of the current block; and the first transform kernel is determined based on the first transform kernel set.

It should be noted that, in the embodiments of the present application, the first transform mode includes at least one of: a multiple transform selection (MTS) mode, a low frequency non-separable transform (LFNST) mode, or a non-separable primary transform (NSPT) mode.

For example, if the chroma component in the single tree uses the cross-component prediction mode, the MTS/LFNST/NSPT may be applied to the chroma component of the current block, but the first transform kernel set applied to the chroma component is different from the transform kernel set applied to the luma component.

In the embodiments of the present application, if the chroma component of the current block under the single tree partitioning uses the cross-component prediction mode, yet another possible implementation is that the MTS/LFNST/NSPT uses a different transform kernel for the chroma component than for the luma component. In this case, a first transform kernel set of the chroma component of the current block may be determined based on a first transform mode, where the first transform kernel set is the same as a transform kernel set of the luma component of the current block; and the first transform kernel is determined based on the first transform kernel set, where the first transform kernel is different from a transform kernel of the luma component of the current block.

It should be noted that, in the embodiments of the present application, the MTS/LFNST/NSPT uses a different transform kernel for the chroma component than for the luma component. Here, the transform kernel sets of the two components may be the same, but the transform kernels applied to the two components may be different; alternatively, the transform kernel sets of the two components may be different, and the transform kernels applied to the two components may also be different.

It should also be noted that, in the embodiments of the present application, the first transform mode includes at least one of: a multiple transform selection (MTS) mode, a low frequency non-separable transform (LFNST) mode, or a non-separable primary transform (NSPT) mode.

For example, if the chroma component in the single tree uses the cross-component prediction mode, the MTS/LFNST/NSPT may be applied to the chroma component of the current block, but the first transform kernel applied to the chroma component is different from the transform kernel applied to the luma component.

It should also be noted that in a case where the first transform kernel set of the chroma component of the current block is determined based on the first transform mode, different transform modes may correspond to different transform kernel sets. For example, the multiple transform selection mode may be used for determining an MTS transform kernel set, the low frequency non-separable transform mode may be used for determining an LFNST transform kernel set, and the non-separable primary transform mode may be used for determining an NSPT transform kernel set. Each transform kernel set can include at least one candidate transform kernel, and after the first transform kernel set of the chroma component is determined, the first transform kernel applied to the chroma component of the current block can be selected from the first transform kernel set.

That is, in the embodiments of the present application, the MTS/LFNST/NSPT uses different transform kernels or transform kernel sets for the chroma component and the luma component. In some technologies, the LFNST/NSPT determines a transform kernel set based on the intra prediction mode, and the intra prediction mode essentially represents a texture feature, such as, texture at a certain angle. The LFNST/NSPT may select a corresponding transform kernel set based on the texture feature, and multiple selectable transform kernels may be present in each transform kernel set, such as, three transform kernels are selectable. Similarly, intra MTS also selects transform kernels based on the intra prediction mode. For the inter prediction, it inherently lacks an intra prediction mode, but a virtual intra prediction mode is derived from an inter prediction block according to the foregoing description. The virtual prediction mode, also referred to as a texture feature index, is used to select a LFNST/NSPT transform kernel set, thereby determining the first transform kernel of the current block based on the transform kernel set.

It can be understood that for a single-tree CU whose chroma component and luma component are predicted through the same prediction method, their residuals may also conform to the same texture feature, such as texture at a certain angle. However, for a single-tree CU whose chroma component and luma component are predicted through different prediction methods, their residuals may conform to different texture features. Here, a specific example is cross-component prediction. Cross-component prediction uses a reconstructed block of the luma component to predict the chroma component. The reconstructed block of the luma component already includes a residual of the luma component, so a prediction block of the chroma component includes information transformed from the residual of the luma component. If the luma component and chroma component conform to different texture features, different transform kernels or transform kernel sets can be applied to them. Another specific example is for LFNST/NSPT: the luma component uses its intra prediction mode or a virtual intra prediction mode to match a transform kernel set. If the cross-component prediction is applied to the chroma component, then a transform kernel set corresponding to DC or PLANAR or a transform kernel set specifically optimized for the cross-component prediction may be used for the chroma, which will not be limited here in detail.

It should also be noted that the above descriptions are all based on texture features. For the commonly used YUV4:2:0 format, the number of samples in the luma component is four times that of one chroma component within the same CU, that is, sizes of the luma block and chroma block are different. For example, if the size of the luma block is $16 \times 16$, the size of the corresponding chroma block is $8 \times 8$. Consequently, the transform kernel or transform kernel set must also be of the corresponding size.

In some embodiments, determining the first transform kernel based on the first transform kernel set may include: performing cost value calculation for at least one candidate transform kernel in the first transform kernel set to determine a respective cost value of the at least one candidate transform kernel; and determining the minimum cost value from the respective cost value of the at least one candidate transform kernel, and determining a candidate transform kernel corresponding to the minimum cost value as the first transform kernel.

In one possible implementation, cost value calculation is performed for at least one candidate transform kernel in the first transform kernel set. Taking a first candidate transform kernel as an example, the method may include: performing transform and quantization on the residual block of the chroma component of the current block based on the first candidate transform kernel to determine a first candidate quantization coefficient of the chroma component of the current block; performing entropy encoding on the first candidate quantization coefficient to determine a first cost value of the first candidate transform kernel; performing inverse quantization and inverse transform on the first candidate quantization coefficient to determine a first candidate residual block of the chroma component of the current block, and determining a first candidate prediction block of the chroma component of the current block based on the first candidate residual block; performing cost calculation according to the first candidate prediction block and an original block of the chroma component of the current block to determine a second cost value of the first candidate transform kernel; and determining the cost value of the first candidate transform kernel based on the first cost value and second cost value of the first candidate transform kernel.

It should be noted that in the embodiments of the present application, the first candidate transform kernel is any one of the at least one candidate transform kernel, so that a respective cost value of the at least one candidate transform kernel can be determined.

It should also be noted that in the embodiments of the present application, the first cost value can represent the overhead cost of the first candidate transform kernel in the bitstream, while the second cost value represents the distortion cost of the first candidate transform kernel. Here, determining the cost value of the first candidate transform kernel based on the first cost value and second cost value of the first candidate transform kernel may include: performing a summation operation on the first cost value and second cost value of the first candidate transform kernel, and determining the sum of the two cost values as the cost value of the first candidate transform kernel.

It should also be noted that in the embodiments of the present application, the cost value calculation here may be determined based on the cost result of rate distortion optimization (RDO), or based on the cost result of sum of absolute difference (SAD), or even based on the cost result of sum of absolute transformed difference (SATD), which is not specifically limited.

It should also be noted that in the embodiments of the present application, the first transform kernel set may include 1, 2, 3, or more candidate transform kernels. If the first transform kernel set includes only one candidate transform kernel, then this candidate transform kernel can be directly determined as the first transform kernel of the chroma component of the current block, and it is unnecessary to perform cost value calculation.

In some embodiments, the method further includes: determining a value of first syntax flag information; where the first syntax flag information is used to indicate whether the current block uses the first transform mode and a corresponding used transform kernel index; and encoding the value of the first syntax flag information and signalling obtained encoded bits into the bitstream.

It should be noted that in the embodiments of the present application, the first syntax flag information may be used to indicate whether the current block uses the first transform mode, and in a case where the current block uses the first transform mode, the value of the first syntax flag information may also be used to indicate the transform kernel index used by the current block.

It should also be noted that in the embodiments of the present application, determining the value of the first syntax flag information may include that: in a case where the current block does not use the first transform mode, determining the value of the first syntax flag information is a first value; in a case where the current block uses the first transform mode, determining the value of the first syntax flag information is a second value; where a value of the second value has an association relationship with the transform kernel index of the first transform kernel.

Here, the first value is different from the second value. In a specific embodiment, the first value may be set to 0, and the second value may be set to a non-zero value, such as 1, 2 or 3. That is, in a case where the current block uses the first transform mode, the first syntax flag information is also used to indicate which corresponding transform kernel is used.

It should also be noted that in the embodiments of the present application, the transform kernel index here is used to indicate numbering of the first transform kernel of the current block in the first transform kernel set. For example, if the current block does not use the first transform mode, the value of the first syntax flag information may be determined as 0; if the current block uses the first transform mode and the first transform kernel is 1-st transform kernel in the first transform kernel set (i.e., the transform kernel index is 0), the value of the first syntax flag information may be determined to be 1; if the current block uses the first transform mode and the first transform kernel is 2-nd transform kernel in the first transform kernel set (i.e., the transform kernel index is 1), the value of the first syntax flag information may be determined to be 2; if the current block uses the first transform mode and the first transform kernel is 3-rd transform kernel in the first transform kernel set (i.e., the transform kernel index is 2), the value of the first syntax flag information may be determined to be 3.

It should also be noted that in the embodiments of the present application, for the first syntax flag information, two other pieces of syntax flag information can also be used as alternatives. One piece of syntax flag information is used to indicate whether the current block uses MTS/LFNST/NSPT, and the other piece of syntax flag information is used to indicate the corresponding transform kernel index in a case where the current block uses MTS/LFNST/NSPT. That is, after the transform kernel index of the first transform kernel corresponding to the current block is determined, the transform kernel index may also be encoded, and the obtained encoded bits may be signalled into the bitstream.

In this way, two syntax elements need to be transmitted in the bitstream, resulting in high bitstream overhead. In this case, for a case where the transform kernel index needs to be transmitted in the bitstream, if the determined first transform kernel set includes only one transform kernel, then it is unnecessary to transmit the transform kernel index. Specifically, in a case where the current block uses MTS/LFNST/NSPT, the only transform kernel in the first transform kernel set may be directly determined as the first transform kernel applied to the current block.

It should also be noted that, in the embodiments of the present application, for the first syntax flag information, three other pieces of syntax flag information can also be used as alternatives here. One piece of syntax flag information is used to indicate whether the current block uses NSPT and which corresponding NSPT transform kernel is used, another piece of syntax flag information is used to indicate whether the current block uses LFNST and which corresponding LFNST transform kernel is used, and yet another piece of syntax flag information is used to indicate whether the current block uses MTS and which corresponding MTS transform kernel is used. The solutions here are substantially the same, and are not specifically limited herein.

In S4203, a residual block of the chroma component of the current block is determined, and a transform is perform on the residual block of the chroma component of the current block according to the first transform kernel to determine transform coefficients of the chroma component of the current block.

In S4204, the transform coefficients of the chroma component of the current block is encoded, and the obtained encoded bits are signalled into a bitstream.

It should be noted that, in the embodiments of the present application, determining the residual block of the chroma component of the current block may include: determining a prediction block of the chroma component of the current block; and determining the residual block of the chroma component of the current block, according to an original block of the chroma component of the current block and the prediction block of the chroma component of the current block.

In the embodiments of the present application, intra prediction may be performed on the chroma component of the current block to determine the prediction block of the chroma component of the current block; alternatively, inter prediction may be performed on the chroma component of the current block to determine the prediction block of the chroma component of the current block. In other words, MTS/LFNST/NSPT is applied to the chroma component in single tree partitioning. Optionally, it can be applied to intra and/or inter single tree partitioning.

It should also be noted that in the embodiments of the present application, after determining the prediction block of the chroma component of the current block, a subtraction operation may be performed on the original block of the chroma component of the current block and the prediction block of the chroma component of the current block, to determine the residual block of the chroma component of the current block.

In some embodiments, the method further includes: in a case where the mode parameter fails to satisfy the first condition, determining a second transform kernel of the chroma component of the current block; determining a residual block of the chroma component of the current block, and performing transform on the residual block of the chroma component of the current block according to the second transform kernel to determine transform coefficients of the chroma component of the current block; and encoding the transform coefficients of the chroma component of the current block and signalling obtained encoded bits into the bitstream.

That is, in the embodiments of the present application, if the mode parameter satisfies the first condition, the first transform kernel of the chroma component of the current block may be determined, and a transform is performed on the residual block of the chroma component of the current block according to the first transform kernel to determine the transform coefficients of the chroma component of the current block. If the mode parameter fails to satisfy the first condition, the second transform kernel of the chroma component of the current block may be determined, a transform is performed on the residual block of the chroma component of the current block according to the second transform kernel to determine the transform coefficients of the chroma component of the current block. Finally, the transform coefficients of the chroma component of the current block are encoded, and the obtained encoded bits are signalled into the bitstream.

In the embodiments of the present application, the mode parameter not satisfying the first condition may include that: a partition type of the current block is dual tree partitioning or a prediction mode of the chroma component of the current block is a non-cross-component prediction mode. In this case, if the current block is dual tree partitioning or the cross-component prediction mode is not applied to the chroma component of the current block, MTS/LFNST/NSPT may be directly applied.

In some embodiments, determining the second transform kernel of the chroma component of the current block may include: determining a second transform kernel set of the chroma component of the current block based on a first transform mode; and determining the second transform kernel based on the second transform kernel set; where the first transform mode includes at least one of: a multiple transform selection mode, a low frequency non-separable transform mode, or a non-separable primary transform mode.

It should be noted that, in the embodiments of the present application, determining the second transform kernel based on the second transform kernel set may specifically include: performing cost value calculation for at least one candidate transform kernel in the second transform kernel set to determine a respective cost value of the at least one candidate transform kernel; and determining the minimum cost value from the respective cost value of the at least one candidate transform kernel, and determining the candidate transform kernel corresponding to the minimum cost value as the second transform kernel.

It should also be noted that, in the embodiments of the present application, the cost value calculation here may be determined based on the cost result of RDO, or based on the cost result of SAD, or even based on the cost result of SATD, which is not specifically limited.

It should also be noted that, in the embodiments of the present application, the second transform kernel set may include 1, 2, 3, or more candidate transform kernels. If the second transform kernel set includes only one candidate transform kernel, then this candidate transform kernel can be directly determined as the second transform kernel of the current block, and it is unnecessary to perform cost value calculation.

It should be noted that in the embodiments of the present application, if the current block uses the multiple transform selection mode, an MTS transform kernel set of the current block may be determined according to the intra prediction mode, virtual intra prediction mode, or texture feature index of the current block, and then the second transform kernel to be used may be determined from the MTS transform kernel set. If the current block uses the low frequency non-separable transform mode, an LFNST transform kernel set of the current block may be determined based on the intra prediction mode, virtual intra prediction mode, or texture feature index of the current block, and then the second transform kernel to be used may be determined from the LFNST transform kernel set. If the current block uses the non-separable primary transform mode, an NSPT transform kernel set of the current block may be determined based on the intra prediction mode, virtual intra prediction mode, or texture feature index of the current block, and then the second transform kernel to be used may be determined from the NSPT transform kernel set.

It should also be noted that, in the embodiments of the present application, for the first syntax flag information, if two pieces of syntax flag information are used as its alternatives, one piece of syntax flag information is used to indicate whether the current block uses MTS/LFNST/NSPT, and the other piece of syntax flag information is used to indicate the corresponding transform kernel index when the current block uses MTS/LFNST/NSPT. Then, when determining the second transform kernel of the current block, the second transform kernel index of the current block may also be determined by decoding the bitstream, and the second transform kernel may be determined according to the second transform kernel set and the second transform kernel index. However, since two syntax elements need to be transmitted in the bitstream, this leads to high bitstream overhead. In this case, for a case where a transform kernel index needs to be transmitted in the bitstream, if the determined second transform kernel set includes only one transform kernel, it is unnecessary to transmit the transform kernel index. Specifically, in a case where the current block uses MTS/LFNST/NSPT, the only transform kernel in the second transform kernel set may be directly used as the second transform kernel.

In one possible implementation, in a case where the mode parameter satisfies the first condition, performing transform on the residual block of the chroma component of the current block according to the first transform kernel to determine the transform coefficients of the chroma component of the current block may include: in a case where the first syntax flag information indicates that the chroma component of the current block uses NSPT, performing non-separable primary transform on the residual block of the chroma component of the current block according to the first transform kernel to determine the transform coefficients of the chroma component of the current block; or in a case where the first syntax flag information indicates that the chroma component of the current block uses LFNST, performing low frequency non-separable transform on the residual block of the chroma component of the current block according to the first transform kernel to determine the transform block of the chroma component of the current block; and performing discrete cosine transform on the transform block of the chroma component to determine the transform coefficients of the chroma component of the current block; or in a case where the first syntax flag information indicates that the chroma component of the current block uses MTS, performing multiple transform selection transform on the residual block of the chroma component of the current block according to the first transform kernel to determine the transform coefficients of the chroma component of the current block.

In another possible implementation, in a case where the mode parameter fails to satisfy the first condition, performing transform on the residual block of the chroma component of the current block according to the second transform kernel to determine the transform coefficients of the chroma component of the current block may include: in a case where the first syntax flag information indicates that the chroma component of the current block uses NSPT, performing non-separable primary transform on the residual block of the chroma component of the current block according to the second transform kernel to determine the transform coefficients of the chroma component of the current block; or in a case where the first syntax flag information indicates that the chroma component of the current block uses LFNST, performing low frequency non-separable transform on the residual block of the chroma component of the current block according to the second transform kernel to determine the transform block of the chroma component of the current block; and performing discrete cosine transform on the transform block of the chroma component to determine the transform coefficients of the chroma component of the current block; or in a case where the first syntax flag information indicates that the chroma component of the current block uses MTS, performing multiple transform selection transform on the residual block of the chroma component of the current block according to the second transform kernel to determine the transform coefficients of the chroma component of the current block.

That is, in the embodiments of the present application, if the chroma component in a single-tree partitioned CU uses the cross-component prediction mode, then MTS/LFNST/NSPT is not applied to the chroma component of the CU. If the chroma component in a single-tree partitioned CU uses the cross-component prediction mode, then MTS/LFNST/NSPT uses a different transform kernel or a different transform kernel set for the chroma component compared to the luma component.

It should also be noted that, in the embodiments of the present application, the "transform" performed on a residual block at the encoder side, also referred to as "forward transform", specifically refers to the transform from the spatial domain to the frequency domain to remove the correlation of residuals. It should be noted that if the standard only specifies decoding, the "transform" in the standard text refers to the decoding part, specifically, it refers to the "inverse transform" herein.

Furthermore, in some embodiments, referring to FIG. 43, the method may further include the following steps.

In S4301, transform coefficients of the current block are determined.

In S4301, quantization is performed on the transform coefficients of the current block to determine quantization coefficients of the current block.

In S4303, the quantization coefficients of the current block are encoded, and the obtained encoded bits are signalled into the bitstream.

In the embodiments of the present application, the transform coefficients of the current block may include the transform coefficients of the chroma component and the transform coefficients of the luma component of the current block. In a specific embodiment, for the transform coefficients of the chroma component of the current block, the method further includes: performing quantization on the transform coefficients of the chroma component of the current block to determine quantization coefficients of the chroma component; and encoding the quantization coefficients of the chroma component of the current block and signalling obtained encoded bits into the bitstream. In another specific embodiment, for the transform coefficients of the luma component of the current block, the method further includes: performing quantization on the transform coefficients of the luma component of the current block to determine the quantization coefficients of the luma component; and encoding the quantization coefficients of the luma component of the current block and signalling obtained encoded bits into the bitstream.

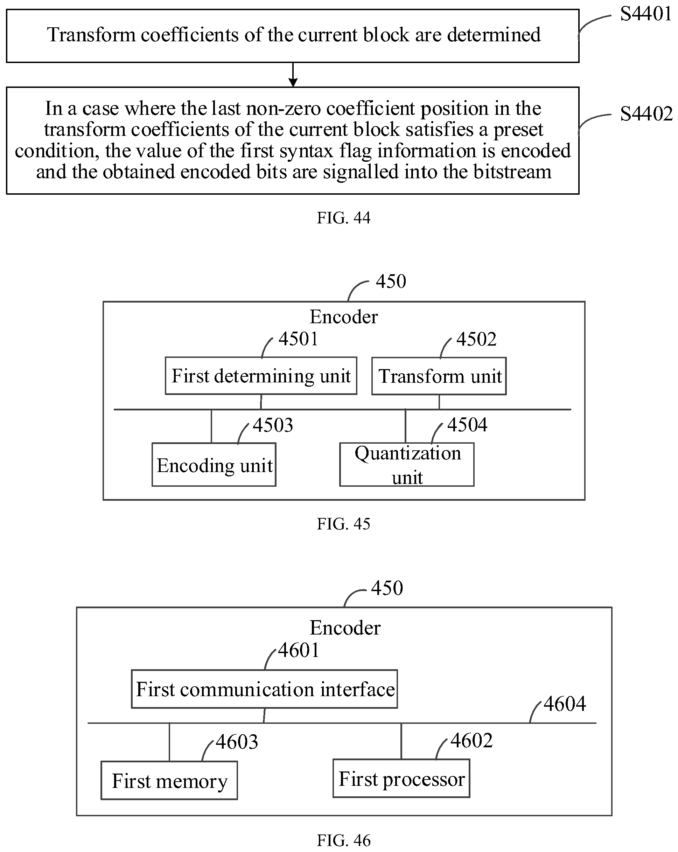

It can also be understood that, in the embodiments of the present application, for the first syntax flag information, the signalling of the information into the bitstream may be performed only when the last non-zero coefficient position of the current block satisfies a certain condition, referring to FIG. 44, the method may further include the following steps.

In S4401, transform coefficients of the current block are determined.

In S4402, in a case where the last non-zero coefficient position in the transform coefficients of the current block satisfies a preset condition, the value of the first syntax flag information is encoded and the obtained encoded bits are signalled into the bitstream.

It should be noted that, in the embodiments of the present application, encoding the value of the first syntax flag information may include: performing binarization on the value of the first syntax flag information to determine a binary symbol string of the current block; and encoding at least one binary symbol in the binary symbol string according to at least one context model, and signalling the obtained encoded bits into the bitstream.

It should also be noted that, in the embodiments of the present application, the first syntax flag information may be denoted as lfnst_nspt_idx. In the related art, lfnst_nspt_idx is encoded only when certain conditions are satisfied. One of these conditions is that the last non-zero coefficient position is greater than or equal to 1. The scanning of quantization coefficients is performed in a hierarchical diagonal scan manner. One coefficient block may be partitioned into $4\times4$ subblocks, the scanning of $4\times4$ subblocks is performed in a diagonal scan manner, and the scanning inside each $4\times4$ subblock is also performed in a diagonal scan manner. A position $(0, 0)$ at the top-left corner of the current block corresponds to scan order 0, and the last non-zero coefficient position is greater than or equal to 1, which means that the current block has coefficients at positions other than $(0, 0)$. For DCT2 transform, $(0, 0)$ corresponds to a DC coefficient. That is, if the coefficients of the current block have a non-zero coefficient only at the position $(0, 0)$, or in other words, have no non-zero coefficient except at the position $(0, 0)$, then the syntax element lfnst_nspt_idx does not need to be encoded and defaults to 0. This is because the possibility of using the LFNST/NSPT in such case is very low, and this restriction can significantly reduce unnecessary overhead caused by lfnst_nspt_idx. Moreover, the related art requires that the last non-zero coefficient positions of all color components must be greater than or equal to 1, for example, for a single-tree partitioned block in the YUV format, the last non-zero coefficient positions of the Y, U, and V color components all need to be greater than or equal to 1.

In this way, for the inter prediction block, its residual is inherently smaller than that of the intra prediction block. Furthermore, considering that the quality requirement for the chroma component is generally much lower than that for the luma component, it often happens that for the inter prediction block, its luma component has certain coefficients while its chroma component has no coefficients. Although the condition for LFNST/NSPT was originally designed for intra prediction, LFNST/NSPT is now also applied to inter prediction. However, their coefficient and residual patterns are different. Therefore, the present application can modify the restriction condition.

In one possible implementation, the last non-zero coefficient position in the transform coefficients of the current block satisfying the preset condition may include that: in a case where a prediction mode of the current block is an intra prediction mode, the last non-zero coefficient positions of all color components in the transform coefficients of the current block are greater than or equal to a first threshold; or in a case where a prediction mode of the current block is an inter prediction mode, the last non-zero coefficient position of the luma component in the transform coefficients of the current block is greater than or equal to a first threshold.

In another possible implementation, the last non-zero coefficient position in the transform coefficients of the current block satisfying the preset condition may include that: in a case where a partition type of the current block is dual tree partitioning, the last non-zero coefficient positions of all color components in the transform coefficients of the current block are greater than or equal to a first threshold; or in a case where a partition type of the current block is single tree partitioning, the last non-zero coefficient position of a luma component in the transform coefficients of the current block is greater than or equal to the first threshold.

It should be noted that in the embodiments of the present application, the first threshold may also be referred to as the minimum threshold. Here, the first threshold may be set to 1, or it may be a larger value, such as 2, 3, which is not specifically limited here.

It should also be noted that the embodiments of the present application impose no limitation on the case where the last non-zero coefficient position is equal to the first threshold. In other words, the last non-zero coefficient position in the transform coefficients of the current block satisfying the preset condition may include that: in a case where the prediction mode of the current block is an intra prediction mode or in the case of dual tree partitioning, the last non-zero coefficient positions of all color components in the transform coefficients of the current block are greater than the first threshold; or in a case where the prediction mode of the current block is an inter prediction mode or in the case of single tree partitioning, the last non-zero coefficient position of the luma component in the transform coefficients of the current block is greater than the first threshold.

For example, if it is assumed that the minimum threshold is equal to 1, then for intra prediction blocks, the related art is still applicable. That is, lfnst_idx is encoded only when the last non-zero coefficient positions of all color components are greater than or equal to 1; for the inter prediction block, lfnst_nspt_idx is encoded only when the last non-zero coefficient position of the Y component is greater than or equal to 1, without requiring U and V components. Alternatively, for the dual-tree partitioned block, lfnst_nspt_idx is encoded only when the last non-zero coefficient positions of all its color components are greater than or equal to 1; for the single-tree partitioned block, lfnst _idx is encoded only when the last non-zero coefficient position of the Y component is greater than or equal to 1, without requiring U and V components.

It can also be understood that, in the related art, lfnst _idx is encoded only when certain conditions are satisfied. One of these conditions is that the last non-zero coefficient position cannot be greater than a threshold, and the threshold is the maximum possible number of coefficients of LFNST or NSPT minus one. The threshold may be referred to as the maximum threshold here, and the maximum threshold may be determined according to the size parameter of the current block, namely, its length and width. For example, in a case where LFNST at the encoder side performs a secondary transform on a 4×4 block, the input of LFNST is DCT2-transformed coefficients in 4×4, and the output is 8 coefficients. That is, for the 4×4 block, LFNST can output at most only 8 coefficients. Therefore, for the decoder, if the last non-zero coefficient position of a 4×4 block exceeds 7, that is, (8-1), then it is certainly not output by LFNST. In this way, the decoder can determine that the current block did not use LFNST, and therefore, it is unnecessary to encode its syntax element. This restriction can significantly reduce unnecessary overhead caused by lfnst_nspt_idx. Moreover, the related art requires that the last non-zero coefficient positions of all color components cannot be greater than their respective maximum thresholds. For example, for a single-tree partitioned block in the YUV format, the last non-zero coefficient positions of three color components Y, U, and V cannot be greater than their respective maximum thresholds.

Thus, considering that the condition for LFNST/NSPT was originally designed for intra prediction, but LFNST/NSPT is now also applied to inter prediction, while their coefficients and residual patterns are different, therefore, the restriction condition may be modified.

In another possible implementation, the last non-zero coefficient position in the transform coefficients of the current block satisfying the preset condition may include that: in a case where a prediction mode of the current block is an intra prediction mode, the last non-zero coefficients positions of all color components in the transform coefficients of the current block are less than or equal to a second threshold; or in a case where the prediction mode of the current block is an inter prediction mode, the last non-zero coefficient position of a luma component in the transform coefficients of the current block is less than or equal to a second threshold.

In yet another possible implementation, the last non-zero coefficient position in the transform coefficients of the current block satisfying the preset condition may include that: in a case where a partition type of the current block is dual tree partitioning, the last non-zero coefficients positions of all color components in the transform coefficients of the current block are less than or equal to a second threshold; or in a case where a partition type of the current block is single tree partitioning, the last non-zero coefficient position of a luma component in the transform coefficients of the current block is less than or equal to the second threshold.

It should be noted that in the embodiments of the present application, the second threshold may also be referred to as the maximum threshold. In one specific embodiment, the second threshold may be determined based on the size parameter of the current block. For example, the second threshold may be determined based on the length and width of the current block. In another specific embodiment, the second threshold may be set to a difference between the maximum number of coefficients in the transform coefficients of the current block and one. For example, if LFNST on the current block outputs at most only 8 coefficients, the second threshold may be set to 7.

It should also be noted that the embodiments of the present application impose no limitation on the case where the last non-zero coefficient position equals to the second threshold. That is, the last non-zero coefficient position in the transform coefficients of the current block satisfying the preset condition may include that: in a case where the prediction mode of the current block is an intra prediction mode or in the case of dual tree partitioning, the last non-zero coefficient positions of all color components in the transform coefficients of the current block are less than the second threshold; or in a case where the prediction mode of the current block is an inter prediction mode or in the case of single tree partitioning, the last non-zero coefficient position of the luma component in the transform coefficients of the current block is less than the second threshold.

For example, for intra prediction blocks, the related art is still applicable. That is, lfnst idx is encoded only when the last non-zero coefficient positions of all color components are not greater than their respective maximum thresholds; for the inter prediction block, lfnst_nspt_idx is encoded only when the last non-zero coefficient position of the Y component is not greater than its maximum threshold, without requiring U and V components. Alternatively, for the dual-tree partitioned block, lfnst _nspt_idx is encoded only when the last non-zero coefficient positions of all its color components are not greater than the maximum threshold; for the single-tree partitioned block, lfnst_nspt_idx is encoded only when the last non-zero coefficient position of the Y component is not greater than its maximum threshold, without requiring U and V components.

That is, in the embodiments of the present application, depending on the situation, lfnst_nspt_idx may be encoded only when the last non-zero coefficient position of the Y component is greater than or equal to the minimum threshold, without requiring U and V components. Alternatively, depending on the situation, lfnst_nspt_idx may be encoded only when the last non-zero coefficient position of the Y component is not greater than the maximum threshold, without requiring U and V components.

In yet another embodiment of the present application, the embodiment of the application provides a bitstream. The bitstream is generated by performing bit encoding on information to be encoded, where the information to be encoded includes at least one of: quantization coefficients of a chroma components of a current block, or a value of the first syntax flag information; where the first syntax flag information is used to indicate whether the current block is allowed to use the first transform mode and a corresponding used transform kernel index.

In the embodiments of the present application, the first transform mode may be MTS/LFNST/NSPT. In a case where the mode parameter satisfies the first condition, for example, if the chroma component in the single-tree partitioned CU uses the cross-component prediction mode, then MTS/LFNST/NSPT is not applied to the chroma component of the CU; if the chroma component in the single-tree partitioned CU uses the cross-component prediction mode, MTS/LFNST/NSPT uses a different transform kernel or a different transform kernel set for the chroma component compared to the luma component.

The embodiments of the present application provide an encoding method. The method includes: determining a mode parameter of a chroma component of a current block; in a case where the mode parameter satisfies a first condition, determining a first transform kernel of the chroma component of the current block; determining a residual block of the chroma component of the current block, and performing transform on the residual block of the chroma component of the current block according to the first transform kernel to determine transform coefficients of the chroma component of the current block; and encoding the transform coefficients of the chroma component of the current block, and signalling the obtained encoded bits into a bitstream. In this way, the mode parameter of the current block is first determined; when the mode parameter satisfies the first condition, the first transform kernel of the chroma component of the current block is determined; and subsequently, a transform is performed on the residual block of the chroma component of the current block according to the first transform kernel. In other words, the determination of the first transform kernel is related to the mode parameter, which enables the application of MTS/LFNST/NSPT transform to chroma components in single tree partitioning, thereby not only improving compression efficiency but also enhancing encoding and decoding performance.

In yet another embodiment of the present application, based on the encoding/decoding method described in the aforementioned embodiments, MTS/LFNST/NSPT can be applied to the chroma component in the single tree in the embodiment of the present application. Optionally, MTS/LFNST/NSPT may be applied to intra single-tree partitioning and/or inter single-tree partitioning. However, considering hardware complexity and pipeline length, the following restriction conditions need to be satisfied.

If the chroma components in a single-tree partitioned CU uses the cross-component technology, for example, CCLM, CCCM, or inter-CCCM, one possible implementation is that MTS/LFNST/NSPT is not applied to the chroma component of the CU. Instead, a default transform kernel is used, for example, separable DCT2 is used in both the horizontal direction and the vertical direction.

Another possible implementation is that MTS/LFNST/NSPT uses a different transform kernel or a different kernel set for the chroma component compared to the luma component. Specifically, in some technologies, LFNST/NSPT determines a transform kernel set based on the intra prediction mode, and the intra prediction mode essentially represents a texture feature, such as, texture at a certain angle. LFNST/NSPT may select a corresponding transform kernel set based on the feature, and multiple selectable transform kernels may be present in each transform kernel set, such as, three transform kernels are selectable. Similarly, intra MTS also selects transform kernels based on the intra prediction mode. For the inter prediction, it inherently lacks an intra prediction mode, but a virtual intra prediction mode is derived from an inter prediction block according to the foregoing description. The virtual prediction mode, also referred to as a texture feature index, is used to select a LFNST/NSPT transform kernel set.

In addition, for a single-tree CU whose chroma component and luma component are predicted through the same prediction method, their residuals may also conform to the same texture feature, such as texture at a certain angle. However, for a single-tree CU whose chroma component and luma component are predicted through different prediction methods, their residuals may conform to different texture features. A typical example is cross-component prediction. Specifically, in cross-component prediction, a reconstructed block of the luma component is used to predict the chroma component. The reconstructed block of the luma component already includes a residual of the luma component, so a prediction block of the chroma component includes information transformed from the residual of the luma component. If the luma component and chroma component conform to different texture features, different transform kernels or transform kernel sets can be applied to them. One example is for LFNST/NSPT: the luma component uses its intra prediction mode or a virtual intra prediction mode to match a transform kernel set. If the cross-component prediction is applied to the chroma component, then a transform kernel set corresponding to DC or PLANAR or a transform kernel set specifically optimized for the cross-component prediction may be used for the chroma.

In the embodiments of the present application, the above descriptions are all based on texture features. For the commonly used YUV4:2:0 format, the number of samples in the luma component is four times that of one chroma component within the same CU, that is, sizes of the luma block and chroma block are different. For example, if the size of the luma block is $16 \times 16$, the size of the corresponding chroma block is $8 \times 8$. Consequently, the transform kernel or transform kernel set must also be of the corresponding size.

That is, in the embodiments of the present application, the MTS/LFNST/NSPT is applied to the chroma component in the single tree. Here, if the chroma component in the CU in the single tree uses the cross-component technology, the MTS/LFNST/NSPT is not applied to the chroma component of the CU. If the chroma component in the CU of the single tree uses the cross-component technology, the MTS/LFNST/NSPT uses a different transform kernel or transform kernel set for the chroma component than for the luma component.

It can also be understood that, in the embodiments of the present application, the first syntax flag information (e.g., lfnst_nspt_idx) is parsed only when certain conditions are satisfied. One of these conditions is that the last non-zero coefficient position is greater than or equal to 1. The scanning of quantization coefficients is performed in a hierarchical diagonal scan manner. One coefficient block is partitioned into $4 \times 4$ subblocks, the scanning of $4 \times 4$ subblocks is performed in a diagonal scan manner, and the scanning inside each $4 \times 4$ subblock is also performed in a diagonal scan manner. A position (0, 0) at the top-left corner of the current block corresponds to scan order 0, and the last non-zero coefficient position is greater than or equal to 1, which means that the current block has coefficients at positions other than (0, 0). For DCT2 transform, (0, 0) corresponds to a DC coefficient. That is, if the coefficients of the current block have a non-zero coefficient only at the position (0, 0), or in other words, have no non-zero coefficient except at position (0, 0), then the syntax element lfnst_nspt_idx does not need to be parsed and defaults to 0. This is because the possibility of using LFNST/NSPT in such case is very low, and this restriction can significantly reduce unnecessary overhead caused by lfnst_nspt_idx. Moreover, the related art requires that the last non-zero coefficient positions of all components must be greater than or equal to 1, for example, for a single-tree partitioned block in the YUV format, the last non-zero coefficient positions of Y, U, and V components all need to be greater than or equal to 1.

For the inter prediction block, its residual is inherently smaller than that of the intra-coded block. Furthermore, considering that the quality requirement for the chroma is generally much lower than that for the luma component, it often happens that for the inter prediction block, its luma has certain coefficients while its chroma has no coefficients. Although the condition for LFNST/NSPT was originally designed for intra prediction, LFNST/NSPT is now also applied to inter prediction. However, their coefficients and residual patterns are different. Therefore, the restriction condition may be modified.

One possible implementation is that: for the intra-coded block, the related art is till applicable, that is, lfnst_nspt_idx is parsed only when the last non-zero coefficient positions of all components are greater than or equal to 1; and for the inter-coded block, lfnst_nspt _idx is parsed only when the last non-zero coefficient position of the Y component is greater than or equal to 1, without requiring U and V components.

Another possible implementation is that: for the dual-tree partitioned block, lfnst _idx is parsed only when the last non-zero coefficient positions of all its components are greater than or equal to 1; and for the single-tree partitioned block, lfnst_nspt_idx is parsed only when the last non-zero coefficient position of the Y component is greater than or equal to 1, without requiring U and V components.

Furthermore, in the related art, the determination condition is set to that the last non-zero coefficient position is greater than or equal to 1, that is, the minimum possible threshold is 1, referred to here as the minimum threshold. The minimum threshold may also be set to a higher value, such as 2, or 3. For example, lfnst_nspt_idx is parsed only when the last non-zero coefficient position is greater than or equal to 2.

In the related art, lfnst idx is parsed only when certain conditions are satisfied. One of these conditions is that the last non-zero coefficient position cannot be greater than a threshold, and the threshold is the maximum possible number of coefficients of LFNST or NSPT minus one. The threshold may be referred to as the maximum threshold here, and the maximum threshold may be determined according to the size of the block, that is, its height and width. For example, in a case where LFNST at the encoder side performs a secondary transform on a 4×4 block, the input of LFNST is DCT2-transformed coefficients in 4×4, and the output is 8 coefficients. This is, for the 4×4 block, LFNST can output at most 8 coefficients. Therefore, for the decoder, if the last non-zero coefficient position of a 4×4 block exceeds 7, that is, (8-1), then it is certainly not output by LFNST. In this way, the decoder can determine that the current block did not use LFNST, and therefore, it is unnecessary to parse its syntax element. This restriction can significantly reduce unnecessary overhead caused by lfnst_nspt_idx.

Moreover, the related art requires that the last non-zero coefficient positions of all color components cannot be greater than their respective maximum thresholds. For example, for the single-tree partitioned block in the YUV format, the last non-zero coefficient positions of three color components Y, U, and V cannot be greater than their respective maximum thresholds. Although the condition for LFNST/NSPT was originally designed for intra prediction, the LFNST/NSPT is now also applied to inter prediction, while their coefficients and residual patterns are different, therefore, the restriction condition may be modified.

One possible implementation is that: for the intra-coded block, the related art is still applicable, that is, lfnst _nspt_idx is parsed only when the last non-zero coefficient positions of all components do not greater than their respective maximum thresholds; for the inter-coded block, lfnst _idx is parsed only when the last non-zero coefficient position of the Y component does not greater than its maximum threshold, without requiring U and V components.

Another possible implementation is that: for the dual-tree partitioned block, lfnst idx is parsed only when the last non-zero coefficient positions of all its components do not greater than the maximum threshold. For the single-tree partitioned block, lfnst _idx is parsed only when the last non-zero coefficient position of the Y component does not greater than its maximum threshold, without requiring U and V components.

That is, in the embodiments of the present application, depending on the situation, lfnst_nspt_idx may be parsed only when the last non-zero coefficient position of the Y component is greater than or equal to 1, without requiring U and V components; and depending on the situation, lfnst_nspt _idx may be parsed only when the last non-zero coefficient position of the Y component does not greater than the maximum threshold under certain conditions, without requiring U and V components.

In the embodiments of the present application, the specific implementation of the aforementioned embodiments is elaborated through the above embodiments. It can be seen that, according to the technical solutions of the aforementioned embodiments, applying MTS/LFNST/NSPT to the chroma component can improve compression efficiency. Considering the pipeline length of chroma component encoding, if the chroma component use the cross-component prediction mode, that is, the chroma components can only be predicted after the luma component obtains the reconstructed block. For the chroma component not using the cross-component prediction mode, the prediction of the luma component and the chroma component can be performed in parallel. That is, cross-component prediction will lengthen the pipeline of the chroma component. The LFNST is a secondary transform, which means that if the current block uses the LFNST, the inverse transform of the LFNST will be performed first, followed by the inverse transform of the primary transform, which will lengthen the pipeline. Therefore, the LFNST is not used in a case where the chroma uses the cross-component prediction, which may reduce the pipeline length, help control hardware complexity, thereby improving encoding and decoding performance.

In yet another embodiment of the present application, based on the same inventive concept as the aforementioned embodiments, referring to FIG. 45, a schematic diagram of a composition structure of an encoder provided in the embodiments of the present application is illustrated. As illustrated in FIG. 45, the encoder 450 may include a first determining unit 4501, a transform unit 4502, and an encoding unit 4503, where

the first determining unit 4501 is configured to: determine a mode parameter of a chroma component of the current block; and determine a first transform kernel of the chroma component of the current block in a case where the mode parameter satisfies a first condition;

the transform unit 4502 is configured to: determine a residual block of the chroma component of the current block, and transform the residual block of the chroma component of the current block according to the first transform kernel to determine transform coefficients of the chroma component of the current block; and

the encoding unit 4503 is configured to: encode the transform coefficients of the chroma component of the current block, and signal obtained encoded bits into a bitstream.

In some embodiments, the mode parameter satisfying the first condition includes that a partition type of the current block is single tree partitioning and a prediction mode of the chroma component of the current block is a cross-component prediction mode.

In some embodiments, the first determining unit 4501 is further configured to: determine a preset transform kernel as the first transform kernel of the chroma component of the current block.

In some embodiments, the first determining unit 4501 is further configured to: determine the first transform kernel set of the chroma component of the current block based on a first transform mode, where the first transform kernel set is different from a transform kernel set of a luma component of the current block; and determine the first transform kernel based on the first transform kernel set.

In some embodiments, the first determining unit 4501 is further configured to: determine a first transform kernel set of the chroma component of the current block based on a first transform mode, where the first transform kernel set is the same as a transform kernel set of a luma component of the current block; and determine the first transform kernel based on the first transform kernel set, where the first transform kernel is different from a transform kernel of the luma component of the current block.

In some embodiments, the first transform mode includes at least one of: a multiple transform selection mode, a low frequency non-separable transform mode, or a non-separable primary transform mode.

In some embodiments, the first determining unit 4501 is further configured to: perform cost value calculation for at least one candidate transform kernel in the first transform kernel set, to determine a respective cost value of the at least one candidate transform kernel; and determine the minimum cost value from the cost value of the at least one candidate transform kernel, and determine a candidate transform kernel corresponding to the minimum cost value as the first transform kernel.

In some embodiments, the first determining unit 4501 is further configured to: determine a value of first syntax flag information, where the first syntax flag information is used to indicate whether the current block uses the first transform mode and a corresponding used transform kernel index; and the encoding unit 4503 is further configured to: encode the value of the first syntax flag information, and signal the obtained encoding bits into the bitstream.

In some embodiments, the first determining unit 4501 is further configured to: determine the value of the first syntax flag information is a first value in a case where the current block does not use the first transform mode; or determine the value of the first syntax flag information is a second value in a case where the current block uses the first transform mode; where a value of the second value has an association relationship with the transform kernel index of the first transform kernel.

In some embodiments, the first determining unit 4501 is further configured to: determine a second transform kernel of the chroma component of the current block in a case where the mode parameter fails to satisfy the first condition; the transform unit 4502 is further configured to: determine a residual block of the chroma component of the current block and transform the residual block of the chroma component of the current block according to the second transform kernel to determine the transform coefficients of the chroma component of the current block; and the encoding unit 4503 is further configured to: encode the transform coefficients of the chroma component of the current block and signal obtained encoded bits into the bitstream.

In some embodiments, the mode parameter not satisfying the first condition includes that a partition type of the current block is dual tree partitioning or that a prediction mode of the chroma component of the current block is a non-cross-component prediction mode.

In some embodiments, the first determining unit 4501 is further configured to: determine a second transform kernel set of the chroma component of the current block based on a first transform mode; and determine the second transform kernel based on the second transform kernel set, where the first transform mode includes at least one of: a multiple transform selection mode, a low frequency non-separable transform mode, or a non-separable primary transform mode.

In some embodiments, referring to FIG. 45, the encoder 450 may further include a quantization unit 4504, where

the first determining unit 4501 is further configured to: determine transform coefficients of the current block, where the transform coefficients of the current block include the transform coefficients of the chroma component of the current block and transform coefficients of the luma component of the current block;

the quantization unit 4504 is configured to: quantize the transform coefficients of the current block to determine quantization coefficients of the current block; and

the encoding unit 4503 is further configured to: encode the quantization coefficients of the current block and signal obtained encoded bits into the bitstream.

In some embodiments, the encoding unit 4503 is further configured to: perform the step of encoding the value of the first syntax flag information and signalling the obtained encoded bits into the bitstream in a case where the last non-zero coefficient position in the transform coefficients of the current block satisfies a preset condition.

In some embodiments, the first determining unit 4501 is further configured to operate, when the last non-zero coefficient positions of all color components in the transform coefficients of the current block are greater than or equal to a first threshold in a case where a prediction mode of the current block is an intra prediction mode, or when the last non-zero coefficient position of a luma color component in the transform coefficients of the current block is greater than or equal to the first threshold in a case where a prediction mode of the current block is an inter prediction mode.

In some embodiments, the first determining unit 4501 is further configured to operate, when the last non-zero coefficient positions of all color components in the transform coefficients of the current block are greater than or equal to a first threshold in a case where a partition type of the current block is dual tree partitioning, or when the last non-zero coefficient position of a luma color component in the transform coefficients of the current block is greater than or equal to a first threshold in a case where a partition type of the current block is single tree partitioning.

In some embodiments, the first determining unit 4501 is further configured to operate, when the last non-zero coefficient positions of all color components in the transform coefficients of the current block are less than or equal to a second threshold in a case where a prediction mode of the current block is an intra prediction mode, or when the last non-zero coefficient position of a luma color component in the transform coefficients of the current block is less than or equal to the second threshold in a case where a prediction mode of the current block is an inter prediction mode.

In some embodiments, the first determining unit 4501 is further configured to operate, when the last non-zero coefficient positions of all color components in the transform coefficients of the current block are less than or equal to a second threshold in a case where a partition type of the current block is dual tree partitioning, or when the last non-zero coefficient position of a luma color component in the transform coefficients of the current block is less than or equal to the second threshold in a case where a partition type of the current block is single tree partitioning.

In some embodiments, the first determining unit 4501 is further configured to: determine the second threshold based on a size parameter of the current block.

In some embodiments, the first determining unit 4501 is further configured to set the second threshold to a difference between the maximum number of coefficients in the transform coefficients of the current block and one.

In some embodiments, the first determining unit 4501 is further configured to: determine a prediction block of the chroma component of the current block; and determine the residual block of the chroma component of the current block, according to an original block of the chroma component of the current block and the prediction block of the chroma component of the current block.

It can be understood that in the embodiments of the present application, a "unit" may be part of a circuit, a part of a processor, a part of a program or software, etc., and of course may also be a module or a non-modular one. Moreover, the various components in the embodiments may be integrated into one processing unit, or each unit may exist physically alone, or two or more units may be integrated into one unit. The integrated unit may be implemented in the form of hardware or in the form of a software functional module.

If the integrated unit is implemented in the form of a software functional module and is not sold or used as an independent product, it may be stored in a computer-readable storage medium. Based on such understanding, the technical solution of this embodiment, or in essences, its part that contributes to the prior art, or all or part of the technical solution may be embodied in the form of a software product. The computer software product is stored in a storage medium and includes several instructions used to cause a computer device (which may be a personal computer, a server, or a network device, etc.) or a processor to perform all or part of the steps in the methods of the embodiments. The aforementioned storage medium includes various media that can store program codes, such as an USB disk, a mobile hard disk, a read only memory (ROM), a random access memory (RAM), a magnetic disk, or an optical disk.

Therefore, the embodiments of the present application provide a computer-readable storage medium applied to the encoder 450. The computer-readable storage medium has a computer program stored thereon. When the computer program is executed by a first processor, the method according to any of the aforementioned embodiments is implemented.

Based on the composition of the encoder 450 and the computer-readable storage medium, referring to FIG. 46, a schematic diagram of a specific hardware structure of the encoder 450 provided in the embodiments of the present application is illustrated. As illustrated in FIG. 46, the encoder 450 may include: a first communication interface 4601, a first memory 4602, and a first processor 4603, and the various components are coupled together via a first bus system 4604. It can be understood that the first bus system 4604 is used to achieve connection and communication between the components. Besides a data bus, the first bus system 4604 also includes a power bus, a control bus, and a status signal bus. However, for the sake of clarity, the various buses in FIG. 46 are all marked as the first bus system 4604, where

the first communication interface 4601 is configured to receive and transmit signals during the process of transmitting information to other external network elements and receiving information from other external network elements;

the first memory 4602 is configured to store a computer program executable on the first processor 4603; and

the first processor 4603 is configured to, when executing the computer program, perform:

determining a mode parameter of a chroma component of a current block;

in a case where the mode parameter satisfies a first condition, determining a first transform kernel of the chroma component of the current block;

determining a residual block of the chroma component of the current block, and performing transform on the residual block of the chroma component of the current block according to the first transform kernel to determine transform coefficients of the chroma component of the current block; and

encoding the transform coefficients of the chroma component of the current block, and signalling obtained encoded bits into a bitstream.

It can be understood that the first memory 4602 in the embodiments of the present application may be a volatile memory or a non-volatile memory, or may include both volatile and non-volatile memories. The non-volatile memory may be a read-only memory (ROM), a programmable read-only memory (programmable ROM, PROM), an erasable programmable read-only memory (Erasable PROM, EPROM), an electrically erasable programmable read-only memory (electrically EPROM, EEPROM). or a flash memory. The volatile memory may be a random access memory (RAM), which is used as an external cache. As an example but not limitation, a variety of forms of RAMs are available, such as a static random access memory (static RAM, SRAM), a dynamic random access memory (Dynamic RAM, DRAM), a synchronous dynamic random access memory (synchronous DRAM, SDRAM), a double data rate synchronous dynamic random access memory (double Data Rate SDRAM, DDR SDRAM), an enhanced synchronous dynamic random access memory (enhanced SDRAM, ESDRAM), a synchronous link dynamic random access memory (synchlink DRAM, SLDRAM), and a direct memory bus random access memory (Direct Rambus RAM, DR RAM). The first memory 4602 in the system and method described herein is intended to include, but is not limited to, these and any other suitable types of memories.

The first processor 4603 may be an integrated circuit chip with signal processing capabilities. During implementation, various steps in the above method may be implemented through hardware integrated logic circuits in the first processor 4603 or instructions in the form of software. The first processor 4603 mentioned above may be a general-purpose processor, a digital signal processor (DSP), an application specific integrated circuit (ASIC), a field programmable gate array (FPGA) or other programmable logic device, a discrete gate, a transistor logic device, or a discrete hardware component, which can implement or execute the methods, steps and logic block diagrams disclosed in the embodiments of the present application. The general-purpose processor may be a microprocessor or any conventional processor. The steps of the methods disclosed based on the embodiments of the present application may be executed by the decoding processor implemented directly in hardware, or may be executed together by the hardware module and software module in the decoding processor. The software module may reside in a random memory, a flash memory, a read-only memory, a programmable read-only memory, an electrically erasable programmable memory, a register or other storage media well-known in the art. The storage medium is located in the first memory 4602, and the first processor 4603 reads the information in the first memory 4602 and completes the steps of the above methods in combination with its hardware.

It can be understood that the embodiments described herein may be implemented by hardware, software, firmware, middleware, microcode, or a combination thereof. For hardware implementation, the processing unit may be implemented in one or more application specific integrated circuits (ASICs), digital signal processors (DSPs), digital signal processing devices (DSPDs), programmable logic devices (PLDs), field programmable gate arrays (FPGAs), general-purpose processors, controllers, microcontrollers, microprocessors, or other electronic units for executing the functions described in the present application, or a combination thereof. For software implementation, the technology described in the present application may be implemented through modules (e.g., procedures, functions) that perform the functions described in the present application. The software codes may be stored in a memory and performed by a processor. The memory may be implemented within the processor or external to the processor.

Optionally, as another embodiment, the first processor 4603 is further configured to, when executing the computer program, perform the method according to any of the aforementioned embodiments.

The embodiments provide an encoder. At the encoder side, the mode parameter of the current block is first determined; when the mode parameter satisfies the first condition, the first transform kernel of the chroma component of the current block is determined; and subsequently, a transform is performed on the residual block of the chroma component of the current block according to the first transform kernel. In other words, the determination of the first transform kernel is related to the mode parameter, which enables the application of the MTS/LFNST/NSPT transform to chroma components in single tree partitioning, thereby not only improving compression efficiency but also enhancing encoding and decoding performance..

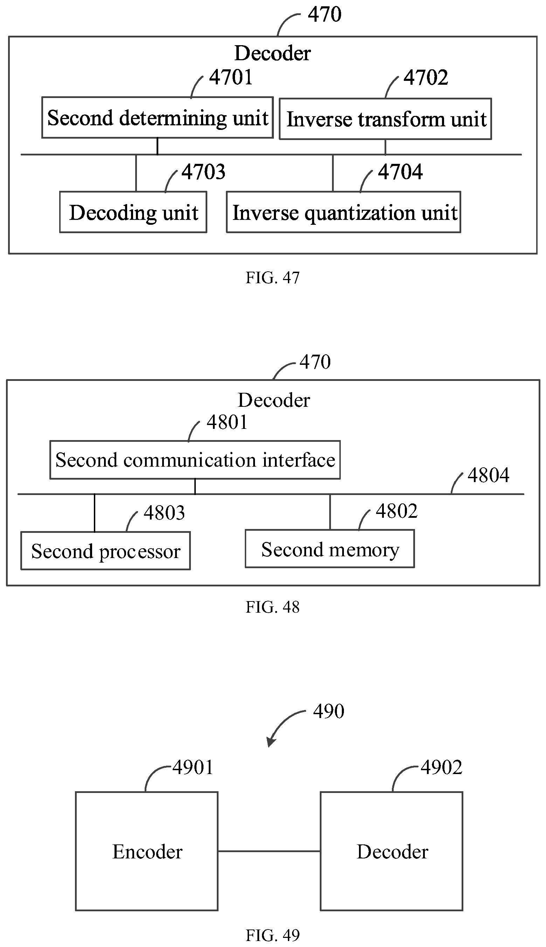

Based on the same inventive concept as the aforementioned embodiments, referring to FIG. 47, a schematic diagram of a composition structure of a decoder provided in the embodiments of the present application is illustrated. As illustrated in FIG. 47, the decoder 470 may include a second determining unit 4701 and an inverse transform unit 4702, where

the second determining unit 4701 is configured to: determine a mode parameter of a chroma component of a current block, and determine a first transform kernel of the chroma component of the current block in a case where the mode parameter satisfies a first condition; and

the inverse transform unit 4702 is configured to: determine transform coefficients of the chroma component of the current block, and perform inverse transform on the transform coefficients of the chroma component of the current block according to the first transform kernel to determine a residual block of the chroma component of the current block.

In some embodiments, the mode parameter satisfying the first condition includes that a partition type of the current block is single tree partitioning and a prediction mode of the chroma component of the current block is a cross-component prediction mode.

In some embodiments, the second determining unit 4701 is further configured to: determine a preset transform kernel as the first transform kernel of the chroma component of the current block.

In some embodiments, the second determining unit 4701 is further configured to: determine a first transform kernel set of the chroma component of the current block based on a first transform mode, where the first transform kernel set is different from a transform kernel set of a luma component of the current block; and determine the first transform kernel based on the first transform kernel set.

In some embodiments, the second determining unit 4701 is further configured to: determine a first transform kernel set of the chroma component of the current block based on a first transform mode, where the first transform kernel set is the same as the transform kernel set of a luma component of the current block; and determine the first transform kernel based on the first transform kernel set, where the first transform kernel is different from a transform kernel of the luma component of the current block.

In some embodiments, the first transform mode includes at least one of: a multiple transform selection mode, a low frequency non-separable transform mode, or a non-separable primary transform mode.

In some embodiments, referring to FIG. 47, the decoder 470 may further include a decoding unit 4703, which is configured to decode a bitstream to determine a value of first syntax flag information. The second determining unit 4701 is further configured to: determine a transform kernel index of the current block, in a case where the first syntax flag information indicates that the current block uses the first transform mode; and determine the first transform kernel based on the first transform kernel set and the transform kernel index.

In some embodiments, the second determining unit 4701 is further configured to: determine a second transform kernel of the chroma component of the current block in a case where the mode parameter fails to satisfy the first condition. The inverse transform unit 4702 is further configured to: determine the transform coefficients of the chroma component of the current block, and perform inverse transform on the transform coefficients of the chroma component of the current block according to the second transform kernel to determine a residual block of the chroma component of the current block.

In some embodiments, the mode parameter not satisfying the first condition includes that a partition type of the current block is dual tree partitioning or that a prediction mode of the chroma component of the current block is a non-cross-component prediction mode.

In some embodiments, the second determining unit 4701 is further configured to: determine a second transform kernel set of the chroma component of the current block based on the first transform mode, and determine the second transform kernel based on the second transform kernel set; where the first transform mode includes at least one of: a multiple transform selection mode, a low frequency non-separable transform mode, or a non-separable primary transform mode.

In some embodiments, referring to FIG. 47, the decoder 470 may further include an inverse quantization unit 4704, where

the decoding unit 4703 is further configured to decode a bitstream to determine quantization coefficients of the chroma component of the current block; and the inverse quantization unit 4704 is configured to perform inverse quantization on the quantization coefficients of the chroma component of the current block to determine the transform coefficients of the chroma component of the current block.

In some embodiments, transform coefficients of the current block include the transform coefficients of the chroma component of the current block and the transform coefficients of the luma component of the current block; correspondingly, the decoding unit 4703 is further configured to decode the bitstream to determine quantization coefficients of the luma component of the current block; and the inverse quantization unit 4704 is further configured to: perform inverse quantization on the quantization coefficients of the luma component of the current block to determine the transform coefficients of the luma component of the current block.

In some embodiments, the decoding unit 4703 is further configured to: perform the step of decoding the bitstream to determine the value of the first syntax flag information in a case where the last non-zero coefficient position in the transform coefficients of the current block satisfies a preset condition.

In some embodiments, the second determining unit 4701 is further configured to operate, when the last non-zero coefficient positions of all color components in the transform coefficients of the current block are greater than or equal to a first threshold in a case where a prediction mode of the current block is an intra prediction mode, or when the last non-zero coefficient position of a luma color component in the transform coefficients of the current block is greater than or equal to the first threshold, in a case where a prediction mode of the current block is an inter prediction mode.

In some embodiments, the second determining unit 4701 is further configured to operate, when the last non-zero coefficient positions of all color components in the transform coefficients of the current block are greater than or equal to a first threshold in a case where a partition type of the current block is dual tree partitioning, or when the last non-zero coefficient position of a luma color component in the transform coefficients of the current block is greater than or equal to a first threshold in a case where a partition type of the current block is single tree partitioning.

In some embodiments, the second determining unit 4701 is further configured to operate, when the last non-zero coefficient positions of all color components in the transform coefficients of the current block are less than or equal to a second threshold in a case where a prediction mode of the current block is an intra prediction mode, or when the last non-zero coefficient position of a luma color component in the transform coefficients of the current block is less than or equal to a second threshold in a case where a prediction mode of the current block is an inter prediction mode.

In some embodiments, the second determining unit 4701 is further configured to operate, when the last non-zero coefficient positions of all color components in the transform coefficients of the current block are less than or equal to a second threshold in a case where a partition type of the current block is dual tree partitioning, or when the last non-zero coefficient position of a luma color component in the transform coefficients of the current block is less than or equal to the second threshold in a case where a partition type of the current block is single tree partitioning.

In some embodiments, the second determining unit 4701 is further configured to: determine the second threshold based on a size parameter of the current block.

In some embodiments, the second determining unit 4701 is further configured to set the second threshold to a difference between the maximum number of coefficients in the transform coefficients of the current block and one.

In some embodiments, the second determining unit 4701 is further configured to: determine a prediction block of the chroma component of the current block; and determine a reconstructed block of the chroma component of the current block, according to the prediction block of the chroma component of the current block and the residual block of the chroma component of the current block.

It can be understood that in the embodiments of the present application, a "unit" may be part of a circuit, a part of a processor, a part of a program or software, etc., and of course it may also be a module or a non-modular one. Moreover, the various components in the embodiments may be integrated into one processing unit, or each unit may exist physically alone, or two or more units may be integrated into one unit. The integrated unit may be implemented in the form of hardware or in the form of a software functional module.

If the integrated unit is implemented in the form of a software function module and is not sold or used as an independent product, it may be stored in a computer-readable storage medium. Based on such understanding, the embodiments provide a computer-readable storage medium applied to the decoder 470. The computer-readable storage medium has a computer program stored thereon, and when the computer program is executed by a second processor, the method according to any of the aforementioned embodiments is implemented.

Based on the composition of the decoder 470 and the computer-readable storage medium, referring to FIG. 48, a schematic diagram of a specific hardware structure of the decoder 470 provided in the embodiment of the present application is illustrated. As illustrated in FIG. 48, the decoder 470 may include: a second communication interface 4801, a second memory 4802, and a second processor 4803, and the various components are coupled together via a second bus system 4804. It can be understood that the second bus system 4804 is used to achieve connection and communication between the components. Besides a data bus, the second bus system 4804 also includes a power bus, a control bus, and a status signal bus. However, for the sake of clarity, the various buses in FIG. 48 are all marked as the second bus system 4804, where

the second communication interface 4801 is configured to receive and transmit signals during the process of transmitting information to other external network elements and receiving information from other external network elements;

the second memory 4802 is configured to store a computer program executable on the second processor 4803; and

the second processor 4803 is configured to, when executing the computer program, perform:
determining a mode parameter of a chroma component of a current block; in a case where the mode parameter satisfies a first condition, determining a first transform kernel of the chroma component of the current block; and determining transform coefficients of the chroma component of the current block, and performing inverse transform on the transform coefficients of the chroma component of the current block according to the first transform kernel to determine a residual block of the chroma component of the current block.

Optionally, as another embodiment, the second processor 4803 is further configured to, when executing the computer program, perform the method according to any of the aforementioned embodiments.

It can be understood that the hardware function of the second memory 4802 is similar to that of the first memory 4602, and the hardware function of the second processor 4803 is similar to that of the first processor 4603, which will not be described in detail here.

The embodiments provide a decoder, at the decoder side, the mode parameter of the current block is first determined; when the mode parameter satisfies the first condition, the first transform kernel of the chroma component of the current block is determined; and subsequently, a transform is performed on the residual block of the chroma component of the current block according to the first transform kernel. In other words, the determination of the first transform kernel is related to the mode parameter, which enables the application of the MTS/LFNST/NSPT transform to chroma components in single tree partitioning, thereby not only improving compression efficiency but also enhancing encoding and decoding performance.

In yet another embodiment of the present application, referring to FIG. 49, a schematic diagram of a composition structure of an encoding and decoding system provided in the embodiments of the present application is illustrated. As illustrated in FIG. 49, the encoding and decoding system 490 may include an encoder 4901 and a decoder 4902.

In the embodiments of the present application, the encoder 4901 may be the encoder according to any of the aforementioned embodiments, and the decoder 4902 may be the decoder according to any of the aforementioned embodiments.

It should be noted that, in the present application, the terms "comprises", "includes" or any other variations thereof are intended to cover non-exclusive inclusion, so that a process, a method, an article or an apparatus including a series of elements includes not only those elements, but also other elements not explicitly listed, or also includes elements inherent to such the process, the method, the article or the apparatus. Without more constraints, an element defined by the phrase "including a..." does not exclude the existence of other identical elements in the process, the method, the article or the apparatus including the element.

The serial numbers of the embodiments of the present application are for description only and do not indicate the advantages or disadvantages of the embodiments.

The methods disclosed in several method embodiments provided in the present application may be arbitrarily combined without conflict to obtain new method embodiments.

The features disclosed in several product embodiments provided in the present application may be arbitrarily combined without conflict to obtain new product embodiments.

The features disclosed in several method or device embodiments provided in the present application may be arbitrarily combined without conflict to obtain new method embodiments or new device embodiments.

The foregoing descriptions are merely specific implementations of the present application, but the protection scope of the present application is not limited thereto. Any person skilled in the art may readily conceive of changes or replacements within the technical scope of the present application, which shall be all included within the protection scope of the present application. Therefore, the protection scope of the present application shall be subject to the protection scope of claims.

INDUSTRIAL APPLICABILITY

In the embodiments of the present application, at the encoder side, a mode parameter of a chroma component of a current block is determined; in a case where the mode parameter satisfies a first condition, a first transform kernel of the chroma component of the current block is determined; a residual block of the chroma component of the current block is determined, and a transform is performed on a residual block of the chroma component of the current block according to the first transform kernel to determine transform coefficients of the chroma component of the current block; the transform coefficients of the chroma component of the current block are encoded, and the obtained encoded bits are signalled into the bitstream. At the decoder side, a mode parameter of a chroma component of a current block is determined; in a case where the mode parameter satisfies a first condition, a first transform kernel of the chroma component of the current block is determined; transform coefficients of the chroma component of the current block are determined, and inverse transform is performed on the transform coefficients of the chroma component of the current block according to the first transform kernel to determine a residual block of the chroma component of the current block. In this way, at both the encoder side and the decoder side, the mode parameter of the current block is first determined; when the mode parameter satisfies the first condition, the first transform kernel of the chroma component of the current block is determined; and subsequently, a transform is performed on the residual block of the chroma component of the current block according to the first transform kernel. In other words, the determination of the first transform kernel is related to the mode parameter, which enables the application of the MTS/LFNST/NSPT transform to chroma components in single tree partitioning, thereby not only improving compression efficiency but also enhancing encoding and decoding performance.

**Claims**

1. A decoding method, applied to a decoder, and comprising:

    determining a mode parameter of a chroma component of a current block;
    in a case where the mode parameter satisfies a first condition, determining a first transform kernel of the chroma component of the current block; and
    determining transform coefficients of the chroma component of the current block, and performing inverse transform on the transform coefficients of the chroma component of the current block according to the first transform kernel to determine a residual block of the chroma component of the current block.

2. The method according to claim 1, wherein the mode parameter satisfying the first condition comprises that a partition type of the current block is single tree partitioning and a prediction mode of the chroma component of the current block is a cross-component prediction mode.

3. The method according to claim 2, wherein determining the first transform kernel of the chroma component of the current block comprises: determining a preset transform kernel as the first transform kernel of the chroma component of the current block.

4. The method according to claim 2, wherein determining the first transform kernel of the chroma component of the current block comprises:

    determining a first transform kernel set of the chroma component of the current block based on a first transform mode, wherein the first transform kernel set is different from a transform kernel set of a luma component of the current block; and
    determining the first transform kernel based on the first transform kernel set.

5. The method according to claim 2, wherein determining the first transform kernel of the chroma component of the current block comprises:

    determining a first transform kernel set of the chroma component of the current block based on a first transform mode, wherein the first transform kernel set is the same as a transform kernel set of a luma component of the current block; and
    determining the first transform kernel based on the first transform kernel set, wherein the first transform kernel is different from a transform kernel of the luma component of the current block.

6. The method according to claim 4 or 5, wherein the first transform mode comprises at least one of: a multiple transform selection mode, a low frequency non-separable transform mode, or a non-separable primary transform mode.

7. The method according to claim 4 or 5, wherein determining the first transform kernel based on the first transform kernel set comprises:

decoding a bitstream to determine a value of first syntax flag information;
in a case where the first syntax flag information indicates that the current block uses the first transform mode, determining a transform kernel index of the current block; and
determining the first transform kernel based on the first transform kernel set and the transform kernel index.

8. The method according to claim 1, further comprising:

   in a case where the mode parameter fails to satisfy the first condition, determining a second transform kernel of the chroma component of the current block; and
   determining the transform coefficients of the chroma component of the current block, and performing inverse transform on the transform coefficients of the chroma component of the current block according to the second transform kernel to determine a residual block of the chroma component of the current block.

9. The method according to claim 8, wherein the mode parameter not satisfying the first condition comprises that a partition type of the current block is dual tree partitioning or that a prediction mode of the chroma component of the current block is a non-cross-component prediction mode.

10. The method according to claim 8, wherein determining the second transform kernel of the chroma component of the current block comprises:

    determining a second transform kernel set of the chroma component of the current block based on a first transform mode; and
    determining the second transform kernel based on the second transform kernel set, wherein the first transform mode comprises at least one of: a multiple transform selection mode, a low frequency non-separable transform mode, or a non-separable primary transform mode.

11. The method according to any one of claims 1 to 10, wherein determining the transform coefficients of the chroma component of the current block comprises:

    decoding a bitstream to determine quantization coefficients of the chroma component of the current block; and
    performing inverse quantization on the quantization coefficients of the chroma component of the current block to determine the transform coefficients of the chroma component of the current block.

12. The method according to claim 7, wherein transform coefficients of the current block comprise the transform coefficients of the chroma component of the current block and transform coefficients of the luma component of the current block, and the method further comprises:

    decoding the bitstream, to determine quantization coefficients of the luma component of the current block; and
    performing inverse quantization on the quantization coefficients of the luma component of the current block to determine the transform coefficients of the luma component of the current block.

13. The method according to claim 12, further comprising:
    in a case where the last non-zero coefficient position in the transform coefficients of the current block satisfies a preset condition, performing the step of decoding the bitstream to determine the value of the first syntax flag information.

14. The method according to claim 13, wherein the last non-zero coefficient position in the transform coefficients of the current block satisfying the preset condition comprises that:

    in a case where a prediction mode of the current block is an intra prediction mode, the last non-zero coefficient positions of all color components in the transform coefficients of the current block are greater than or equal to a first threshold; or
    in a case where a prediction mode of the current block is an inter prediction mode, the last non-zero coefficient position of a luma color component in the transform coefficients of the current block is greater than or equal to the first threshold.

15. The method according to claim 13, wherein the last non-zero coefficient position in the transform coefficients of the current block satisfying the preset condition comprises that:

in a case where a partition type of the current block is dual tree partitioning, the last non-zero coefficient positions of all color components in the transform coefficients of the current block are greater than or equal to a first threshold; or

in a case where a partition type of the current block is single tree partitioning, the last non-zero coefficient position of a luma color component in the transform coefficients of the current block is greater than or equal to a first threshold.

16. The method according to claim 13, wherein the last non-zero coefficient position in the transform coefficients of the current block satisfying the preset condition comprises that:

in a case where a prediction mode of the current block is an intra prediction mode, the last non-zero coefficient positions of all color components in the transform coefficients of the current block are less than or equal to a second threshold; or

in a case where a prediction mode of the current block is an inter prediction mode, the last non-zero coefficient position of a luma color component in the transform coefficients of the current block is less than or equal to a second threshold.

17. The method according to claim 13, wherein the last non-zero coefficient position in the transform coefficients of the current block satisfying the preset condition comprises that:

in a case where a partition type of the current block is dual tree partition, the last non-zero coefficient positions of all color components in the transform coefficients of the current block are less than or equal to a second threshold; or
in a case where a partition type of the current block is single tree partition, the last non-zero coefficient position of a luma color component in the transform coefficients of the current block is less than or equal to the second threshold.

18. The method according to claim 16 or 17, further comprising:
determining the second threshold based on a size parameter of the current block.

19. The method according to claim 16 or 17, further comprising:
setting the second threshold to a difference between the maximum number of coefficients in the transform coefficients of the current block and one.

20. The method according to any one of claims 1 to 19, further comprising:

determining a prediction block of the chroma component of the current block; and
determining a reconstructed block of the chroma component of the current block, according to the prediction block of the chroma component of the current block and the residual block of the chroma component of the current block.

21. An encoding method, applied to an encoder, and comprising:

determining a mode parameter of a chroma component of a current block;
in a case where the mode parameter satisfies a first condition, determining a first transform kernel of the chroma component of the current block;
determining a residual block of the chroma component of the current block, and performing transform on the residual block of the chroma component of the current block according to the first transform kernel to determine transform coefficients of the chroma component of the current block; and
encoding the transform coefficients of the chroma component of the current block, and signalling obtained encoded bits into a bitstream.

22. The method according to claim 21, wherein the mode parameter satisfying the first condition comprises that a partition type of the current block is single tree partitioning and a prediction mode of the chroma component of the current block is a cross-component prediction mode.

23. The method according to claim 22, wherein determining the first transform kernel of the chroma component of the current block comprises: determining a preset transform kernel as the first transform kernel of the chroma component of the current block.

24. The method according to claim 22, wherein determining the first transform kernel of the chroma component of the current block comprises:

determining a first transform kernel set of the chroma component of the current block based on a first transform mode, wherein the first transform kernel set is different from a transform kernel set of a luma component of the current block; and
determining the first transform kernel based on the first transform kernel set.

25. The method according to claim 22, wherein determining the first transform kernel of the chroma component of the current block comprises:

determining a first transform kernel set of the chroma component of the current block based on a first transform mode, wherein the first transform kernel set is the same as a transform kernel set of a luma component of the current block; and
determining the first transform kernel based on the first transform kernel set, wherein the first transform kernel is different from a transform kernel of the luma component of the current block.

26. The method according to claim 24 or 25, wherein the first transform mode comprises at least one of: a multiple transform selection mode, a low frequency non-separable transform mode, or a non-separable primary transform mode.

27. The method according to claim 24 or 25, wherein determining the first transform kernel based on the first transform kernel set comprises:

performing cost value calculation for at least one candidate transform kernel in the first transform kernel set, to determine a respective cost value of the at least one candidate transform kernel; and
determining the minimum cost value from the respective cost value of the at least one candidate transform kernel, and determining a candidate transform kernel corresponding to the minimum cost value as the first transform kernel.

28. The method according to claim 27, further comprising:

determining a value of first syntax flag information, wherein the first syntax flag information is used to indicate whether the current block uses the first transform mode and a corresponding used transform kernel index; and
encoding the value of the first syntax flag information, and signalling obtained encoded bits into the bitstream.

29. The method according to claim 28, wherein determining the value of the first syntax flag information comprises that:

in a case where the current block does not use the first transform mode, determining the value of the first syntax flag information is a first value; or
in a case where the current block uses the first transform mode, determining the value of the first syntax flag information is a second value; wherein a value of the second value has an association relationship with the transform kernel index of the first transform kernel.

30. The method according to claim 21, further comprising:

in a case where the mode parameter fails to satisfy the first condition, determining a second transform kernel of the chroma component of the current block;
determining a residual block of the chroma component of the current block, and performing transform on the residual block of the chroma component of the current block according to the second transform kernel to determine the transform coefficients of the chroma component of the current block; and
encoding the transform coefficients of the chroma component of the current block, and signalling obtained encoded bits into the bitstream.

31. The method according to claim 30, wherein the mode parameter not satisfying the first condition comprises that a partition type of the current block is dual tree partitioning or that a prediction mode of the chroma component of the current block is a non-cross-component prediction mode.

32. The method according to claim 30, wherein determining the second transform kernel of the chroma component of the current block comprises:

   determining a second transform kernel set of the chroma component of the current block based on a first transform mode; and
   determining the second transform kernel based on the second transform kernel set, wherein the first transform mode comprises at least one of: a multiple transform selection mode, a low frequency non-separable transform mode, or a non-separable primary transform mode.

33. The method according to claim 28, further comprising:

   determining transform coefficients of the current block, wherein the transform coefficients of the current block comprise the transform coefficients of the chroma component of the current block and transform coefficients of the luma component of the current block;
   quantizing the transform coefficients of the current block to determine quantization coefficients of the current block; and
   encoding the quantization coefficients of the current block, and signalling obtained encoded bits into the bitstream.

34. The method according to claim 33, further comprising:
   in a case where the last non-zero coefficient position in the transform coefficients of the current block satisfies a preset condition, performing the step of encoding the value of the first syntax flag information and signalling the obtained encoded bits into the bitstream.

35. The method according to claim 34, wherein the last non-zero coefficient position in the transform coefficients of the current block satisfying the preset condition comprises that:

   in a case where a prediction mode of the current block is an intra prediction mode, the last non-zero coefficient positions of all color components in the transform coefficients of the current block are greater than or equal to a first threshold; or
   in a case where a prediction mode of the current block is an inter prediction mode, the last non-zero coefficient position of a luma color component in the transform coefficients of the current block is greater than or equal to a first threshold.

36. The method according to claim 34, wherein the last non-zero coefficient position in the transform coefficients of the current block satisfying the preset condition comprises that:

   in a case where a partition type of the current block is dual tree partitioning, the last non-zero coefficient positions of all color components in the transform coefficients of the current block are greater than or equal to a first threshold; or
   in a case where a partition type of the current block is single tree partitioning, the last non-zero coefficient position of a luma color component in the transform coefficients of the current block is greater than or equal to a first threshold.

37. The method according to claim 34, wherein the last non-zero coefficient position in the transform coefficients of the current block satisfying the preset condition comprises that:

   in a case where a prediction mode of the current block is an intra prediction mode, the last non-zero coefficient positions of all color components in the transform coefficients of the current block are less than or equal to a second threshold; or
   in a case where a prediction mode of the current block is an inter prediction mode, the last non-zero coefficient position of a luma color component in the transform coefficients of the current block is less than or equal to the second threshold.

38. The method according to claim 34, wherein the last non-zero coefficient position in the transform coefficients of the current block satisfying the preset condition comprises that:

   in a case where a partition type of the current block is dual tree partitioning, the last non-zero coefficient positions of all color components in the transform coefficients of the current block are less than or equal to a second threshold; or

in a case where a partition type of the current block is single tree partitioning, the last non-zero coefficient position of a luma color component in the transform coefficients of the current block is less than or equal to a second threshold.

39. The method according to claim 37 or 38, further comprising:
determining the second threshold based on a size parameter of the current block.

40. The method according to claim 37 or 38, further comprising:
setting the second threshold to a difference between the maximum number of coefficients in the transform coefficients of the current block and one.

41. The method according to any one of claims 21 to 40, wherein determining the residual block of the chroma component of the current block comprises:

determining a prediction block of the chroma component of the current block; and
determining the residual block of the chroma component of the current block, according to an original block of the chroma component of the current block and the prediction block of the chroma component of the current block.

42. A bitstream, wherein the bitstream is generated by performing bit encoding on information to be encoded, and the information to be encoded comprises at least one of:
quantization coefficients of a chroma component of a current block, or a value of first syntax flag information; wherein the first syntax flag information is used to indicate whether the current block is allowed to use a first transform mode and a corresponding used transform kernel index.

43. An encoder, comprising a first determining unit, a transform unit, and an encoding unit, wherein

the first determining unit is configured to: determine a mode parameter of a chroma component of a current block, and determine a first transform kernel of the chroma component of the current block in a case where the mode parameter satisfies a first condition;
the transform unit is configured to: determine a residual block of the chroma component of the current block, and transform the residual block of the chroma component of the current block according to the first transform kernel to determine transform coefficients of the chroma component of the current block; and
the encoding unit is configured to: encode the transform coefficients of the chroma component of the current block, and signal obtained encoded bits into a bitstream.

44. An encoder, comprising a first memory and a first processor, wherein

the first memory is configured to store a computer program executable on the first processor; and
the first processor is configured to, when executing the computer program, perform the method according to any one of claims 21 to 41.

45. A decoder, comprising a second determining unit and an inverse transform unit, wherein

the second determining unit is configured to: determine a mode parameter of a chroma component of a current block, and determine a first transform kernel of the chroma component of the current block in a case where the mode parameter satisfies a first condition; and
the inverse transform unit is configured to: determine transform coefficients of the chroma component of the current block, and perform inverse transform on the transform coefficients of the chroma component of the current block according to the first transform kernel to determine a residual block of the chroma component of the current block.

46. A decoder, comprising a second memory and a second processor, wherein

the second memory is configured to store a computer program executable on the second processor; and
the second processor is configured to, when executing the computer program, perform the method according to any one of claims 1 to 20.

**47.** A computer-readable storage medium, having a computer program stored thereon, wherein when the computer program is executed by at least one processor, the method according to any one of claims 1 to 20 or the method according to any one of claims 21 to 41 is implemented.

FIG. 1

| Picture order count | 0 | 1 | 2 | 3 | 4 | 5 | 6 | 7 | 8 |
|---|---|---|---|---|---|---|---|---|---|
| Decoding order | 0 | 3 | 2 | 4 | 1 | 7 | 6 | 8 | 5 |

FIG. 2

（a）　　　　　　　　　（b）　　　　　　　　　（c）

FIG. 3

FIG. 4

col_ref        cuff_ref       cuff_pic       col_pic

Current
block

Collocated
block

tb

td

FIG. 5

Motion
shift
setting

A1'

A1

Collocated reference picture

Current picture

⟶ MV_L0 from
collocated block

⟹ MV_L0 for current block
(after scaling)

┄┄➤ MV_L1 from
collocated block

┈┈➤ MV_L1 for current block
(after scaling)

FIG. 6

Reference picture L0

Reference picture L1

FIG. 7

FIG. 8

FIG. 9

FIG. 10

Reference picture L0     Current picture     Reference picture L1

FIG. 11

Template

Current block

Reference picture L0    Current picture

FIG. 12

Reference sample

FIG. 13

Reference line 3
Reference line 2
Reference line 1
Reference line 0

Current
block

FIG. 14

FIG. 15

FIG. 16

FIG. 17

FIG. 18

the HEVC=CC exte
as follows. Section
general IBC techn
designs of IBC in th

FIG. 19

FIG. 20

FIG. 21

FIG. 22

Chroma sample (*Rec_C*)

Down-sampled luma sample (*Rec_L'*)

Current block

Correlation

FIG. 23

Down-sampled luma
sample (*Rec_L'*)

$Pred_C[x,y]=\alpha_0 \cdot Rec'_L[x,y]+\beta_0$

$Pred_C[x,y]=\alpha_1 \cdot Rec'_L[x,y]+\beta_1$

Chroma
prediction
value (*Pred_c*)

FIG. 24

FIG. 25

FIG. 26

FIG. 27

Original picture

Frequency-domain picture

DCT
transform

FIG. 28

FIG. 29

| Transform | → | Quantization | → | Entropy encoding |

Bitstream

| Inverse transform | ← | Inverse quantization | ← | Entropy decoding |

FIG. 30

DCT2 (primary transform) → LFNST (secondary transform) → Quantization → Entropy encoding

Bitstream

Inverse DCT2 (primary transform) ← Inverse LFNST (secondary transform) ← Inverse quantization ← Entropy decoding

FIG. 31

4x4 forward LFNST, 16 input coefficients
8x8 forward LFNST, 64 input coefficients

Forward LFNST

Forwar primary transform → Quantization

Bitstream

Inverse primary transform ← Inverse quantization

Inverse LFNST

4x4 inverse LFNST, 8 input coefficients
8x8 inverse LFNST, 16 input coefficients

FIG. 32

(a) Transform kernel set 0 (b) Transform kernel set 1 (c) Transform kernel set 2 (d) Transform kernel set 3

FIG. 33

FIG. 34

Luma partitioning block Chroma partitioning block

FIG. 35

FIG. 36

FIG. 37

Input
bitstream →[ Parsing unit ~201 ]

~202                          ~200

Prediction unit ~202
Motion
compensation unit
203

Intra prediction
unit 204

~205        ~206        +        ~208        ~209

Inverse
quantization
unit

Inverse
transform
unit

+  ⊕
207

Filtering
unit

Decoded
picture
buffer unit → Output
video

FIG. 38

| A mode parameter of a chroma component of a current block is determined | ⌐ S3901 |

↓

| In a case where the mode parameter satisfies a first condition, a first transform kernel of the chroma component of the current block is determined | ⌐ S3902 |

↓

| Transform coefficients of the chroma component of the current block is determined, and inverse transform is performed on the transform coefficients of the chroma component of the current block according to the first transform kernel to determine a residual block of the chroma component of the current block | S3903 |

FIG. 39

| A mode parameter of a chroma component of a current block is determined | S3901 |

↓

| In a case where the mode parameter satisfies a first condition, a first transform kernel of the chroma component of the current block is determined | S3902 |

↓

| Transform coefficients of the chroma component of the current block is determined, and inverse transform is performed on the transform coefficients of the chroma component of the current block according to the first transform kernel to determine a residual block of the chroma component of the current block | S3903 |

↓

| The chroma component of the current block is predicted to determine a prediction block of the chroma component of the current block | S4001 |

↓

| A reconstructed block of the chroma component of the current block is determined according to the prediction block of the chroma component of the current block and the residual block of the chroma component of the current block | S4002 |

FIG. 40

| The bitstream is decoded to determine quantization coefficients of the current block | S4101 |

↓

| Inverse quantization is performed on the quantization coefficients of the current block to determine the transform coefficients of the current block | S4102 |

↓

| In a case where the last non-zero coefficient position in the transform coefficients of the current block satisfies a preset condition, the bitstream is decoded to determine the value of the first syntax flag information of the current block | S4103 |

FIG. 41

A mode parameter of a chroma component of a current block is determined

~ S4201

In a case where the mode parameter satisfies a first condition, a first transform kernel of the chroma component of the current block is determined

~ S4202

A residual block of the chroma component of the current block is determined, and a transform is performed on the residual block of the chroma component of the current block according to the first transform kernel to determine transform coefficients of the chroma component of the current block

~ S4203

The transform coefficients of the chroma component of the current block is encoded, and obtained encoded bits are signalled into a bitstream

~ S4204

FIG. 42

Transform coefficients of the current block is determined

~ S4301

Quantization is performed on transform coefficients of the current block to determine quantization coefficients of the current block

~ S4302

The quantization coefficients of the current block are encoded and obtained encoded bits are signalled into the bitstream

~ S4303

FIG. 43

```
┌─────────────────────────────────────────────────────────┐    ⟋ S4401
│   Transform coefficients of the current block are determined │
└─────────────────────────────────────────────────────────┘
                              │
                              ▼
┌─────────────────────────────────────────────────────────┐    ⟋ S4402
│   In a case where the last non-zero coefficient position in the │
│   transform coefficients of the current block satisfies a preset │
│ condition, the value of the first syntax flag information is encoded │
│   and the obtained encoded bits are signalled into the bitstream │
└─────────────────────────────────────────────────────────┘
```

FIG. 44

⟋ 450

```
┌─────────────────────────────────────────────────────────┐
│                         Encoder                          │
│              ⟋ 4501                  ⟋ 4502              │
│      ┌───────────────────┐   ┌─────────────────┐         │
│      │ First determining unit │   │  Transform unit  │    │
│      └───────────────────┘   └─────────────────┘         │
│  ────────────┬──────────────────────┬──────────────      │
│         ⟋ 4503                  ⟋ 4504                   │
│      ┌───────────────┐      ┌──────────────┐             │
│      │ Encoding unit  │      │  Quantization │            │
│      └───────────────┘      │     unit      │            │
│                             └──────────────┘             │
└─────────────────────────────────────────────────────────┘
```

FIG. 45

⟋ 450

```
┌─────────────────────────────────────────────────────────┐
│                         Encoder                          │
│                   ⟋ 4601                                 │
│       ┌──────────────────────────────┐                   │
│       │ First communication interface │        ⟋ 4604    │
│       └──────────────────────────────┘                   │
│  ──────────┬──────────────────────┬────────────────      │
│       ⟋ 4603                 ⟋ 4602                      │
│   ┌──────────────┐        ┌─────────────────┐            │
│   │ First memory  │        │  First processor │          │
│   └──────────────┘        └─────────────────┘            │
└─────────────────────────────────────────────────────────┘
```

FIG. 46

470

Decoder

4701
Second determining unit

4702
Inverse transform unit

4703
Decoding unit

4704
Inverse quantization unit

FIG. 47

470

Decoder

4801
Second communication interface

4804

4803
Second processor

4802
Second memory

FIG. 48

490

4901
Encoder

4902
Decoder

FIG. 49

## INTERNATIONAL SEARCH REPORT

| International application No. |
| --- |
| **PCT/CN2023/122981** |

### A. CLASSIFICATION OF SUBJECT MATTER

H04N19/50(2014.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNKI, CNTXT, VEN, WOTXT, USTXT, EPTXT: 色度, 亮度, 分量, 模式参数, 变换核, 反变换, 残差块, 单树, 双树, 预测模式, 跨分量, 标识, 索引, 量化, 非零系数, 阈值, chroma, luminance, component, mode, parameter, transform, inverse, residual, block, single, tree, two, prediction, index, quantization, nonzero, coefficient, threshold

### C. DOCUMENTS CONSIDERED TO BE RELEVANT

| Category* | Citation of document, with indication, where appropriate, of the relevant passages | Relevant to claim No. |
| --- | --- | --- |
| X | CN 109922348 A (HUAWEI TECHNOLOGIES CO., LTD.) 21 June 2019 (2019-06-21) description, paragraphs [0002]-[0427] | 1, 8, 10, 11, 20, 21, 30, 32, 41-47 |
| Y | CN 109922348 A (HUAWEI TECHNOLOGIES CO., LTD.) 21 June 2019 (2019-06-21) description, paragraphs [0002]-[0427] | 2-7, 9, 12-19, 22-29, 31, 33, 34-40 |
| Y | CN 115004706 A (BEIJING DAJIA INTERNET INFORMATION TECHNOLOGY CO., LTD.) 02 September 2022 (2022-09-02) description, paragraphs [0002]-[0105] | 2-7, 9, 12-19, 22-29, 31, 33, 34-40 |
| A | CN 116711304 A (GUANGDONG OPPO MOBILE TELECOMMUNICATIONS CORP., LTD.) 05 September 2023 (2023-09-05) entire document | 1-47 |
| A | CN 114258677 A (LG ELECTRONICS INC.) 29 March 2022 (2022-03-29) entire document | 1-47 |
| A | CN 114902678 A (LG ELECTRONICS INC.) 12 August 2022 (2022-08-12) entire document | 1-47 |

☑ Further documents are listed in the continuation of Box C.          ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **07 April 2024** | **14 May 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/122981** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2017324955 A1 (ELECTRONICS AND TELECOMMUNICATIONS RESEARCH INSTITUTE) 09 November 2017 (2017-11-09) entire document | 1-47 |

Form PCT/ISA/210 (second sheet) (July 2022)

## INTERNATIONAL SEARCH REPORT
### Information on patent family members

| International application No. |
| --- |
| **PCT/CN2023/122981** |

| Patent document cited in search report | | | Publication date (day/month/year) | Patent family member(s) | | | Publication date (day/month/year) |
| --- | --- | --- | --- | --- | --- | --- | --- |
| CN | 109922348 | A | 21 June 2019 | WO | 2019114713 | A1 | 20 June 2019 |
| CN | 115004706 | A | 02 September 2022 | WO | 2021155005 | A1 | 05 August 2021 |
| CN | 116711304 | A | 05 September 2023 | None | | | |
| CN | 114258677 | A | 29 March 2022 | WO | 2021034115 | A1 | 25 February 2021 |
| | | | | JP | 2022543581 | A | 13 October 2022 |
| | | | | JP | 7284342 | B2 | 30 May 2023 |
| | | | | KR | 20220019267 | A | 16 February 2022 |
| | | | | MX | 2022002086 | A | 17 March 2022 |
| | | | | EP | 4020987 | A1 | 29 June 2022 |
| | | | | EP | 4020987 | A4 | 23 August 2023 |
| | | | | US | 2022408088 | A1 | 22 December 2022 |
| | | | | JP | 2023096120 | A | 06 July 2023 |
| CN | 114902678 | A | 12 August 2022 | US | 2022264103 | A1 | 18 August 2022 |
| | | | | WO | 2021086050 | A1 | 06 May 2021 |
| US | 2017324955 | A1 | 09 November 2017 | KR | 20200079467 | A | 03 July 2020 |
| | | | | KR | 102165340 | B1 | 13 October 2020 |
| | | | | US | 2017048525 | A1 | 16 February 2017 |
| | | | | US | 9749632 | B2 | 29 August 2017 |
| | | | | US | 2021274181 | A1 | 02 September 2021 |
| | | | | US | 11438593 | B2 | 06 September 2022 |
| | | | | KR | 20120100837 | A | 12 September 2012 |
| | | | | KR | 101566366 | B1 | 16 November 2015 |
| | | | | KR | 20170017983 | A | 15 February 2017 |
| | | | | KR | 101740389 | B1 | 26 May 2017 |
| | | | | US | 2016241853 | A1 | 18 August 2016 |
| | | | | US | 9516323 | B2 | 06 December 2016 |
| | | | | US | 2013329785 | A1 | 12 December 2013 |
| | | | | US | 9363509 | B2 | 07 June 2016 |
| | | | | US | 10045026 | B2 | 07 August 2018 |
| | | | | KR | 20200033820 | A | 30 March 2020 |
| | | | | KR | 102129352 | B1 | 02 July 2020 |
| | | | | US | 2021274180 | A1 | 02 September 2021 |
| | | | | US | 11445196 | B2 | 13 September 2022 |
| | | | | KR | 20150126586 | A | 12 November 2015 |
| | | | | KR | 101642123 | B1 | 29 July 2016 |
| | | | | KR | 20180099614 | A | 05 September 2018 |
| | | | | KR | 102015374 | B1 | 28 August 2019 |
| | | | | US | 2018309992 | A1 | 25 October 2018 |
| | | | | US | 10609371 | B2 | 31 March 2020 |
| | | | | US | 2020186800 | A1 | 11 June 2020 |
| | | | | US | 11051019 | B2 | 29 June 2021 |
| | | | | US | 2021274179 | A1 | 02 September 2021 |
| | | | | US | 11356665 | B2 | 07 June 2022 |
| | | | | KR | 20190101348 | A | 30 August 2019 |
| | | | | KR | 102093205 | B1 | 25 March 2020 |
| | | | | KR | 20210106957 | A | 31 August 2021 |
| | | | | KR | 102426721 | B1 | 28 July 2022 |
| | | | | KR | 20160129814 | A | 09 November 2016 |
| | | | | KR | 101706166 | B1 | 14 February 2017 |

Form PCT/ISA/210 (patent family annex) (July 2022)

| Patent document cited in search report | Publication date (day/month/year) | Patent family member(s) | | | Publication date (day/month/year) |
|---|---|---|---|---|---|
| | | KR | 20230065949 | A | 12 May 2023 |
| | | KR | 102640542 | B1 | 27 February 2024 |
| | | KR | 20160088279 | A | 25 July 2016 |
| | | KR | 101672494 | B1 | 03 November 2016 |
| | | KR | 20220110151 | A | 05 August 2022 |
| | | KR | 102528354 | B1 | 03 May 2023 |
| | | KR | 20200118785 | A | 16 October 2020 |
| | | KR | 102294733 | B1 | 27 August 2021 |
| | | KR | 20170059943 | A | 31 May 2017 |
| | | KR | 101894971 | B1 | 05 September 2018 |

Form PCT/ISA/210 (patent family annex) (July 2022)